(19) Europäisches Patentamt
European Patent Office
Office européen des brevets

(11) **EP 2 624 351 B1**

(12) **EUROPEAN PATENT SPECIFICATION**

(45) Date of publication and mention
of the grant of the patent:
**01.11.2017 Bulletin 2017/44**

(21) Application number: **11829251.5**

(22) Date of filing: **29.09.2011**

(51) Int Cl.:
$H01M\ 8/04007^{(2016.01)}$   $H01M\ 8/04082^{(2016.01)}$
$H01M\ 8/0432^{(2016.01)}$   $H01M\ 8/04537^{(2016.01)}$
$H01M\ 8/04701^{(2016.01)}$   $H01M\ 8/04746^{(2016.01)}$
$H01M\ 8/04791^{(2016.01)}$   $H01M\ 8/04014^{(2016.01)}$
$H01M\ 8/124^{(2016.01)}$   $H01M\ 8/04858^{(2016.01)}$
$H01M\ 8/0612^{(2016.01)}$   $H01M\ 8/2475^{(2016.01)}$
$H01M\ 8/04223^{(2016.01)}$

(86) International application number:
**PCT/JP2011/072331**

(87) International publication number:
**WO 2012/043698 (05.04.2012 Gazette 2012/14)**

(54) **SOLID OXIDE FUEL CELL**

FESTOXID-BRENNSTOFFZELLE

PILE À COMBUSTIBLE À OXYDE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 JP 2011079465
29.09.2010 JP 2010218367**

(43) Date of publication of application:
**07.08.2013 Bulletin 2013/32**

(73) Proprietor: **TOTO LTD.
Kitakyushu-shi
Fukuoka 802-8601 (JP)**

(72) Inventors:
• **OTSUKA, Toshiharu**
**Kitakyushu-shi**
**Fukuoka 802-8601 (JP)**
• **TSUCHIYA, Katsuhisa**
**Kitakyushu-shi**
**Fukuoka 802-8601 (JP)**

• **SHIGEZUMI, Tsukasa**
**Kitakyushu-shi**
**Fukuoka 802-8601 (JP)**
• **OOE, Toshiharu**
**Kitakyushu-shi**
**Fukuoka 802-8601 (JP)**
• **NAKANO, Kiyotaka**
**Kitakyushu-shi**
**Fukuoka 802-8601 (JP)**
• **MATSUO, Takuya**
**Kitakyushu-shi**
**Fukuoka 802-8601 (JP)**

(74) Representative: **Witte, Weller & Partner
Patentanwälte mbB
Postfach 10 54 62
70047 Stuttgart (DE)**

(56) References cited:
EP-A1- 2 624 350    JP-A- 62 186 472
JP-A- H10 326 625    JP-A- 2004 071 312
JP-A- 2006 302 881    JP-A- 2006 309 974
JP-A- 2010 092 836    US-A1- 2008 193 804

**Description**

Technical Field

0001 The present invention pertains to a solid oxide fuel cell, and more particularly to a solid oxide fuel cell for generating variable electrical power in response to power demand.

Background Art

0002 Solid oxide fuel cells ("SOFCs" below) are fuel cells which operate at relatively high temperatures in which, using an oxide ion-conducting solid electrolyte as electrolyte, with electrodes attached to both sides thereof, fuel gas is supplied to one side thereof and an oxidizer (air, oxygen, or the like) is supplied to the other side thereof.

0003 In such SOFCs, steam or $CO_2$ is produced by the reaction between oxygen ions passed through an oxide ion-conducting solid electrolyte and fuel, thereby generating electrical and thermal energy. The electrical energy is removed from the SOFC, where it is used for various electrical purposes. On the other hand, thermal energy is used to raise the temperature of the fuel, the reformer, the water, the oxidant, and the like.

0004 JP 2010-92836 (Patent Document 1) sets forth a fuel cell device. This fuel cell device is a solid oxide fuel cell of the type which changes generated power in response to power demand; operation is disclosed whereby the fuel utilization rate is reduced more in the low load region than in the high power generation load region. I.e., in Patent Document 1, the proportion of supplied fuel used for power generation is reduced when generated power is in a low state, but on the other hand fuel used to heat the fuel cell module and not used to generate electricity is not greatly reduced, and a large fraction of the fuel is used to heat the fuel cell module, so the fuel cell module is made thermally self-sustaining, and a temperature at which generation can occur is maintained.

0005 Specifically, in the low generated power region, electrical generation heat occurring in the fuel cell unit associated with electrical generation declines, so there is a tendency for the temperature inside the fuel cell module to decline, therefore if a certain fuel utilization rate is maintained even in the low power generation region, a reduction in the temperature inside the fuel cell module is induced, and it becomes difficult to maintain a temperature at which power can be generated, therefore fuel used to heat the fuel cell module is increased to enable thermal self-sustainment, even at the sacrifice of the fuel utilization rate.

0006 In the fuel cell device set forth in JP 2010-92836, in order to resolve these problems the fuel utilization rate is reduced in the low load region where electrical generation is small, preventing an excessive temperature reduction in the fuel cell module while stably maintaining a certain high temperature state.

0007 JP 2010-205670 (Patent Document 2), meanwhile, sets forth a method for operating a fuel cell system and fuel cell. In this fuel cell, an accumulated value is acquired for the fuel cell electrical load, and the fuel utilization rate is controlled based on this acquired accumulated value. Control of the fuel utilization rate is done by estimating the fuel cell temperature based on an accumulated value for the fuel cell electrical load, controlling the fuel utilization rate based on the estimated result. Thermally self-sustaining operation of the fuel cell is therefore possible without the use of a temperature sensor. Also, when the accumulated value of the electrical load is equal to or greater than a predetermined value, the correction mode corrects the fuel utilization rate to a value equal to or greater than a reference value at which the fuel cell can be thermally self-sustainedly operated. In such cases, because the fuel cell temperature is rising, there is residual heat in the fuel cell, and thermally self-sustaining operation is maintained even if the fuel utilization rate is corrected to a value equal to or greater than the reference value at which thermally self-sustaining operation is possible. System efficiency of the fuel cell system is by this means improved.

JP2006-302881A discloses a solid fuel battery assembly which has a housing defining power generation/burning chambers, a cell stack disposed in the housing, a catalyst containing case, a tube for supplying a gas to be reformed that is disposed in the catalyst containing case, and a fuel gas supply tube. A reforming catalyst is contained in the catalyst containing case. A temperature detection device is provided in the catalyst containing case and the temperature detection device is connected to a measuring device at the outside of the housing. This assembly has thermal storage walls to effectively maintain partial load operation.

Prior Art References

Patent References

0008

Patent Document 1 JP 2010-92836
Patent Document 2 JP 2010-205670

Patent Document 3 JP 2006-302881

Summary of the Invention

Problems the Invention Seeks to Resolve

0009 As noted above, however, reducing the fuel utilization rate in the manner of the fuel cell set forth in JP 2010-92836, although enabling thermal independence, does not contribute to electrical generation, therefore when an operation reduces the fuel utilization rate, the problem arises that an overall reduction in the energy efficiency of the solid oxide fuel cell is induced. Since overall energy efficiency is reduced more as the length of operation in a reduced fuel utilization rate state extends, this can lead to a loss of advantage to the solid oxide fuel cell (SOFC) vs. polymer membrane fuel cells (PEFC), compared to which they are generally considered to have higher energy efficiency.

0010 In particular, assuming the solid oxide fuel cell is for residential use, there will definitely be certain times of day when the fuel cell is in a low power generation state, and since this enormously reduces the overall energy efficiency of the solid oxide fuel cell, a solid oxide fuel cell technology capable of high-fuel utilization rate, high-efficiency operation even in such electrical generation states has been sought.

0011 At the same time, in the fuel cell set forth in JP 2010-205670, the fuel utilization rate is controlled based on the accumulated value of fuel cell electrical load, thereby permitting the temperature sensor to be omitted. When the accumulated value of the electrical load is equal to or greater than a predetermined value, the fuel utilization rate is increased. Therefore in a state in which the accumulated value is equal to or greater than a predetermined value, the fuel supply amount is reduced, thus enabling system efficiency to be raised.

In the fuel cell set forth in JP 2010-205670, however, the fuel utilization rate is controlled based on the accumulated value of the electrical load without use of a temperature sensor, leading to the problem that system efficiency cannot be sufficiently improved. In particular, efficiency cannot be sufficiently improved in fuel cell systems in which electrical load (generated power, etc.) is increased at a delay after the fuel supply amount is increased. I.e., in systems in which the electrical load (generated power, etc.) is increased at a delay after the fuel supply amount is increased, a large mismatch arises between the accumulated value of the fuel supply amount and the accumulated value of the electrical load, making it difficult to accurately know the residual heat in the fuel cell system, and impeding efficiency improvements. When power demand suddenly decreases, generating current should be rapidly decreased to prevent a reverse power flow of current, and since this inevitably causes a delay in the reduction of the fuel supply amount due to the reduction in generating current arising from differences in physical response characteristics, a large mismatch arises between the fuel supply amount and the electrical load integral.

Specifically, in the invention set forth in JP 2010-205670, the generated heat (joule heat) occurring during electrical generation by the fuel cells is estimated based on the amount of electrical generation, and by this means residual heat is estimated. By contrast, the heat generated by the delay in electrical generation by the fuel cell device is the combustion heat created by the combustion of residual fuel not used for electrical generation, therefore the amount of heat accumulated during the startup process cannot be estimated using the technology disclosed in JP 2010-205670.

When the fuel utilization rate is raised based on inaccurately known residual heat in the fuel cell system, there is a risk that the fuel cell stack temperature could suddenly drop, damaging the cells. Furthermore, if the delay is shortened when electrical load is increased in order to reduce the mismatch between the accumulated value of the fuel supply amount and the accumulated value of electrical load, there is a risk that current will be extracted from the fuel cells before sufficient fuel has reached each of the fuel cells, leading to fuel cut-off. Conversely, when the amount of residual heat utilized is small relative to the rise in fuel cell stack temperature, the problem arises that the temperature of the fuel cell stack rises excessively.

0012 The present invention has the object of providing an extremely practical solid oxide fuel cell capable of improving overall energy efficiency while maintaining thermal autonomy and operating stably.

It is also a purpose of this invention to provide a solid oxide fuel cell capable of fully utilizing accumulated heat amounts while reliably maintaining thermal autonomy, and of avoiding excessive temperature rises.

Means for Resolving the Problem

0013 In order to resolve the above-described problem, the present invention is a solid oxide fuel cell for producing variable power in response to power demand, comprising: a fuel cell module for generating electricity using supplied fuel; fuel supply device configured to supply fuel to the fuel cell module; generating oxidant gas supply device configured to supply oxidant gas for electrical generation to the fuel cell module; a combustion section for burning remaining residual fuel supplied by the fuel supply device and not utilized for electrical generation, and heating the interior of the fuel cell module; a heat storing material placed within the fuel cell module for accumulating heat generated within the fuel cell module; power demand detection device configured to detect power demand; temperature detection device configured to detect the temperature of the fuel cell module; and a control device configured to control, based on the power demand detected by the power demand detection device, such that the fuel utilization rate is high when generated power is large, and the fuel utilization rate is low when generated power is small, and also for increasing the power actually output from the fuel cell module at a predetermined delay after increasing the fuel supply amount in response to an increment in power demand; wherein the control device includes stored heat estimating circuit for estimating stored heat accumulated in the heat storing material based on the detected temperature detected by the temperature detection device, and the control device reduces the fuel supply amount (fuel supply rate) so that the fuel utilization rate increases relative to the same generated power when it is estimated that a usable amount of heat has accumulated in this heat storing material, in comparison with cases in which it is estimated that a usable amount of heat has not accumulated. The stored heat estimating circuit estimates the amount of stored heat stored in the heat storing material based on detected temperature history.

0014 In the present invention thus constituted, the fuel supply device and generating oxidant gas device respectively supply fuel and generating oxidant gas to the fuel cell module. The fuel cell module generates electricity using the supplied fuel and generating oxidant gas, while residual fuel not used for generation is combusted in the combustion section, and the resulting heat is accumulated in the heat storage material. Based on a power demand detected using a power demand detection circuit, the control device controls the fuel supply device so that the fuel utilization rate is high when the generated power is large, and the fuel utilization rate is low when the generated power is small. In addition, the control device changes the power actually output from the fuel cell module at a delay after causing the fuel supply amount to change in response to changes in power demand. Based on the temperature detected by the temperature detection device, the stored heat estimating circuit estimates the amount of stored heat stored in the heat storing material. When it is estimated by the stored heat estimating circuit that a usable amount of heat is accumulated in the heat storing material, the control device reduces the fuel supply amount so that the fuel utilization rate relative to the same generated power is higher than for the case when a usable amount of heat has not accumulated. The stored heat estimating circuit estimates the stored heat amount based on the temperature detection history, therefore the stored heat amount can be more accurately estimated than by estimating the stored heat amount from recent detected temperatures alone. The amount of heat stored in the heat storing material can therefore be fully used.

0015 Generally speaking, when the generated power in a solid oxide fuel cell is small, generating heat drops, resulting in a tendency for the fuel cell module temperature to drop. The fuel utilization rate is therefore reduced at times of low generated power, and fuel not used for electrical generation is combusted to heat the fuel cell module and prevent excessive temperature drops. In particular, in solid oxide fuel cells of type in which the reformer is disposed within the fuel cell module, endothermic reactions occur inside the reformer, further increasing the tendency toward temperature drops. In the present invention constituted as described above, when it is estimated that a usable amount of heat has accumulated in the heat storing material, the fuel supply amount is reduced so that the fuel utilization rate increases. The thermal autonomy of the solid oxide fuel cell is thus maintained, and overall energy efficiency of the solid oxide fuel cell is improved, while excessive temperature drops are avoided.

0016 In the present invention constituted as described above, the stored heat amount is estimated based on the detected temperature detected by the temperature detection device, therefore the control device can accurately estimate the accumulated heat amount even if the output power is changed at a delay after the fuel supply amount is changed. This enables the amount of heat stored in the heat storing material to be fully utilized while securely avoiding the risk of sudden temperature drops in the fuel cell module. In addition, in fuel cells of the type which change output power at a delay after changing the fuel supply amount, frequent increases and decreases of output power cause a great deal of surplus fuel use and risk excessive temperature rises inside the fuel cell module, but the present invention constituted as described above enables an accurate understanding of the stored heat caused by the surplus fuel arising in this manner. In general, a cooling medium is inserted into the fuel cell module to suppress the excessive temperature rise caused by surplus fuel, but the present invention enables an accurate grasp of the heat amount stemming from surplus fuel, the effective use of which enables excessive temperature rises to be suppressed. The amount of cooling medium inserted for the purpose of lowering the temperature can therefore by reduced, and the overall energy efficiency of the solid oxide fuel cell improved.

0018 In the present invention, the control device preferably greatly increases the fuel utilization rate as the stored heat amount estimated by the stored heat estimating circuit increases.

In the present invention thus constituted, stored heat is used in large quantity when the estimated stored heat amount is large, and not much stored heat is used when the stored heat amount is small, therefore stored heat can be more effectively utilized, and the risk of temperature drops can be reliably avoided.

0019 In the present invention, the control device preferably determines the fuel utilization rate based on predetermined conditions in addition to the stored heat amount estimated by the stored heat estimating circuit, and power demand.

In the present invention thus constituted, conditions other than stored heat amount and power demand are added for the determination of the fuel utilization rate, therefore stored heat can be appropriately utilized in response to the state of the fuel cell module.

0020 In the present invention, the control device preferably changes the fuel utilization rate relative to changes in the estimated stored heat amount much more in the region in which the estimated stored heat amount estimated by the stored heat estimating circuit is large than in the region where the estimated stored heat amount is small.

In the present invention thus constituted, when the estimated stored heat amount is large, a large amount of stored heat is utilized and excessive temperature rises can be avoided, whereas when the estimated stored heat amount is small, stored heat can be used a little at a time, and overcooling can be avoided.

0021 In the present invention, the stored heat estimating circuit preferably estimates the stored heat amount based on recent changes in detected temperature in addition to the detected temperature history, and the control device changes the fuel utilization rate much more when the change in recent detected temperature is large than when it is small.

In the present invention thus constituted, stored heat is estimated by recent detected temperature changes in addition to the history of detected temperatures, therefore stored heat can be accurately estimated based on history, and fuel cell module temperature changes in which the heat capacity is large and for which it not easy to change the trend once the change has started can be responded to with agility, preventing excessive temperature rises and temperature drops.

0022 In the present invention, the control device preferably changes the fuel utilization rate over a wider range in the region where generated power is small than in the region where generated power is large.

In the present invention thus constituted, the fuel utilization rate is changed over a larger range in the region where generated power is small than in the region where generated power is large. The risk of sudden temperature drops can therefore be reduced, and by greatly utilizing stored heat in the small generated power region where there is ample margin for improving the fuel utilization rate, energy efficiency can be effectively increased. Under normal control, as well, in the large generated power region where the fuel utilization rate is high, there is little margin for improving the fuel utilization rate, and thus by not significantly utilizing stored heat in this interval, energy efficiency in the small generated power region can be improved by utilizing stored heat accumulated in the large generated power region.

0023 In the present invention, the control device preferably reduces changes increasing the fuel utilization rate more after the fuel cell module has degraded than before the fuel cell module had degraded.

In the present invention thus constituted, changes raising the fuel utilization rate are reduced after the fuel cell module degrades, therefore advancement of degradation can be prevented by creating a cooling tendency in a fuel cell module which has risen in temperature during electrical generation due to degradation.

0024 In the present invention, the stored heat estimating circuit preferably estimates the stored heat amount based on an accumulated value for the add/subtract value determined based on detected temperature, and based on the differential value between new detected temperatures and past detected temperatures.

In the present invention thus constituted, stored heat amounts are estimated based on the accumulated value of add/subtract values and on differential values, therefore stored heat amounts can be appropriately estimated by simple calculation, based upon which the fuel utilization rate can be appropriately set.

0025 In the present invention, the stored heat estimating circuit preferably estimates stored heat by accumulating the add/subtract values determined based on detected temperature and other predetermined conditions.

In the present invention thus constituted, add/subtract values for estimating stored heat are determined based on predetermined conditions in addition to detected temperature, therefore factors other than temperature affecting stored heat can be appropriately reflected in the estimate values.

0026 In the present invention, the stored heat estimating circuit preferably uses a positive or negative value for the add/subtract value based on detected temperature and generated power.

In the present invention thus constituted, increases or decreases in the estimated amount of stored heat are estimated not only by the detected temperature; generated power is also referred, permitting a more accurate estimate of stored heat amounts.

0027 In the present invention, the stored heat estimating circuit preferably changes the estimated stored heat value more suddenly as generated power increases.

In the present invention thus constituted, the estimated stored heat value is more suddenly changed as the generated power increases, therefore a stored heat estimate more closely matched to actual conditions can be achieved.

0028 In the present invention, the stored heat estimating circuit preferably estimates the stored heat amount based on a basic estimated value calculated based on detected temperature history, and on a quick response estimated value calculated based on the rate of change in the detected temperature during an interval shorter than the history over which the basic estimated value is calculated.

0029 In the present invention thus constituted, the power output can be changed after a safe time for dispersing fuel is secured by changing the output power at a delay following changes to the fuel supply amount, thereby avoiding the risk that cells in the fuel cell module will be damaged due to fuel cut-off. Also, residual fuel increases due to the delay in outputting electrical power, and this residual fuel heats the inside of the fuel cell module. When the fuel cell module has high thermal insulation characteristics and it is necessary to perform excessive load-following control under which output power is frequently raised and lowered, it occurs that excessive temperature rises are caused inside the fuel cell module due to the accumulation of heat caused by residual fuel. In general, the amount of generating oxidant gas supplied as a cooling medium is increased in order to lower the temperature inside the fuel cell module, but since the temperature drops caused by the insertion of cooling medium is achieved by discharging a useful heat amount in the fuel cell module together with the exhaust, overall energy efficiency drops. The solid oxide fuel cell of the present invention suppresses excessive temperature rises by reducing the introduced fuel supply amount in such a way that excessively accumulated residual heat is utilized while maintaining thermal autonomy, and furthermore simultaneously achieves a high fuel utilization rate operation. To achieve this, the stored heat estimating circuit estimates stored heat based on detected temperature, therefore estimation can be carried out by accurately considering the effects of stored heat arising from the residual fuel produced by delaying the output of power relative to the supply of fuel. Excessive temperature rises occurring when there is excessive load following can thus be reliably prevented while energy efficiency is raised.

0030 Furthermore, in the present invention thus constituted, the stored heat estimating circuit estimates the stored heat amount based on a basic estimated value calculated based on detected temperature history, and on a quick response estimated value calculating the rate of change in the detected temperature during an interval shorter than the history over which the basic estimated value is calculated. Therefore by estimating the stored heat amount which will serve as a base using the history of the extremely gradually changing detected temperature, and using the rapid response estimated value, the stored heat amount estimated value can promptly respond to changing trends in the detected temperature. So by using an estimate for the stored heat amount, which is inherently difficult to estimate, stored heat can be effectively utilized while avoiding the risk of excessive temperature rises and temperature drops, without the use of any special detection devices.

0031 In the present invention, multiple temperature detection devices are comprised and wherein the stored heat estimating circuit estimates the stored heat amount accumulated in the heat storing material based on the past history of multiple detected temperatures detected by the multiple temperature detection device; and based on the stored heat amount estimated by the stored heat estimating circuit and on the power demand detected by the power demand detection device, the control device determines a fuel utilization rate such that for the same generated power, the fuel utilization rate increases as the estimated stored heat amount increases, and controls the fuel supply device based on this fuel utilization rate.

0032 In the present invention thus constituted, the stored heat estimating circuit estimates the stored heat amount accumulated in the heat storing material based on multiple detected temperatures detected by multiple temperature detection devices, and the control device controls the fuel utilization rate so that for the same generated power, the fuel utilization rate increases as the estimated stored heat amount increases. By utilizing the stored heat accumulated in the heat storing material, the fuel supply amount can be reduced and the overall energy efficiency of the solid oxide fuel cell improved.

0033 Also, because the stored heat amount is estimated based on detected temperature, the estimated stored heat amount fully reflects the amount of residual fuel, and the estimated stored heat amount is highly reliable. In particular, the stored heat amount can be accurately known when generated power is increased, even in the type of fuel cell in which generated power is increased after a delay. This enables the amount of heat stored in the heat storing material to be fully utilized while avoiding the risk of temperature drops and the like in the fuel cell module.

0034 Furthermore, in the present invention thus constituted, the stored heat amount is estimated based on multiple detected temperatures detected by multiple temperature detection devices, therefore the risk of partial temperature drops or temperature rises within the fuel cell module can be avoided, and accumulated heat amounts can be fully utilized.

0035 In the present invention, the stored heat estimating circuit preferably estimates the stored heat amount by treating the high temperature among the multiple detected temperatures as a high weighting factor when increasing the estimated stored heat amount to increase the fuel utilization rate, and by treating the low temperature among the multiple detected temperatures as a high weighting factor when decreasing the estimated stored heat amount to decrease the fuel utilization rate.

0036 In the present invention thus constituted, stored heat amount estimation is performed using the high detected temperature as a high weighting factor when increasing the fuel utilization rate, and the low detected temperature is treated as a high weighting factor when decreasing the fuel utilization rate, therefore the stored heat amount can be estimated by using detected temperatures on the respective safe sides relative to excessive temperature rises and temperature drops.

0037 In the present invention, the multiple temperature detection devices are preferably disposed so that the reformer temperature and the fuel cell stack temperature are respectively reflected, and the control device suppresses the rise in the fuel utilization rate when the reformer temperature is at or below a predetermined usage-suppressing reformer temperature.

0038 In the present invention thus constituted, increases in the fuel utilization rate are suppressed when the reformer temperature is at or below a predetermined use-suppressing reformer temperature, therefore degradation of reformer performance can be prevented when the reformer is excessively cooled by endothermic reactions or the like within the reformer. Damage to the fuel cell stack associated with degraded reformer performance can also be avoided.

0039 In the present invention, the fuel cell stack is preferably constituted of multiple fuel cell units arrayed in approximately a rectangular form; one of the multiple temperature detection devices are disposed to reflect the temperature of the individual fuel cell unit positioned at a vertex of the rectangle; one of the multiple temperature detection devices are disposed to reflect the temperature of the individual fuel cell unit positioned at the midpoint between two vertices of the rectangle; and the control device suppresses increases in the fuel utilization rate when the temperature of an individual fuel cell unit positioned at a rectangle vertex is at or below a predetermined usage-suppressing cell unit temperature.

0040 In the present invention thus constituted, increases in the fuel utilization rate are suppressed when the temperature of an individual fuel cell unit positioned at a rectangle vertex is at or below the temperature of a predetermined usage-suppressing cell unit temperature, therefore increases in the fuel utilization rate are suppressed based on the temperature of an individual fuel cell unit at a low temperature within the fuel cell stack, and damage caused by excessive cooling of a portion of the cell units can be prevented.

Effect of the Invention

0041 Using the solid oxide fuel cell of the present invention, overall energy efficiency can be improved while maintaining thermal autonomy and achieving stable operation.

Also, by according to the solid oxide fuel cell of the present invention, accumulated heat amounts can be fully utilized while reliably maintaining thermal autonomy, and excessive temperature rises can be avoided.

Brief Description of Figures

0042

Fig. 1: An overview diagram showing a fuel cell device according to an embodiment of the present invention.
Fig. 2: A front elevation cross section showing a fuel cell module in a fuel cell device according to an embodiment of the present invention.
Fig. 3: A sectional diagram along line III-III in Fig. 2.
Fig. 4: A partial cross section showing a fuel cell unit in a fuel cell device according to an embodiment of the present invention.
Fig. 5: An oblique view showing a fuel cell stack in a fuel cell device according to an embodiment of the present invention.
Fig. 6: A block diagram showing a fuel cell device according to an embodiment of the present invention.
Fig. 7: A timing chart showing the operation when a fuel cell device is started, according to an embodiment of the present invention.
Fig. 8: A timing chart showing the operation when a fuel cell device is stopped, according to an embodiment of the present invention.
Fig. 9: A graph showing the relationship between output current and fuel supply amount in the solid oxide fuel cell of the first embodiment of the present invention.
Fig. 10: A graph showing the relationship between output current and amount of heat produced by supplied fuel in the solid oxide fuel cell of the first embodiment of the present invention.
Fig. 11: A control flow chart of the fuel supply amount in the solid oxide fuel cell of the first embodiment of the present invention.
Fig. 12: A stored heat amount estimate table used to estimate the amount of heat accumulated in a heat storing material in the solid oxide fuel cell of the first embodiment of the present invention.
Fig. 13: A graph of the stored heat amount estimate table in Fig. 12.
Fig. 14: A graph showing the value of a first modifying coefficient relative to output current in the solid oxide fuel cell of the first embodiment of the present invention.
Fig. 15: A graph showing the value of a second modifying coefficient relative to output current in the solid oxide fuel cell of the first embodiment of the present invention.
Fig. 16: A flowchart for changing correction amounts when the fuel cell module has degraded.
Fig. 17: A graph schematically showing changes in power demand over a day in a typical residence.
Fig. 18: A graph showing the value of a current modifying coefficient in a variant example of the first embodiment of the present invention.
Fig. 19: A graph schematically showing the relationship between changes in power demand, fuel supply amount, and current actually extracted from a fuel cell module.

Fig. 20: A graph showing an example of the relationship between generating air supply amount, water supply amount, fuel supply amount, and current actually extracted from a fuel cell module.

Fig. 21: A flowchart showing the order in which generating air supply amount, water supply amount, and fuel supply amount are determined based on detected temperature Td.

Fig. 22: A graph showing appropriate fuel cell stack temperature vs. generating current.

Fig. 23: A graph showing fuel utilization rate determined according to accumulated value.

Fig. 24: A graph showing the range of fuel utilization rates which can be determined relative to each generating current.

Fig. 25: A graph showing air utilization rates determined according to accumulated value.

Fig. 26: A graph showing the range of air utilization rates which can be determined relative to each generating current.

Fig. 27: A graph for determining water supply amounts vs. a determined air supply utilization rate.

Fig. 28: A graph showing appropriate fuel cell module generating voltage vs. generating current.

Fig. 29: A flowchart showing the procedure for limiting the range of power produced by the fuel cell module in a second embodiment of the present invention.

Fig. 30: A map showing current limits vs. generating current and detected temperature.

Fig. 31: A timing chart showing an example of the effect of the second embodiment of the present invention.

Fig. 32: A graph showing an example of the relationship between temperature inside the fuel cell module and maximum generatable power.

Fig. 33: A flow chart showing a procedure for calculating a first add/subtract value based on temperatures detected by multiple temperature sensors.

Fig. 34: A flow chart showing the procedure for calculating an add/subtract value according to a variant example of the second embodiment of the present invention.

Fig. 35: A flow chart showing the procedure for calculating an add/subtract value according to a variant example of the second embodiment of the present invention.

Embodiments of the Invention

0043 Next, referring to the attached drawings, we discuss a solid oxide fuel cell (SOFC) according to an embodiment of the present invention.

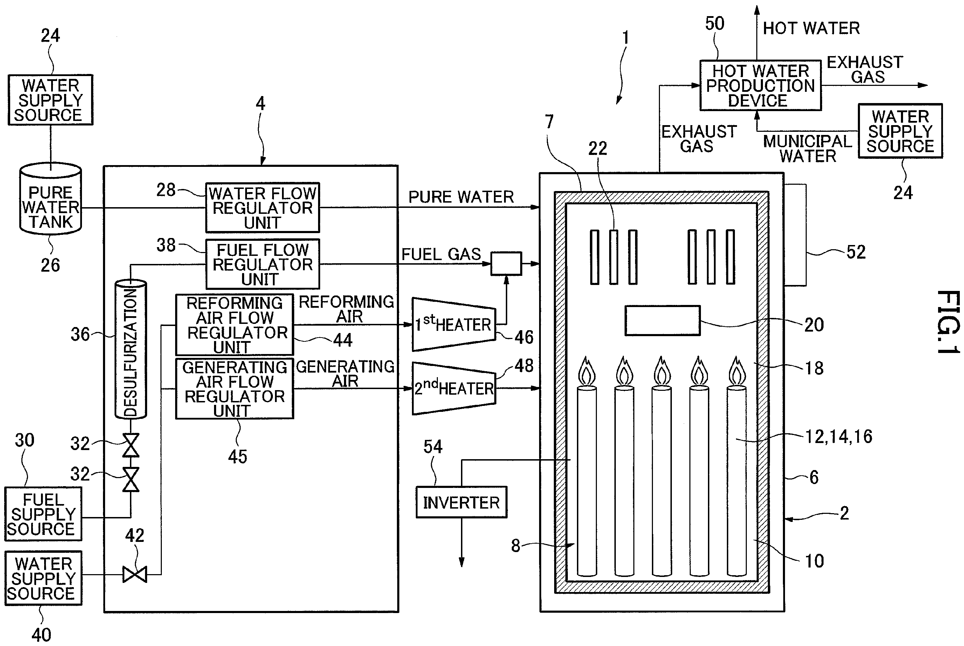

Fig. 1 is an overview diagram showing a solid oxide fuel cell (SOFC) according to an embodiment of the present invention. As shown in Fig. 1, the solid oxide fuel cell (SOFC) of this embodiment of the present invention is furnished with a fuel cell module 2 and an auxiliary unit 4.

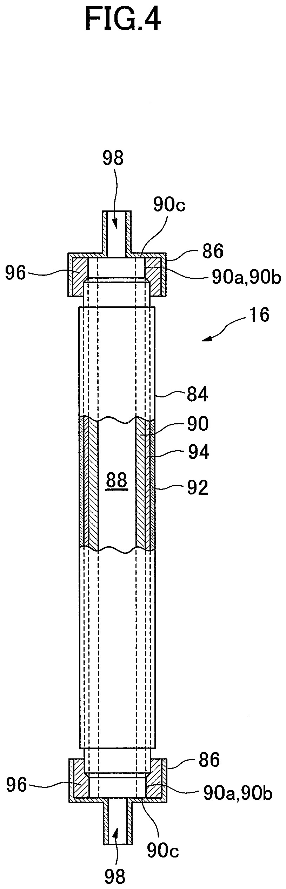

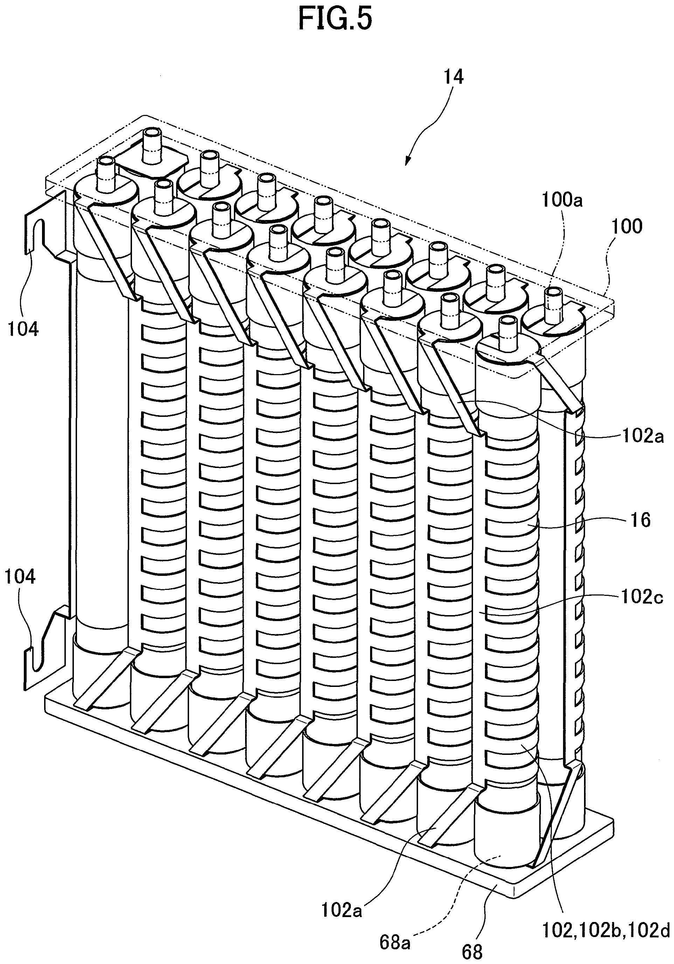

0044 The fuel cell module 2 is furnished with a housing 6; a sealed space 8 is formed within the housing 6, mediated by an insulating material 7. A fuel cell assembly 12 for carrying out the electrical generating reaction between fuel gas and oxidizer (air) is disposed in the generating chamber 10 at the lower portion of this sealed space 8. This fuel cell assembly 12 is furnished with ten fuel cell stacks 14 (see Fig. 5), and a fuel cell stack 14 comprises 16 fuel cell units 16 (see Fig. 4). Thus, the fuel cell assembly 12 has 160 fuel cell units 16, all of which are serially connected.

0045 A combustion chamber 18 is formed above the aforementioned generating chamber 10 in the fuel cell module 2 sealed space 8; residual fuel gas and residual oxidizer (air) not used in the electrical generation reaction are burned in this combustion chamber 18 and produce exhaust gas.

A reformer 20 for reforming fuel gas is disposed at the top of the combustion chamber 18; the reformer 20 is heated by the heat of residual gas combustion to a temperature at which the reforming reaction can take place. Furthermore, an air heat exchanger 22 is disposed on the top of this reformer 20 for receiving heat from the reformer 20 and heating air so as to restrain temperature drops in the reformer 20.

0046 Next, the auxiliary unit 4 is furnished with a pure water tank 26 for holding water from a municipal or other water supply source 24 and filtering it into pure water, and a water flow regulator unit 28 (a "water pump" or the like driven by a motor) for regulating the flow volume of water supplied from the reservoir tank. The auxiliary tank 4 is further furnished with a gas shutoff valve 32 for shutting off the fuel gas supply from a fuel supply source 30 such as municipal gas or the like, and a fuel flow regulator unit 38 (a "fuel pump" or the like driven by a motor) for regulating the flow volume of fuel gas. Furthermore, an auxiliary unit 4 is furnished with an electromagnetic valve 42 for shutting off air serving as an oxidizer and supplied from an air supply source 40, a reforming air flow regulator unit 44 and oxidant gas supply device 45 (an "air blower" or the like driven by a motor) for regulating air flow volume, a first heater 46 for heating reforming air supplied to the reformer 20, and a second heater 48 for heating generating air supplied to the generating chamber. This first heater 46 and second heater 48 are provided in order to efficiently raise the temperature at startup, and may be omitted.

0047 Next, a hot-water producing device 50 supplied with exhaust gas is connected to the fuel cell module 2. Municipal water from a water supply source 24 is supplied to this hot-water producing device 50; this water is turned into hot water by the heat of the exhaust gas, and is supplied to a hot water reservoir tank in an external water heater, not shown.

A control box 52 for controlling the amount of fuel gas supplied, etc. is connected to the fuel cell module 2.

Furthermore, an inverter 54 serving as an electrical power extraction unit (electrical power conversion unit) for supplying electrical power generated by the fuel cell module to the outside is connected to the fuel cell module 2.

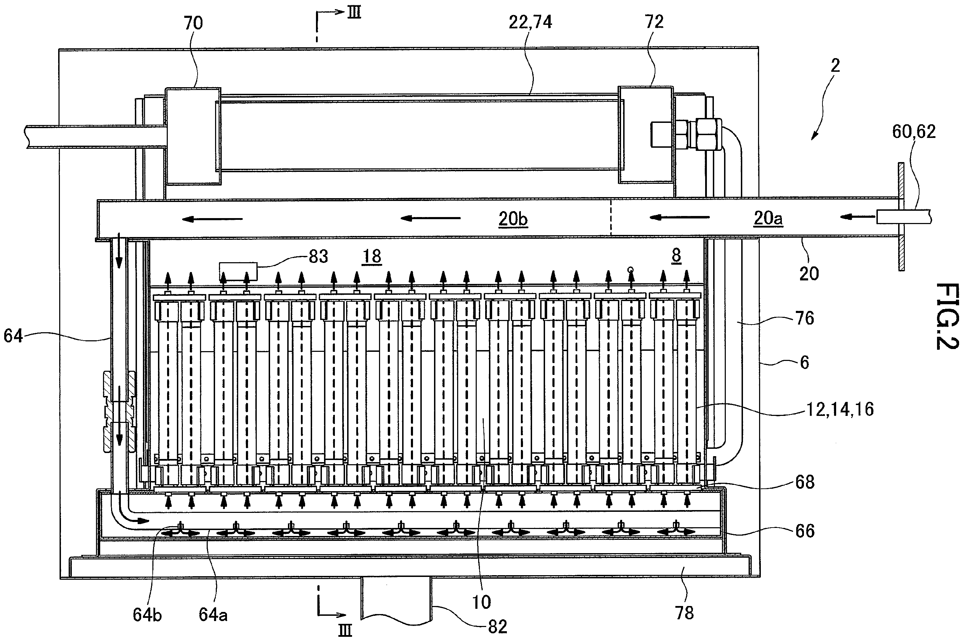

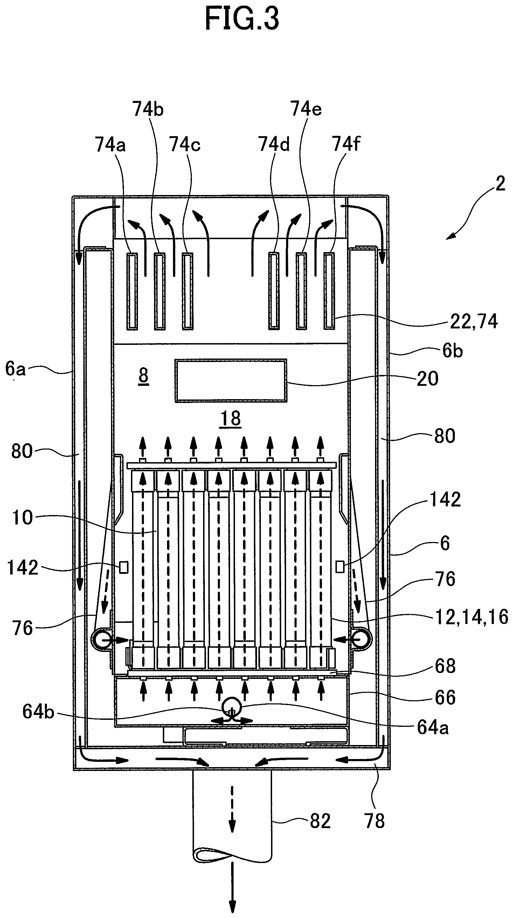

0048 Next, the internal structure of the solid oxide fuel cell (SOFC) fuel cell module of this embodiment of the present invention is explained using Figs. 2 and 3. Fig. 2 is a side elevation sectional diagram showing a fuel cell module in a solid oxide fuel cell (SOFC) according to an embodiment of the present invention; Fig. 3 is a sectional diagram along line III-III of Fig. 2.

As shown in Figs. 2 and 3, starting from the bottom in the sealed space 8 within the fuel cell module 2 housing 6, a fuel cell assembly 12, a reformer 20, and an air heat exchanger 22 are arranged in sequence, as described above.

0049 A pure water guide pipe 60 for introducing pure water on the upstream end of the reformer 20, and a reform gas guide pipe 62 for introducing the fuel gas and reforming air to be reformed, are attached to the reformer 20; a vaporizing section 20a and a reforming section 20b are formed in sequence starting from the upstream side within the reformer 20, and the steam generating section 20a reforming section 20b is filled with a reforming catalyst. Fuel gas and air blended with the steam (pure water) introduced into the reformer 20 is reformed by the reforming catalyst used to fill in the reformer 20. Appropriate reforming catalysts are used, such as those in which nickel is imparted to the surface of aluminum spheres, or ruthenium is imparted to aluminum spheres.

0050 A fuel gas supply line 64 is connected to the downstream end of the reformer 20; this fuel gas supply line 64 extends downward, then further extends horizontally within a manifold formed under the fuel cell assembly 12. Multiple fuel supply holes 64b are formed on the bottom surface of a horizontal portion 64a of the fuel gas supply line 64; reformed fuel gas is supplied into the manifold 66 from these fuel supply holes 64b.

0051 A lower support plate 68 provided with through holes for supporting the above-described fuel cell stack 14 is attached at the top of the manifold 66, and fuel gas in the manifold 66 is supplied into the fuel cell unit 16.

0052 Next, an air heat exchanger 22 is provided over the reformer 20. This air heat exchanger 22 is furnished with an air concentration chamber 70 on the upstream side and two air distribution chambers 72 on the downstream side; this air concentration chamber 70 and the distribution chambers 72 are connected using six air flow conduits 74. Here, as shown in Fig. 3, three air flow conduits 74 form a set (74a, 74b, 74c, 74d, 74e, 74f); air in the air concentration chamber 70 flows from each set of the air flow conduits 74 to the respective air distribution chambers 72.

0053 Air flowing in the six air flow conduits 74 of the air heat exchanger 22 is pre-heated by rising combustion exhaust gas from the combustion chamber 18.

Air guide pipes 76 are connected to each of the respective air distribution chambers 72; these air guide pipes 76 extend downward, communicating at the bottom end side with the lower space in the generating chamber 10, and introducing preheated air into the generating chamber 10.

0054 Next, an exhaust gas chamber 78 is formed below the manifold 66. As shown in Fig. 3, an exhaust gas conduit 80 extending in the vertical direction is formed on the insides of the front surface 6a and the rear surface 6b which form the faces in the longitudinal direction of the housing 6; the top inside of the exhaust gas conduit 80 communicates with the space in which the air heat exchanger 22 is disposed, and the bottom end side communicates with the exhaust gas chamber 78. An exhaust gas discharge pipe 82 is connected at approximately the center of the bottom surface of the exhaust gas chamber 78; the downstream end of this exhaust gas discharge pipe 82 is connected to the above-described hot water producing device 50 shown in Fig. 1.

As shown in Fig. 2, an ignition device 83 for starting the combustion of fuel gas and air is disposed on the combustion chamber 18.

0055 Next, referring to Fig. 4, we discuss the fuel cell unit 16. Fig. 4 is a partial section showing a solid oxide fuel cell (SOFC) fuel cell unit according to an embodiment of the present invention.

As shown in Fig. 4, the fuel cell unit 16 is furnished with a fuel cell 84 and internal electrode terminals 86, respectively connected to the respective terminals at the top and bottom of the fuel cell 84.

The fuel cell 84 is a tubular structure extending in the vertical direction, furnished with a cylindrical internal electrode layer 90, on the inside of which is formed a fuel gas flow path 88, a cylindrical external electrode layer 92, and an electrolyte layer 94 between the internal electrode layer 90 and the external electrode layer 92. This internal electrode layer 90 is a fuel electrode through which fuel gas passes, and is a (-) pole, while the external electrode layer 92 is an air electrode which contacts the air, and is a (+) pole.

0056 The internal electrode terminals 86 attached at the top end and bottom ends of the fuel cell device 16 have the same structure, therefore we will here discuss specifically the internal electrode terminal 86 attached at the top and side. The top portion 90a of the inside electrode layer 90 is furnished with an outside perimeter surface 90b and top end surface 90c, exposed to the electrolyte layer 94 and the outside electrode layer 92. The inside electrode terminal 86 is connected to the outer perimeter surface of the inside electrode layer 90 through a conductive seal material 96, and is electrically connected to the inside electrode layer 19 by making direct contact with the top end surface 90c of the inside electrode layer 90. A fuel gas flow path 98 communicating with the inside electrode layer 90 fuel gas flow path 88 is formed at the center portion of the inside electrode terminal 86.

0057 The inside electrode layer 90 is formed, for example, from at least one of a mixture of Ni and zirconia doped with at least one type of rare earth element selected from Ca, Y, Sc, or the like; or a mixture of Ni and ceria doped with at least one type of rare earth element; or any mixture of Ni with lanthanum gallate doped with at least one element selected from among Sr, Mg, Co, Fe, or Cu.

0058 The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

0059 The outside electrode layer 92 is formed, for example, from at least one of the following: lanthanum manganite doped with at least one element selected from among Sr or Ca; lanthanum ferrite doped with at least one element selected from among Sr, Co, Ni, or Cu; lanthanum cobaltite doped with at least one element selected from among Sr, Fe, Ni, or Cu; silver, or the like.

0060 Next we discuss the fuel cell stack 14, referring to Fig. 5. Fig. 5 is a perspective view showing the fuel cell stack in a solid oxide fuel cell (SOFC) according to an embodiment of the present invention.

As shown in Fig. 5, the fuel cell stack 14 is furnished with sixteen fuel cell units 16; the top inside and bottom inside of these fuel cell units 16 are respectively supported by a lower support plate 68 and upper support plate 100. Through holes 68a and 100a, through which the inside electrode terminal 86 can penetrate, are provided on this lower support plate 68 and outer support plate 100.

0061 In addition, a collector 102 and an external terminal 104 are attached to the fuel cell unit 16. This collector 102 is integrally formed by a fuel electrode connecting portion 102a, which is electrically connected to the inside electrode terminal 86 attached to the inside electrode layer 90 serving as the fuel electrode, and by an air electrode connecting portion 102b, which is electrically connected to the entire external perimeter of the outside electrode layer 92 serving as the air electrode. The air electrode connecting portion 102b is formed of a vertical portion 102c extending vertically along the surface of the outside electrode layer 92, and multiple horizontal portions 102d extending in the horizontal direction from this vertical portion 102c along the surface of the outside electrode layer 92. The fuel electrode connecting portion 102a extends linearly in an upward or downward diagonal direction from the vertical portion 102c of the air electrode connecting portion 102b toward the inside electrode terminals 86 positioned in the upper and lower directions on the fuel cell unit 16.

0062 Furthermore, electrode terminals 86 at the top and bottom ends of the two fuel cell units 16 positioned at the end of the fuel cell stack 14 (at the front and back sides on the left edge in Fig. 5) are respectively connected to the outside terminals 104. These external terminals 104 are connected to the external terminals 104 (not shown) at the ends of the adjacent fuel cell stack 14, and as described above, all of the 160 fuel cell units 16 are connected in series.

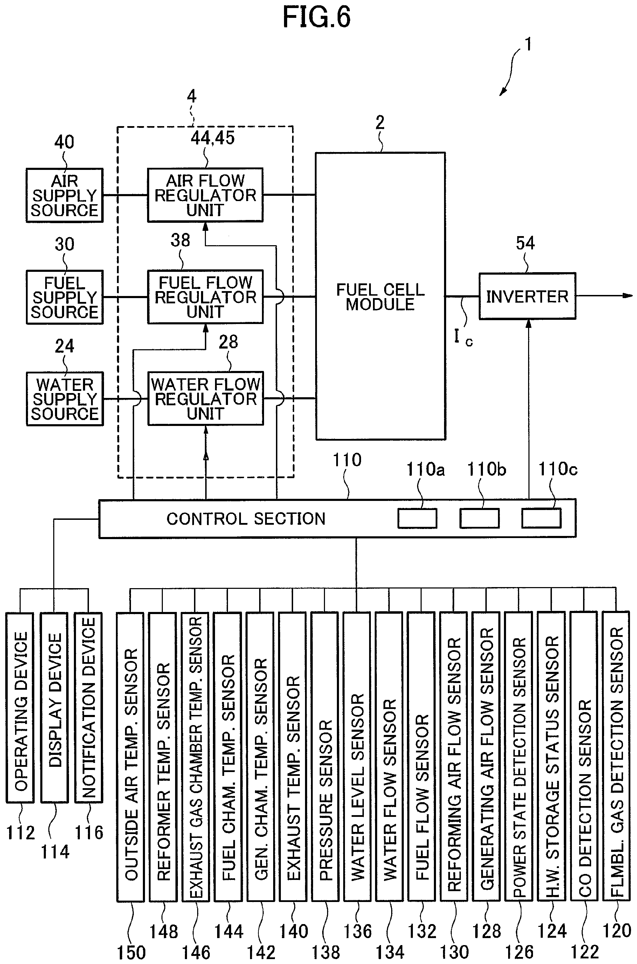

0063 Next, referring to Fig. 6, we discuss the sensors attached to the solid oxide fuel cell (SOFC) according to the present embodiment. Fig. 6 is a block diagram showing a solid oxide fuel cell (SOFC) according to an embodiment of the present invention.

As shown in Fig. 6, a solid oxide fuel cell device 1 is furnished with a control unit 110; an operating device 112 provided with operating buttons such as "ON" or "OFF" for user operation, a display device 114 for displaying various data such as a generator output value (Watts), and a notification device 116 for issuing warnings during abnormal states and the like are connected to this control unit 110. This notification device 116 may be connected to a remote control center to inform the control center of abnormal states.

0064 Next, signals from the various sensors described below are input to the control unit 110.

First, a flammable gas detection sensor 120 detects gas leaks and is attached to the fuel cell module 2 and the auxiliary unit 4.

The purpose of the flammable gas detection sensor 120 is to detect leakage of CO in the exhaust gas, which is meant to be exhausted to the outside via the exhaust gas conduit 80, into the external housing (not shown) which covers the fuel cell module 2 and the auxiliary unit 4.

A water reservoir state detection sensor 124 detects the temperature and amount of hot water in a water heater (not shown).

0065 An electrical power state detection sensor 126 detects current, voltage, and the like in the inverter 54 and in a distribution panel (not shown).

A generator air flow detection sensor 128 detects the flow volume of generator air supplied to the generating chamber 10.

A reforming air flow volume sensor 130 detects the volume of reforming air flow supplied to the reformer 20.

A fuel flow volume sensor 132 detects the flow volume of fuel gas supplied to the reformer 20.

0066 A water flow volume sensor 134 detects the flow volume of pure water supplied to the reformer 20.

A water level sensor 136 detects the water level in pure water tank 26.

A pressure sensor 138 detects pressure on the upstream side outside the reformer 20.

An exhaust temperature sensor 140 detects the temperature of exhaust gas flowing into the hot water producing device 50.

0067 As shown in Fig. 3, a generating chamber temperature sensor 142 is disposed on the front surface side and rear surface side around the fuel cell assembly 12, and detects the temperature around the fuel cell stack 14 in order to estimate the temperature of the fuel cell stack 14 (i.e., of the fuel cell 84 itself).

A combustion chamber temperature sensor 144 detects the temperature in combustion chamber 18.

An exhaust gas chamber temperature sensor 146 detects the temperature of exhaust gases in the exhaust gas chamber.

A reformer temperature sensor 148 detects the temperature of the reformer 20 and calculates the reformer 20 temperature from the intake and exit temperatures on the reformer 20.

If the solid oxide fuel cell (SOFC) is placed outdoors, the outside temperature sensor 150 detects the temperature of the outside atmosphere. Sensors to detect outside atmospheric humidity and the like may also be provided.

0068 Signals from these various sensor types are sent to the control unit 110; the control unit 110 sends control signals to the water flow regulator unit 28, the fuel flow regulator unit 38, the reforming air flow regulator unit 44, and the oxidant gas supply device 45 based on data from the sensors, and controls the flow volumes in each of these units.

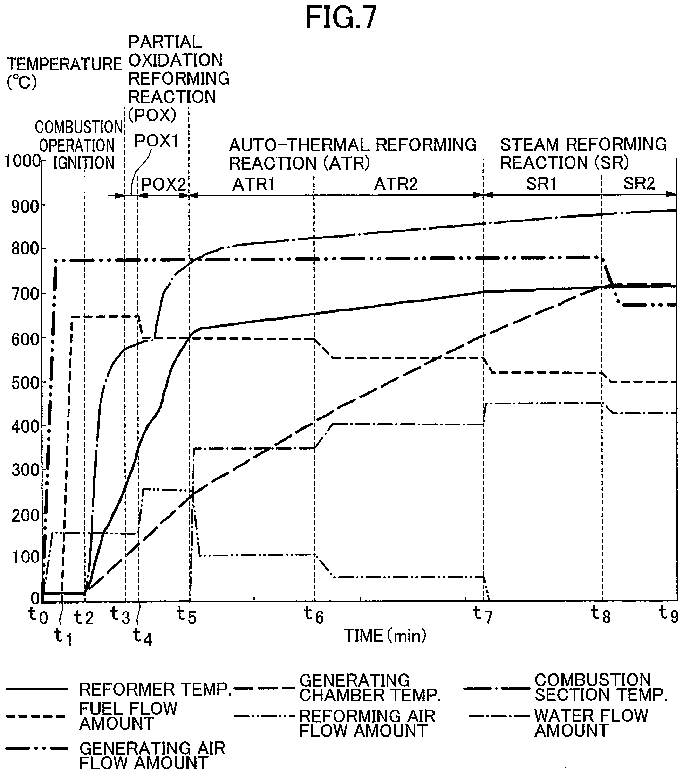

0069 Next, referring to Fig. 7, we discuss the operation of a solid oxide fuel cell (SOFC) according to the present embodiment at the time of start up. Fig. 7 is a timing chart showing the operations of a solid oxide fuel cell (SOFC) according to an embodiment of the present invention at the time of start up.

At the beginning, in order to warm up the fuel cell module 2, operation starts in a no-load state, i.e., with the circuit which includes the fuel cell module 2 in an open state. At this point current does not flow in the circuit, therefore the fuel cell module 2 does not generate electricity.

0070 First, reforming air is supplied from the reforming air flow regulator unit 44 to the reformer 2 on the fuel cell module 2. At the same time, generating air is supplied from the oxidant gas supply device 45 to the fuel cell module 2 air heat exchanger 22, and this generating air reaches the generating chamber 10 and the combustion chamber 18.

Immediately thereafter, fuel gas is also supplied from the fuel flow regulator unit 38, and fuel gas into which reform area is blended passes through the reformer 20, the fuel cell stack 14, and the fuel cell unit 16 to reach the combustion chamber 18.

0071 Next, ignition is brought about by the ignition device 83, and fuel gas and air (reforming air and generating air) supplied to the combustion chamber 18 is combusted. This combustion of fuel gas and air produces exhaust gas; the generating chamber 10 is warmed by this exhaust gas, and when the exhaust gas rises into the fuel cell module 2 sealed space 8, the fuel gas, which includes reforming air in the reformer 20 is warm, as is the generating air inside the air heat exchanger 22.

0072 At this point, fuel gas into which reform area is blended is supplied to the reformer 20 by the fuel flow regulator unit 38 at the reforming air flow regulator unit 44, therefore the partial oxidation reforming reaction POX given by Expression (1) proceeds. This partial oxidation reforming reaction POX is an exothermic reaction, and therefore has favorable starting characteristics. The fuel gas whose temperature has risen is supplied from the fuel gas supply line 64 to the bottom of the fuel cell stack 14, and by this means the fuel cell stack 14 is heated from the bottom, and the combustion chamber 18 is also heated by the combustion of the fuel gas and air, so that the fuel stack 14 is also heated from above, enabling as a result an essentially uniform rise in temperature in the vertical direction of the fuel cell stack 14. Even though the partial oxidation reforming reaction POX is progressing, the ongoing combustion reaction between fuel gas and air is continued in the combustion chamber 18.

0073

$$C_mH_n + xO_2 \rightarrow aCO_2 + bCO + CH_2 \qquad (1)$$

0074 When the reformer temperature sensor 148 detects that the reformer 20 has reached a predetermined temperature (e.g.600°C) after the start of the partial oxidation reforming reaction POX, a pre-blended gas of fuel gas, reforming air, and steam is applied to the reformer 20 by the water flow regulator unit 28, the fuel flow regulator unit 38, and the reforming air flow regulator unit 44.

At this point an auto-thermal reforming reaction ATR, which makes use of both the aforementioned partial oxidation reforming reaction POX and the steam reforming reaction SR described below, proceeds in the reformer 20. This auto-thermal reforming reaction ATR can be internally thermally balanced, therefore the reaction proceeds in a thermally self-sustaining fashion inside the reformer 20. In other words, when there is a large amount of oxygen (air), heat emission by the partial oxidation reforming reaction POX dominates, and when there is a large amount of steam, the endothermic steam reforming reaction SR dominates. At this stage, the initial stage of startup has passed and some degree of elevated temperature has been achieved within the generating chamber 10, therefore even if the endothermic reaction is dominant, no major drop in temperature will be caused. Also, the combustion reaction continues within the combustion chamber 18 even as the auto-thermal reforming reaction ATR proceeds.

0075 When the reformer temperature sensor 146 detects that the reformer 20 has reached a predetermined temperature (e.g., 700°C) following the start of the auto-thermal reforming reaction ATR shown as Expression (2), the supply of reforming air by the reforming air flow regulator unit 44 is stopped, and the supply of steam by the water flow regulator unit 28 is increased. By this means, a gas containing no air and only containing fuel gas and steam is supplied to the reformer 20, where the steam reforming reaction SR of Expression (3) proceeds.

0076

$$C_mH_n + XO_2 + yH_2O \rightarrow aCO_2 + bCO + CH_2 \qquad (2)$$

$$C_mH_n + xH_2O \rightarrow aCO_2 + bCO + CH_2 \qquad (3)$$

0077 This steam reforming reaction SR is an endothermic reaction, therefore the reaction proceeds as a thermal balance is maintained with the combustion heat from the combustion chamber 18. At this stage, the fuel cell module is in the final stages of startup, therefore the temperature has risen to a sufficiently high level within the generating chamber 10 so that no major temperature dropped is induced in the generating chamber 10 even though an endothermic reaction is proceeding. Also, the combustion reaction continues to proceed in the combustion chamber 18 even as the steam reforming reaction SR is proceeding.

0078 Thus, after the fuel cell module 2 has been ignited by the ignition device 83, the temperature inside the generating chamber 10 gradually rises as a result of the partial oxidation reforming reaction POX, the auto-thermal reforming reaction ATR, and the steam reforming reaction SR which proceed in that sequence. Next, when the temperature inside the generating chamber 10 and the temperature of the fuel cell 84 reaches a predetermined generating temperature which is lower than the rated temperature at which the cell module 2 can be stably operated, the circuit which includes the fuel cell module 2 is closed, electrical generation by the fuel cell module 2 begins, and current then flows to the circuit. Generation of electricity by the fuel cell module 2 causes the fuel cell 84 itself to emit heat, such that the temperature of the fuel cell 84 rises. As a result, the rated temperature at which the fuel cell module 2 is operated becomes, for example, 600°C - 800°C.

0079 Following this, a quantity of fuel gas and air greater than that consumed by the fuel cell 84 is applied in order to maintain the rated temperature and continue combustion inside the combustion chamber 18. Generation of electricity by the high reform-efficiency steam reforming reaction SR proceeds while electricity is being generated.

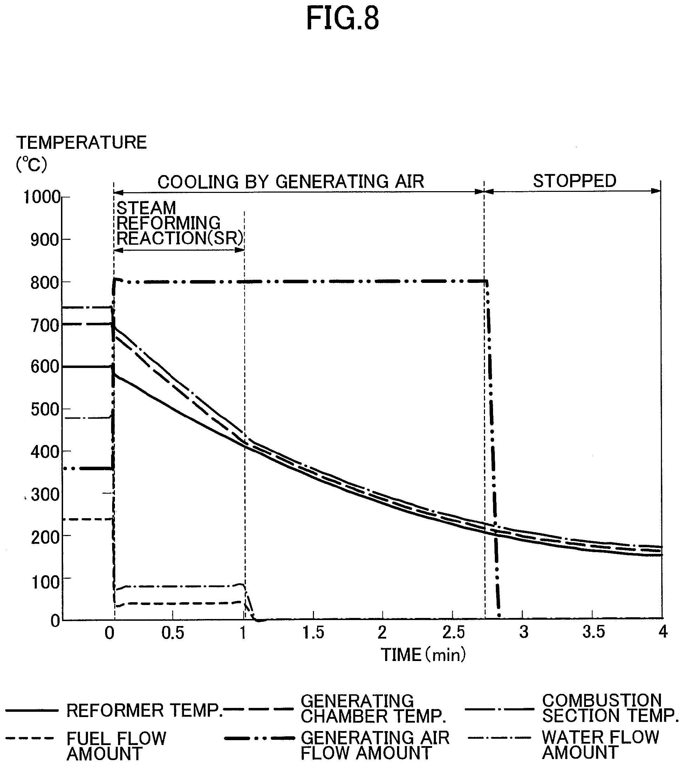

0080 Next, referring to Fig. 8, we discuss the operation upon stopping the solid oxide fuel cell (SOFC) of the present embodiment. Fig. 8 is a timing chart showing the operations which occur upon stopping the solid oxide fuel cell (SOFC) of the present embodiment.

As shown in Fig. 8, when stopping the operation of the fuel cell module 2, the fuel flow regulator unit 38 and the water flow regulator unit 28 are first operated to reduce the quantity of fuel gas and steam being supplied to the reformer 20.

0081 When stopping the operation of the fuel cell module 2, the quantity of generating air supplied by the reforming air flow regulator unit 44 into the fuel cell module 2 is being increased at the same time that the quantity of fuel gas and steam being supplied to the reformer 20 is being reduced; the fuel cell assembly 12 and the reformer 20 are air cooled to reduce their temperature. Thereafter, when the temperature of the generating chamber drops to, for example, 400°C, supply of the fuel gas and steam to the reformer 20 is stopped, and the steam reforming reaction SR in the reformer 20 ends. Supply of the generating air continues until the temperature in the reformer 20 reaches a predetermined temperature, e.g.200°C; when the predetermined temperature is reached, the supply of generating air from the oxidant gas supply device 45 is stopped.

0082 Thus in the present embodiment the steam reforming reaction SR by the reformer 20 and cooling by generating air are used in combination, therefore when the operation of the fuel cell module 2 is stopped, that operation can be stopped relatively quickly.

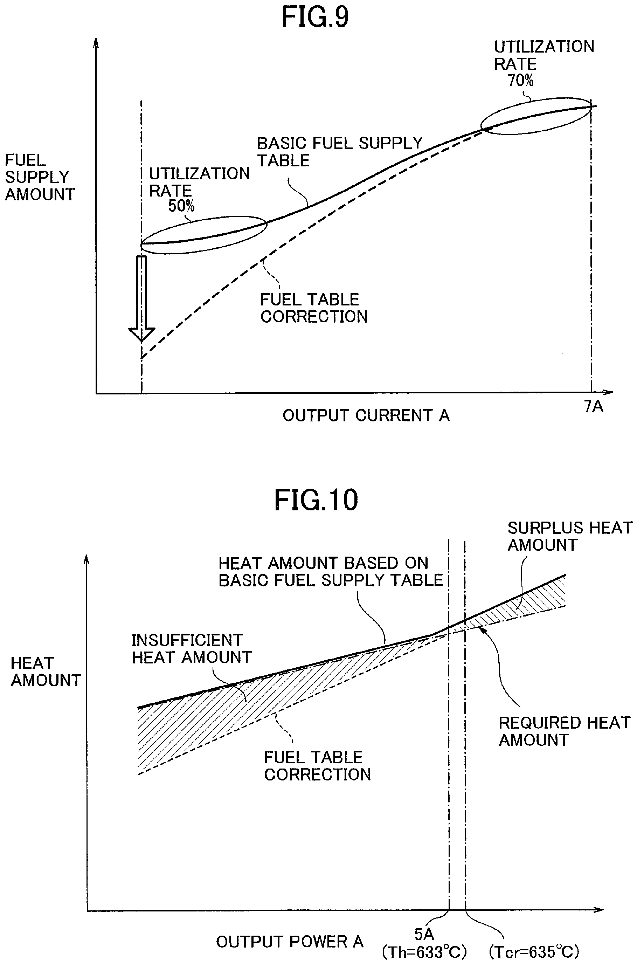

0083 Next, referring to the Figs. 9 through 17, we discuss the control of a solid oxide fuel cell 1 according to a first embodiment of the present invention.

Fig. 9 is graph showing the relationship between output current and fuel supply amount in the solid oxide fuel cell 1 of the first embodiment of the present invention.

Fig. 10 is a graph showing the relationship between output current and the amount of heat produced by supplied fuel in the solid oxide fuel cell 1 of the first embodiment of the present invention.

0084 First, as shown by the solid line in Fig. 9, the solid oxide fuel cell 1 of the present embodiment is capable of changing output at or below the rated output power of 700W (output current 7A) in response to power demand. The fuel supply amount (L/min) deemed necessary to output a required power is set by the Basic Fuel Supply Table shown by the solid line in Fig. 9. A control section 110, which serves as control device, determines a fuel supply amount based on the fuel supply amount table in response to the power demand detected by electrical power state detecting sensor 126, which serves as power demand detection device; the fuel flow regulator unit 38 serving as fuel supply device is controlled based on this.

0085 The amount of fuel needed for generation is proportional to output power (output current), but as shown by the solid line in Fig. 9, the fuel supply amount set in the basic fuel supply amount table is not proportional to output current. This is because when the fuel supply amount is reduced in proportion to output power, it becomes impossible to maintain the fuel cell units 16 in the fuel cell module 2 at a temperature capable of generating electricity. Therefore in the present embodiment the basic fuel supply table is set at a fuel utilization rate of approximately 70% when generating a large power in the region of a 7A output current, and is set at a fuel utilization rate of approximately 50% when generating a small power in the region of a 2A output current. Thus by reducing the fuel utilization rate in the small power generation region and using the fuel not used for generation to combust and heat the reformer 20 and the like, temperature drops in the fuel cell units 16 can be suppressed, and an electrical generation temperature can be maintained in the fuel cell module 2.

0086 However, reducing the fuel utilization rate causes an increase in fuel not contributing to electrical generation, so the energy efficiency of the solid oxide fuel cell 1 declines in the small power generation region. In the solid oxide fuel cell 1 of the present embodiment, a fuel table change circuit 110a built into the control section 110 changes or corrects the fuel supply amount set in the basic fuel supply table in response to predetermined conditions, reducing the fuel supply amount as shown by the dotted line in Fig. 9, so that the fuel utilization rate in the small power generation region is raised. The energy efficiency of the solid oxide fuel cell 1 is thus improved.

0087 Fig. 10 is a graph schematically showing the relationship between output current when fuel is supplied based on the basic fuel supply table vs. amount of heat from the supplied fuel in the solid oxide fuel cell 1 of the present embodiment. As shown by the dot-and-dash line in Fig. 10, the amount of heat needed to make the fuel cell module 2 thermally autonomous and to operate stably increases monotonically with the increase in output current. The solid line graph in Fig. 10 shows the heat amount when fuel is supplied according to the basic fuel supply table. In this embodiment, the necessary heat amount indicated by the dot-and-dash line and the amount of heat supplied based on the basic fuel supply table shown by the solid line are approximately matched in the region below an output current of 5A, which corresponds to medium power generation.

0088 Furthermore, in the region above an output current of 5A, the heat amount shown by the solid line and supplied according to the basic fuel supply table is greater than the heat amount shown by the dot-and-dash line, which is the minimum requirement for thermal autonomy. The surplus heat amount between the solid line and the dotted line is accumulated in the insulating material 7 serving as heat storing material. There is also a correlation between the output current from the solid oxide fuel cell 1 and the temperature of the fuel cell units 16 in the fuel cell module 2 when this current is being output in a steady state; since the temperature of the fuel cell units 16 should be raised in order to increase output current, the temperature of the fuel cell units 16 is high when in a high output current state. In the present embodiment an output current of 5A corresponds to approximately 633°C, which is the stored heat temperature Th. Therefore in the solid oxide fuel cell 1 of the present embodiment, a larger amount of heat is accumulated in the insulating material 7 when the output current is 5A and the stored heat temperature Th = approximately 633°C or above.

0089 This stored heat temperature Th is set to a temperature corresponding to 500W (an output current of 5A), which is larger than the 350W representing the midpoint value of the generated power range of 0W-700W. In the region of an output current of 5A or below, the heat amount supplied based on the basic fuel supply table is set to be approximately the same as the minimum required heat amount for thermal autonomy (the heat amount in the basic fuel supply table is slightly higher). Therefore as shown by the dotted line example in Fig. 10, the heat amount needed for thermal autonomy is lacking when the fuel supply amount from the basic fuel supply table is corrected to reduce the fuel supply amount.

0090 In the present embodiment, as described below, a correction is made in the small power generation region to temporarily reduce the fuel supply amount set by the basic fuel supply table and raise the fuel utilization rate. At the same time, the lacking heat amount caused by the reduction in the fuel supply amount from the basic fuel supply table is replenished by using the heat amount accumulated in the insulating material 7 while the fuel cell module 2 is operating in a region above the stored heat temperature Th. Note that in the present embodiment, because the heat capacity of the insulating material 7 is extremely high, the heat amount accumulated in the insulating material 7 can be used over a period of more than 2 hours when the fuel cell module 2 is operating in the small generated power region after operating for a predetermined time at high generated power, and the fuel utilization rate can be raised by performing a correction to reduce the fuel supply amount during this interval.

0091 Also, in the present embodiment when the output current is 5A and the stored heat temperature Th = approximately 633°C or above, the basic fuel supply table is set so that a greater heat amount is accumulated in the insulating material 7, but the basic fuel supply table can also be set approximately the same as the minimum required heat amount for thermal autonomy (the heat amount in the basic fuel supply table is slightly higher), even in an output current region of 5A or above. I.e., in a region where the generated power is large, the operating temperature of the fuel cell module 2 is higher than when generated power is small, therefore even if the fuel supply amount is set for the minimum required heat amount for thermal autonomy, the usable heat amount during small power generation can be accumulated in the insulating material 7. As in this embodiment, the required heat amount can be reliably accumulated in the insulating material 7 during the short evening time period when power demand is at peak by actively setting the fuel supply amount to be high at times of high generated power.

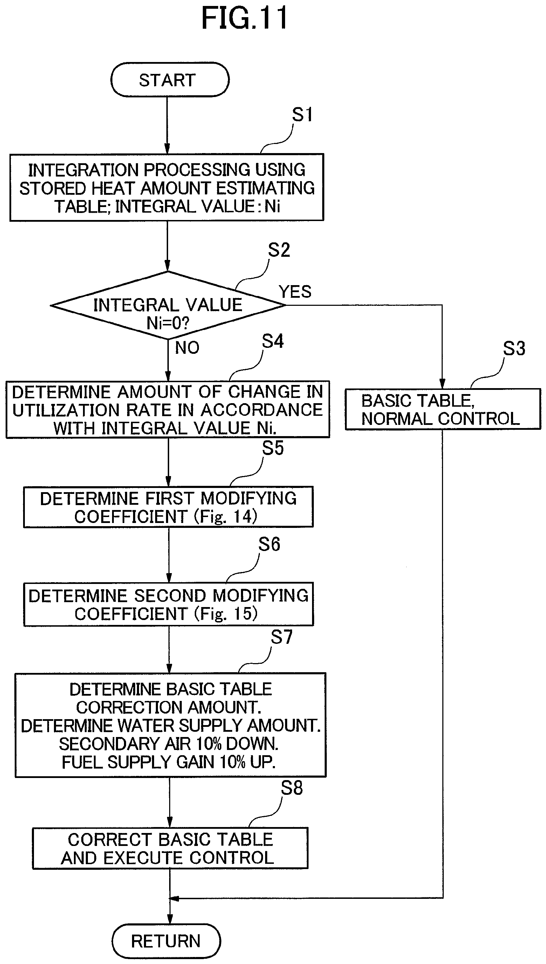

0092 Next, referring to the Figs. 11 through 17, we discuss the specific control of a solid oxide fuel cell 1 according to the first embodiment of the present invention.

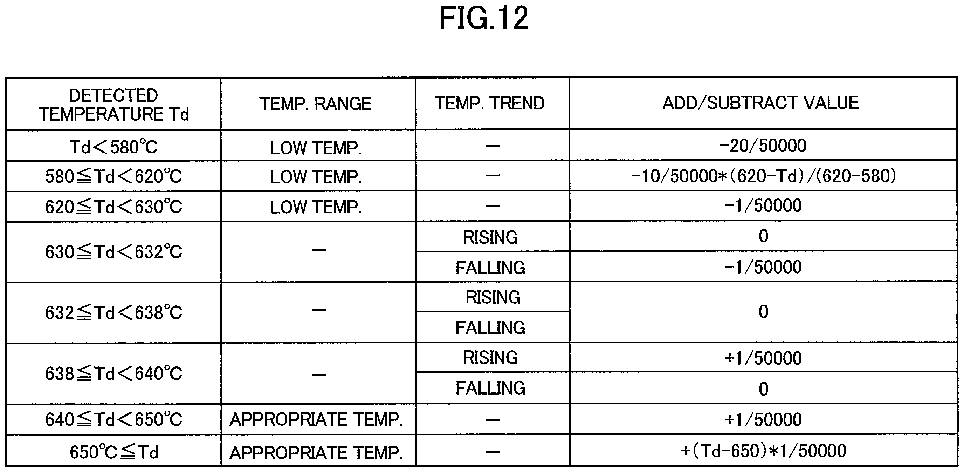

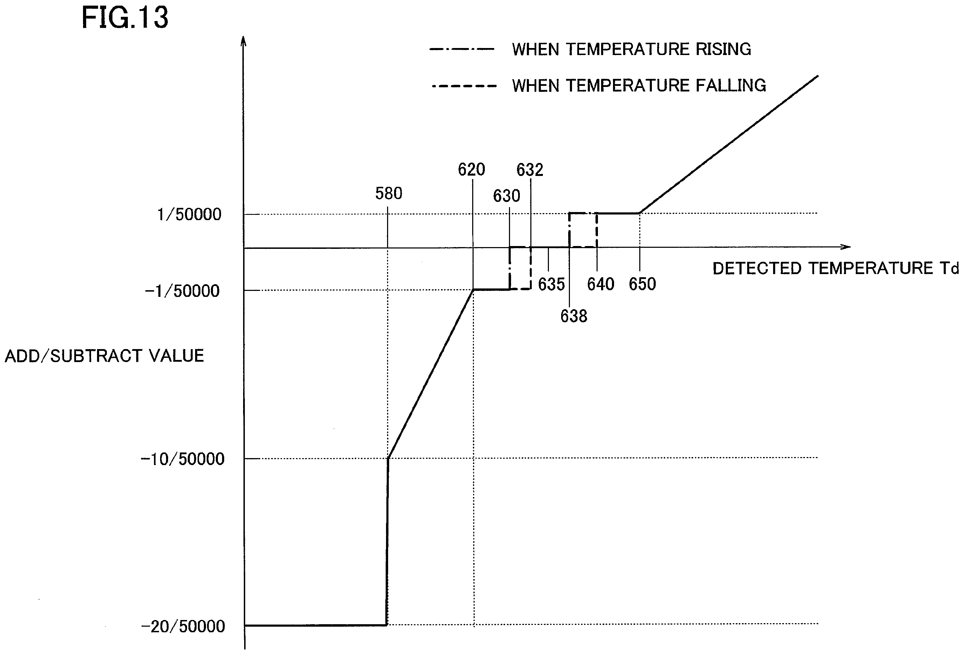

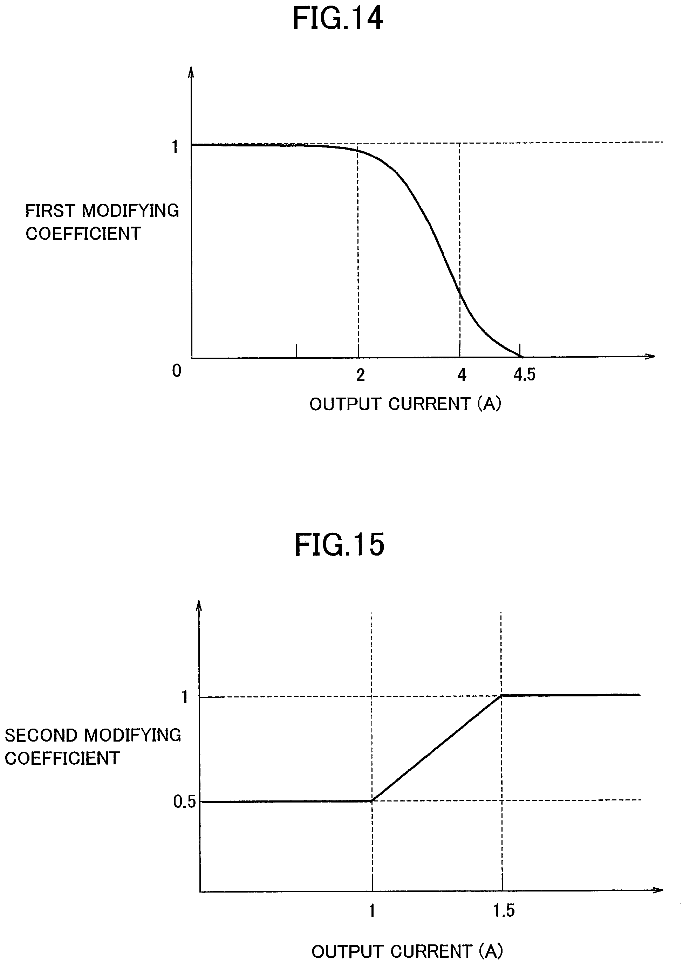

Fig. 11 is a control flow chart of the fuel supply amount in the solid oxide fuel cell of the first embodiment of the present invention. Fig. 12 is a stored heat amount estimate table used to estimate the amount of heat accumulated in the insulating material 7. Fig. 13 is a graph of the stored heat amount estimate table. Fig. 14 is a graph showing the values of first modifying coefficients relative to output current. Fig. 15 is a graph showing the values of second modifying coefficients relative to output current.

0093 The flow chart shown in Fig. 11 is executed at predetermined time intervals in the control section 110 during generating operations of the solid oxide fuel cell 1. First, as step S1 in Fig. 11, accumulation process is executed based on the stored heat estimating table shown in Fig. 12. The accumulated value Ni calculated in step S1 is, as described below, a value which will serve as an index for a usable stored heat amount accumulated in the insulating material 7 or the like, and lies between 0 and 1.

0094 Next, in step S2, a judgment is made as to whether the accumulated value Ni calculated in step S1 is a 0. If the accumulated value Ni is 0, the system proceeds to step S3; if other than 0, it proceeds to step S4.

0095 When the accumulated value is a 0, it is estimated that heat sufficient to be usable has not accumulated in the insulating material 7 or the like, therefore in step S3 the fuel supply amount is determined by the control section 110 based on the basic fuel supply table. The control section 110 sends a signal to the fuel flow regulator unit 38, and the determined fuel supply amount is supplied to the fuel cell module 2. Therefore in this case no correction is executed to raise the fuel utilization rate even if generated power is small. After step S3, one iteration of the processing in the flow chart of Fig. 11 is completed.

0096 In step S4, on the other hand, the amount of change in the rate of utilization vs. the fuel supply amount determined by the basic fuel supply table is determined based on the accumulated value Ni. I.e., when the accumulated value Ni is 1, the fuel supply amount is reduced the most; the fuel utilization rate is improved, and the amount of reduction in fuel supply amount decreases as the accumulated value Ni decreases.

0097 Next, in step S5, a first modifying coefficient is determined based on the graph shown in Fig. 14. As shown in Fig. 14, the first modifying coefficient is 1 in the small output current region, and goes to 0 when output current exceeds 4.5A. I.e., in the small generated power region, a correction is executed to reduce the fuel supply amount by using the heat amount accumulated in the insulating material 7, and the fuel utilization rate is improved, whereas no correction is executed in the large generated power region. This is because in the large generated power region operation can be conducted at a sufficiently high the fuel utilization rate using the basic fuel supply table, as well, and when the generated power is large, it is difficult to utilize the stored heat in the insulating material 7 due to the high temperature inside the fuel cell module 2.

0098 Next, in step S6, a second modifying coefficient is determined based on the graph shown in Fig. 15. As shown in Fig. 15, the second modifying coefficient is 0.5 in the region where output current is 1A or below, and grows linearly in the output current region of 1 to 1.5A, reaching 1 at an output current of 1.5 A or above. In other words, in the power generation region of 150W or below, which is the utilization suppression generation amount, the absolute value of the fuel supply amount according to the basic fuel supply table is small, so there is a risk of damage to the fuel cell units 16 when a large correction is made resulting in a reduced fuel supply amount. Also, by keeping the amount of correction to the basic fuel supply table low, the heat amount accumulated in the insulating material 7 can be used a little at a time, making it possible to utilize the stored heat over a long period. Therefore the second modifying coefficient causes the amount of correction to the basic fuel supply table to be reduced to the degree that generated power is small, so that it functions as a change period extension circuit for extending the time period for changing or correcting the basic fuel supply table. This change period extension circuit operates so that the stored heat accumulated in the insulating material 7 is used after correction to the basic fuel supply table begins, therefore the stored heat amount gradually decreases as the length of time during which correction is being executed increases, and since the amount of correction to the fuel utilization rate declines when the stored heat amount declines, the period over which stored heat can be used is further extended.

Note that it is also acceptable not to modify the correction amount using the second modifying coefficient.

0099 Next, in step S7, the first modifying coefficient determined in step S5 is multiplied by the second modifying coefficient determined in step S6 to determine a final utilization change rate. Moreover, the amount of correction to the water supply amount is determined according to the determined fuel supply amount, and the generating air supply amount is reduced 10% relative to the normal air supply amount. Also, the fuel supply amount control gain is increased by 10% relative to the control gain during normal operation, thereby improving following characteristics when changing the fuel supply amount.

0100 Thus by increasing the fuel supply amount control gain when executing corrections to the basic fuel supply table and setting fuel supply amount following characteristics to a high level, the fuel supply amount can be quickly increased when the post-correction fuel utilization rate declines (fuel supply amount is increased) with the reduction in estimated stored heat amount. Excessive cooling of the fuel cell module 2 caused by delayed response in the increment of fuel supply amount can thus be prevented. Therefore the control to increase gain in step S7 acts as an excess cooling prevention circuit. By reducing the secondary generating air amount by 10%, cooling of the of the cells, reformer, etc, inside fuel cell module 2 can be suppressed, thereby enabling the reduction in stored heat amount to be inhibited and permitting effective use of stored heat. As a result, control to reduce the secondary air amount by 10% also acts as an excess cooling prevention circuit.

0101 In step S8 the control section 110 sends a signal to the fuel flow regulator unit 38, the water flow regulator unit 28, and the generating air flow regulator unit 45, and the amounts of fuel, water, and generating air determined in step S7 are supplied to the fuel cell module 2. After step S8, one iteration of the processing in the flow chart of Fig. 11 is completed. When the accumulated value $Ni$ declines as a result of executing a correction to the basic fuel supply table, processing shifts again from step S2 to step S3. Correction to the basic fuel supply table thus ends, and control of the fuel supply amount based on the basic fuel supply table is again executed.

0102 Next, referring to Figs. 12 and 13, we discuss estimation of the stored heat accumulated in the insulating material 7 or the like.

Estimation of stored heat is executed by a stored heat amount estimating circuit 110b (Fig. 6) built into the control section 110. When step S1 in the flow chart shown in Fig. 11 is executed, the stored heat amount estimating circuit 110b reads the temperature of the generating chamber from the generating chamber temperature sensor 142 serving as temperature detection device. Next, the stored heat amount estimating circuit 110b refers to the stored heat estimating table shown in Fig. 12 and determines an add/subtract value based on the generating chamber temperature sensor 142 detected temperature $Td$. For example, when the detected temperature $Td$ is 645°C, the addition value is determined at 1/50,000, and this value is added to the accumulated value $Ni$. Accumulation of this type is executed at a predetermined time interval after startup of the solid oxide fuel cell 1. In this embodiment, the flow chart in Fig. 11 is executed every 0.5 seconds, therefore an accumulation is executed once each 0.5 seconds. Therefore when the detected temperature $Td$ is fixed at 645°C, for example, a value of 1/50,000 is accumulated once each 0.5 seconds, and the accumulated value $Ni$ grows.

0103 This accumulated value $Ni$ reflects the temperature history in the fuel cell module 2, and within the generating chamber, etc., and becomes a value serving as an index for showing the level of stored heat amount accumulated in the insulating material 7 or the like. This accumulated value $Ni$ is limited to a range of 0 to 1; when the accumulated value $Ni$ reaches 1, that value is held at 1 until the next subtraction occurs; when the accumulated value $Ni$ has declined to 0, the value is held at 0 until the next addition takes place. In the present invention, it is assumed that the value serving as index for indicating the degree of the stored heat amount is an estimated value for the stored heat amount. Therefore in the present invention the stored heat amount is estimated based on the temperature of the fuel cell module 2.

0104 The utilization change amount relative to the basic fuel supply table, which is calculated in step S4 of the flow chart shown in Fig. 11, is determined by multiplying a predetermined correction amount times the accumulated value $Ni$. Therefore the larger the accumulated value $Ni$ serving as an estimated stored heat amount, the more the correction amount increases; the utilization change amount is at a maximum when the accumulated value $Ni$ is a 1, and when the accumulated value $Ni$ is a 0, no correction is executed (utilization change amount = 0). I.e., when the accumulated value $Ni$ is 0, the stored heat amount estimated value is judged to be under the change-executable stored heat amount for executing corrections to the basic fuel supply table, and no correction to the fuel utilization rate is executed.

0105 As shown in Figs. 12 and 13, in the present embodiment accumulation is carried out as addition when the detected temperature $Td$ is higher than the reference detected temperature $Tcr$ of 635°C, and as subtraction when it is lower than same. I.e., when the detected temperature $Td$ is higher than the reference temperature $Tcr$, an amount of heat usable for increasing the fuel utilization rate in the insulating material 7 or the like is accumulated, and when lower than the change reference temperature $Tcr$, it is assumed that heat accumulated in the insulating material 7 or the like will be carried off, and the accumulated value $Ni$ is calculated. Put another way, the accumulated value $Ni$ corresponds to the time integral of the temperature deviation relative to the detected temperature $Td$ change reference temperature $Tcr$, and the stored heat amount is estimated based on this accumulated value $Ni$.

0106 Note that in this embodiment the change reference temperature $Tcr$ which serves as reference for estimating the stored heat amount is set to be slightly higher than the stored heat temperature $Th$ at which there is a large accumulation of heat (Fig. 10). For this reason the estimated value of the stored heat amount is estimated to be slightly less than actual. Therefore corrections to raise the fuel utilization rate are executed excessively based on the stored heat amount estimated higher than the actual, and inducement of excessive temperature drops in the fuel cell module 2 is avoided.

0107 Therefore a correction is made to the basic fuel supply table when generated power decreases in a state whereby the detected temperature $Td$ is higher than the change reference temperature $Tcr$. On the other hand, when the generated power has declined in a state whereby the detected temperature $Td$ is lower than the change reference temperature $Tcr$, the amount of correction to the basic fuel supply table is reduced (by the decline in accumulated value $Ni$), or the correction is not executed (when accumulated value $Ni$ is 0).

0108 Specifically, as shown in Figs. 12 and 13, when the detected temperature Td is below 580°C, there is a reduction of 20/50,000 from the accumulated value Ni. When the detected temperature Td is 580°C or above and less than 620°C, there is a reduction from accumulated value Ni of 10/50,000 x (620-Td)/(620-580). When the detected temperature Td is 620°C or above and less than 630°C, there is a reduction from accumulated value Ni of 1/50,000. Thus the accumulated value Ni is rapidly decreased in proportion to the degree to which the detected temperature Td is less than change reference temperature Tcr, and with this the amount of correction to the fuel utilization rate is also rapidly reduced.

0109 On the other hand, when the detected temperature Td is 650°C or above, 1/50,000 x (Td-650) is added to the accumulated value Ni. When the detected temperature Td is 640°C or above and less than 650°C, 1/50,000 is added to the accumulated value Ni. Thus the accumulated value Ni is rapidly increased in proportion to the degree to which the detected temperature Td is more than change reference temperature Tcr, and with this the amount of correction to the fuel utilization rate is also rapidly increased.

0110 Furthermore, between detected temperatures Td of 630°C and 640°C, processing will differ between cases where the detected temperature Td is tending to increase vs. those in which it is tending to decrease.

I.e., when the detected temperature Td is between 630°C and 632°C, an addition value of 0 is adopted (no add/subtract is performed) when the detected temperature Td is in a rising trend, whereas 1/50,000 is subtracted when it is in a declining trend. Thus when the detected temperature Td is less than the change reference temperature Tcr, and the difference between them is a minor deviation temperature of 5°C or below, accumulated value Ni is more rapidly decreased when the detected temperature Td is on a decreasing trend than when it is on an increasing trend. Here, when the insulating material 7 or the like has an extremely high heat capacity, and the detected temperature Td has for the moment entered a decreasing trend, it can be anticipated that the temperature will continue to drop for a certain period of time. Therefore in such circumstances it is necessary to avoid the risk of a major temperature drop in the fuel cell module 2 by quickly reducing the accumulated value Ni and suppressing corrections raising the fuel utilization rate (reducing the fuel supply amount).

0111 On the other hand, when the detected temperature Td is between 638°C and 640°C, 1/50,000 is added when detected temperature Td is on an increasing trend, whereas an addition value of 0 is adopted (no add/subtract is performed) when it is in a declining trend. As described above, when the insulating material 7 or the like has an extremely high heat capacity, and the detected temperature Td has for the moment entered an increasing trend, it can be anticipated that the temperature will continue to rise for a certain period of time. Therefore in such circumstances stored heat is actively utilized to improve the fuel utilization rate by promoting correction to raise the fuel utilization rate (reduce the fuel supply amount) by quickly increasing the accumulated value Ni.

0112 Different values for the add/subtract value relative to the accumulated value Ni are thus adopted in accordance with the state of change in the detected temperature Td. Therefore the relationship between the temperature deviation between the detected temperature Td and the change reference temperature Tcr, and the accumulated value Ni reflecting the stored heat amount, is changed in response to the state of change in the detected temperature Td.

Also, when the detected temperature Td is 632°C or above and less than 638°C, the detected temperature Td is close to the change reference temperature Tcr of 635°C and is deemed to be stable; 0 is used as the added value regardless of the detected temperature Td trend, and the current status is maintained.

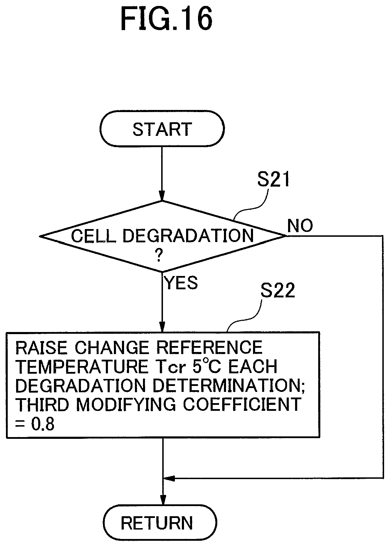

0113 Next, referring to figure 16, we explain processing when the fuel cell module 2 has degraded. Fig. 16 is a flowchart for changing correction amounts when the fuel cell module 2 has degraded.

0114 When degradation of the fuel cell units 16 advances due to long years of use, the power extractable from a given fuel supply amount declines. In conjunction with this, the temperature of the fuel cell units 16 also rises for the same power produced. In the solid oxide fuel cell 1 of the present embodiment, a determination of degradation of the fuel cell module 2 (the fuel cell units 16) is made based on the temperature of the fuel cell module 2 at a predetermined electrical generating time. Note that degradation of a fuel cell module can also be determined from the power or voltage, etc. which can be extracted from a predetermined fuel supply amount.

0115 The flow chart shown in Fig. 16 is executed each predetermined periodfor example several months to several years -- by the control section 110. First, in step S21 of Fig. 16, a judgment is made as to whether the fuel cell units 16 have degraded. If it is determined that the fuel cell units 16 have not degraded, the processing of one iteration of the flow chart shown in figure 16 ends. If it is determined that the fuel cell units 16 have degraded, the system advances to step S22.

0116 In step S22 the change reference temperature Tcr is changed to a value 5°C higher, and the third modifying coefficient is set to 0.8, completing the processing of one iteration of the flowchart shown in figure 16. This change is made to match the temperature which serves as the reference for the fuel utilization rate correction, since when the fuel cell units 16 degrades, the operating temperature of the fuel cell module 2 as a whole shifts to the higher temperature side. The third modifying coefficient is multiplied times the amount of change in the utilization rate determined in step S4 of Fig. 11. The third modifying coefficient is set to 1 prior to the degradation of the fuel cell units 16, and when it is determined that degradation has occurred, it is changed to 0.8, and the utilization rate change amount is reduced by 20%. Promotion of degradation of the fuel cell units 16 caused by large corrections to the fuel utilization rate with the fuel cell units 16 in a degraded state is thus prevented. Note that once it is determined that the fuel cell module 2 has degraded, the threshold value for the temperature used to determine degradation is thereafter changed when determining the further advancement of degradation. It is therefore possible to determine the degree of advancement of degradation over a number of iterations. The value of the change reference temperature Tcr is also changed each time a judgment of degradation occurs.

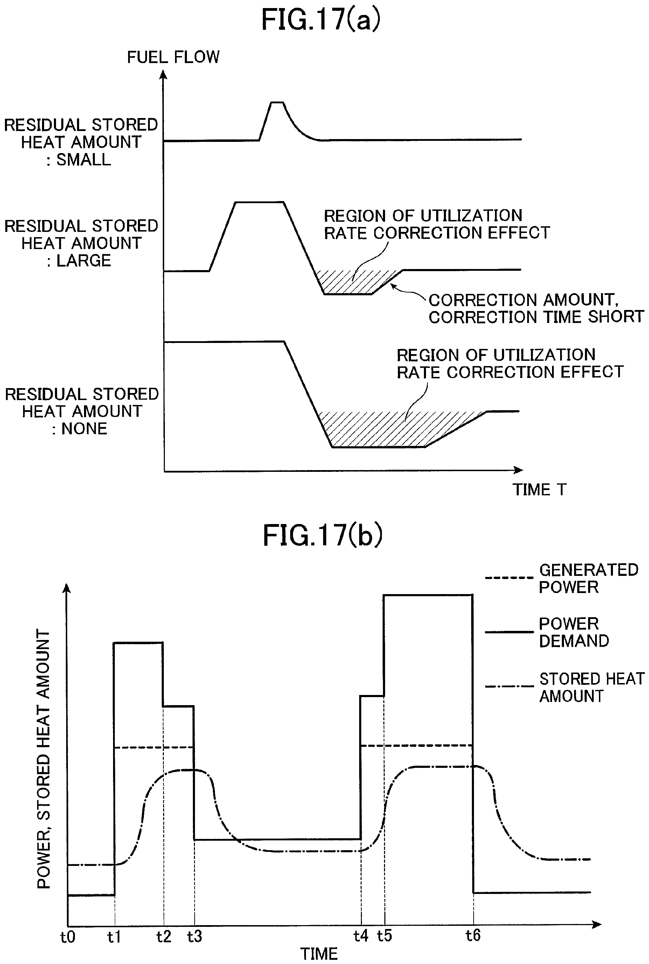

0117 Next, referring to the Fig. 17, we discuss the operation of a solid oxide fuel cell 1 according to a first embodiment of the present invention. Fig. 17(a) is a diagram conceptually showing the behavior of a solid oxide fuel cell 1 according to the present embodiment; (b) schematically shows changes in power demand over a day in a typical residence. The upper graph in Fig. 17(a) conceptually illustrates the behavior when there is not a usable amount of heat accumulated in the insulating material 7; the middle and lower graphs respectively show the cases for small and large accumulated heat. When, as in the upper portion of Fig. 17(a), the time duration of operation with a large fuel supply amount is short, a usable amount of heat is not accumulated in the insulating material 7, therefore operation after generated power has declined is determined based on the basic fuel supply table, and an increase in the fuel utilization rate will not occur. When, on the other hand, a high power generation operation continues for a certain amount of time as in he middle portion of Fig. 17(a), operation subsequent to the reduction of generated power is carried out by utilizing the heat amount regulated in the insulating material 7 when power generation was large, therefore high-efficiency operation with a fuel supply amount reduced from that of the basic fuel supply table is carried out during the period that a usable amount of heat remains in the insulating material 7. Thus fuel corresponding to the shaded portion of the middle graph is saved. Furthermore, when a large generated power operation is carried out for a long period of time as shown in the bottom portion of Fig. 17(a), a large amount of heat is accumulated in the insulating material 7, therefore high-efficiency operation utilizing accumulated heat is carried out over a longer time, and even more fuel is saved.

Next, in Fig. 17(b) the power demand used in a residence is shown by the solid line, the power generated by the solid oxide fuel cell 1 is shown by the dotted line, and the accumulated value Ni serving as an index of the stored heat amount is shown by the dot and dash line.

0118 First, at time t0-t1 when household members are asleep, the demanded power used in the residence is small; at time t1 the occupants awake and the power demand increases. In conjunction with this, the generated power from the solid oxide fuel cell 1 also increases, and that portion of the generated power exceeding the rated power of the fuel cell is supplied from the power grid. Since the state in which power use is small continues for approximately 6 to 8 hours during which the occupants are asleep, the accumulated heat (accumulated value Ni) estimated by the stored heat amount estimating circuit 110b is 0 or an extremely small value.

0119 When, at time t1, generated power increases and the fuel cell module 2 is operating at a temperature higher than the stored heat temperature Th, the stored heat amount gradually increases, and at time t2 increases to approximately 1, which is the maximum accumulated value. Thereafter, power demand suddenly drops when occupants leave the house at time t3. Thus when generated power drops in a state whereby the stored heat amount is equal to or greater than the change execution stored heat amount, a correction to the basic fuel supply table by the fuel table change circuit 110a is executed, and the fuel utilization rate at low generated power is increased. When operated at a raised the fuel utilization rate, the heat amount accumulated in the insulating material 7 is utilized, therefore the accumulated value Ni also declines. In the embodiment, operation at an improved fuel utilization rate can be carried out for approximately 1 to 3 hours.

0120 Next, when occupants return home at time t4, the power demand again increases. The accumulated value Ni increases with some delay (time t4-t5) after the increase in power demand at time t4 and again reaches the maximum value. Next, at time t6 the occupants retire, and an increased fuel utilization rate operation is conducted after the power demand has decreased (time t6 and later).

When the power demand at a residence changes in this manner, operation at an increased fuel utilization rate, in which the heat amount stored in the insulating material 7 is utilized, is carried out twice a day. This period of operation at heightened fuel utilization rate reaches as much as 20-50% of the small generated power period, and improves the overall energy efficiency of the solid oxide fuel cell 1.

0121 In conventional solid oxide fuel cells, when generated power is small, generating heat drops, resulting in a tendency for the fuel cell module temperature to drop. The fuel utilization rate is therefore reduced at times of low generated power, and fuel not used for electrical generation heats the fuel cell module to prevent excessive temperature drops. In particular, in solid oxide fuel cells of type in which the reformer is disposed within the fuel cell module, endothermic reactions occur inside the reformer, increasing the tendency toward temperature drops.

0122 In the solid oxide fuel cell 1 of the present invention, when generated power is small, if it is estimated by the stored heat amount estimating circuit 110b that a usable amount of heat has accumulated in the insulating material 7, the basic fuel supply table is temporarily corrected so that the fuel utilization rate increases (Fig. 11, step S7). Thermal autonomy of the solid oxide fuel cell 1 is thus maintained and overall energy efficiency of the solid oxide fuel cell 1 is improved, while excessive temperature drops are avoided.

0123 Using the solid oxide fuel cell 1 of the present embodiment, settings are made (Fig. 10) so that more heat is accumulated in the insulating material 7 in a temperature region above a predetermined stored heat temperature Th, therefore accumulated heat can be effectively utilized by actively accumulating heat in a region higher than the stored heat temperature Th at which the fuel utilization rate can be raised, consuming this heat at times of small power generation when the fuel cell module 2 temperature is comparatively low and stored heat is easy to utilize, thus effectively using the stored heat.

0124 Using the solid oxide fuel cell 1 of the present embodiment, the detected temperature Td detected by the generating chamber temperature sensor 142 reflects the heat amount stored in the insulating material 7, therefore the basic fuel supply table can be easily corrected using the relationship between detected temperature Td and change reference temperature Tcr.

0125 Using the solid oxide fuel cell 1 of the present embodiment, the change reference temperature Tcr is set higher than the stored heat temperature Th (Fig. 10), therefore stored heat will be used at or above the change reference temperature Tcr, which is higher than the stored heat temperature Th at which there is abundant heat stored in the insulating material 7, so the risk can be avoided of stored heat being used in a low stored heat amount state, causing an excessive temperature drop.

0126 Using the solid oxide fuel cell 1 of the present embodiment, the stored heat amount estimating circuit 110b estimates the stored heat amount based on the history of the detected temperature Td (Fig. 11, step S4, Fig. 13), therefore a more accurate estimate can be made compared to estimation of the stored heat amount using the current detected temperature Td alone, and stored heat can be more effectively used.

0127 Using the solid oxide fuel cell 1 of the present embodiment, the stored heat amount accumulated in the insulating material 7 is estimated by accumulating temperature deviations over time (Fig. 11, step S4, Fig. 13); when the time of operation at a temperature higher than the stored heat temperature Th is long, the estimated stored heat amount is large; when that time is short, the estimated stored heat amount is small, and a more accurate estimation of the stored heat amount can be achieved. The risk of excessive temperature drops and the like due to utilization of stored heat can thus be reliably avoided.

0128 Using the solid oxide fuel cell 1 of the present embodiment, the amount of correction for raising the fuel utilization rate is increased as the stored heat amount increases (Fig. 11, step S4, Fig. 13), therefore correction can be performed to greatly improve the fuel utilization rate while reliably avoiding the risk of excessive temperature drops and the like.

0129 Using the solid oxide fuel cell 1 of the present embodiment, the correction amount is suddenly increased to the extent the detected temperature Td is high, while the correction amount suddenly decreases to the extent the detected temperature Td is low (Fig. 13), therefore a significant fuel utilization rate correction can be made when the detected temperature Td is high, and the compensation amount can be rapidly decreased when the detected temperature Td is low, so excessive temperature drops can be reliably prevented.

0130 Using the solid oxide fuel cell 1 of the present embodiment, the relationship between the estimated stored heat amount and the compensation amount are changed in response to the state of the detected temperature Td or generated power (Fig. 13, 630-640°C; Figs. 14, 15, 18), therefore the two goals of preventing excessive temperature drops and effectively utilizing stored heat can be met.

0131 Using the solid oxide fuel cell 1 of the present embodiment, the fuel table change circuit 110a reduces the compensation amount when the generated power is small (Fig. 15), therefore the amount of stored heat used declines, and the period during which stored heat can be used can be extended.

0132 Using the solid oxide fuel cell 1 of the present embodiment, the estimated value of the stored heat amount drops suddenly when the detected temperature Td is in a declining trend and the difference between the detected temperature Td and the change reference temperature Tcr is at or below a predetermined very small deviation temperature (Fig. 13, 630-632°C), therefore the estimated value for the stored heat amount is rapidly reduced when the detected temperature Td is in a declining phase, and excessive temperature drops can be reliably prevented.

0133 Using the solid oxide fuel cell 1 of the present embodiment, the compensation amount for increasing the fuel utilization rate is changed in response to the state of the fuel cell module 2 (Figs. 14, 15, 16), therefore corrections to the fuel utilization rate not conforming to the state of the fuel cell module 2 can be prevented.

0134 Using the solid oxide fuel cell 1 of the present embodiment, the change reference temperature Tcr is changed to a high value when the fuel cell module 2 degrades (Fig. 16), therefore the fuel utilization rate can be corrected without placing an excessive burden on the fuel cell module 2 when it has degraded and its operating temperature has risen.

0135 Using the solid oxide fuel cell 1 of the present embodiment, the compensation amount is reduced when the fuel cell module 2 degrades (Fig. 16, step S22), therefore promotion of degradation can be suppressed by correcting the fuel utilization rate.

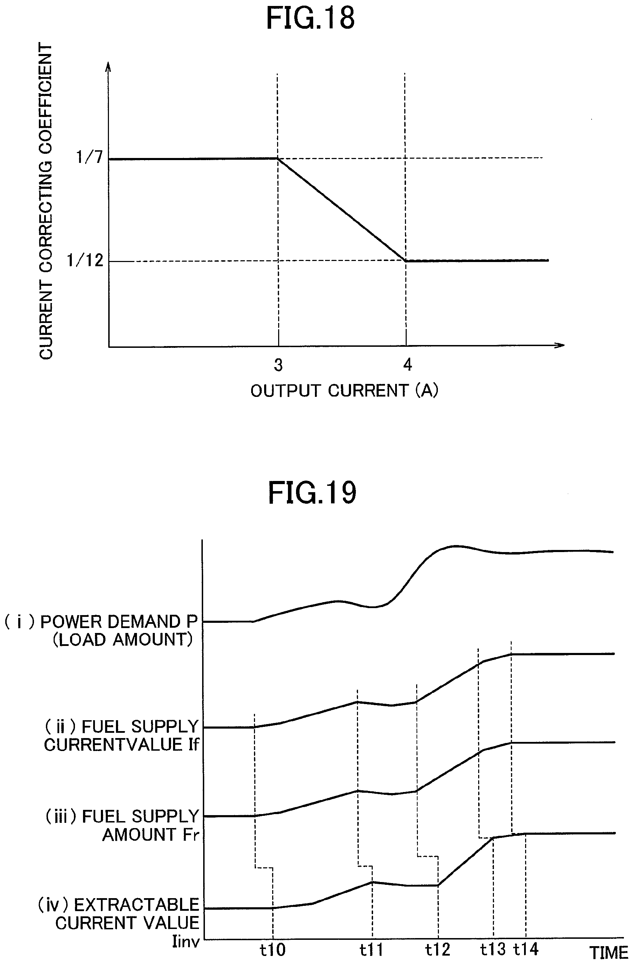

0136 Also, in the above-described first embodiment of the present invention, the calculated add/subtract value to the accumulated value Ni was being calculated based on only the detected temperature Td shown in the stored heat amount estimation table shown in Fig. 12, however as a variant example, the add/subtract value can also be determined by taking into account the output current. For example, the accumulated value Ni can be calculated by accumulating the value obtained by multiplying the add/subtract value determined based on the Fig. 12 stored heat amount estimate table times the current correction coefficient shown in Fig. 18. As shown in Fig. 18, the current correction coefficient is determined as 1/7 for an output current of 3A or below and at 1/12 for 4A or above, and is linearly decreased from 1/7 to 1/12 between 3 and 4A.

0137 By multiplying by the current correction coefficient set in this manner, the accumulated value Ni drops suddenly in the small generated power region, whereas increases and decreases in the accumulated value Ni in the medium generated power and greater region become gradual. Therefore by correcting the basic fuel supply table, the accumulated value Ni is gradually decreased during small power generation, which consumes large amounts of heat accumulated in the insulating material 7. The risk of inducing extraordinary temperature drops by overestimating the stored heat amount can thus be reliably avoided.

0138 In the above-described embodiment the add/subtract value for addition or subtraction to the accumulated value Ni was determined by the detected temperature Td alone, as shown in Fig. 13, but the present invention can also be configured so that the add/subtract value is also dependent on output current. For example, at an output current of 3A or below (an output power of 300W), the change reference temperature Tcr can be raised about 2°C and the entire Fig. 13 graph shifted about 2°C. In this manner the change reference temperature Tcr is changed to a high value when generated power is small, and the estimated stored heat amount is calculated as a small value. The compensation amount for increasing the fuel utilization rate is thus reduced, therefore the fuel utilization rate is greatly improved in the region where generated power is small and the absolute fuel supply amount is low, so that excessive drops in the fuel supply amount can be suppressed.

0139 Next, referring to the Figs. 19 through 33, we discuss a solid oxide fuel cell according to a second embodiment of the present invention.

In the solid oxide fuel cell of the present embodiment, control by the control section 110 is different from that described above for the first embodiment. Therefore here we explain only the portions of the second embodiment of the invention which differ from the first embodiment, and we omit explanation of similar constitutions, operations, and effects.

0140 In the above-described first embodiment the fuel supply amount was determined based on the basic fuel supply table in response to power demand, temporarily changing the determined fuel supply amount so that was reduced based on the heat amount accumulated in the insulating material 7, temporarily increasing the fuel utilization rate. Thus in the solid oxide fuel cell of the second embodiment, no processing is conducted to determine the fuel supply amount based on the basic fuel supply table and change the fuel supply amount based on an estimated stored heat amount; rather, the fuel supply amount is directly calculated based on a detected temperature Td or the like. In the present embodiment, however, the fuel supply amount, directly determined based on the detected temperature Td or the like, takes into account of the heat amount accumulated in the insulating material 7, etc., and the fuel utilization rate is improved by utilizing the stored heat in the state in which the stored heat amount is large, therefore the same technical concept as in the first embodiment can be achieved.

0141 Next, in the above-described first embodiment the change to the fuel supply amount to increase the fuel utilization rate based on the estimated stored heat amount was accomplished by multiplying the change amount by a first correction coefficient (Fig. 11 step S5, Fig. 14), so it was primarily used when generated power was small (at or above a generated power of 4.5A; first correction coefficient = 0). In contrast, in the present embodiment, no use is made of a coefficient corresponding to the first correction coefficient in the first embodiment. Therefore in the present embodiment, high efficiency control utilizing the heat amount accumulated in insulating material 7 is executed not only in the low generated power region, but also in the high generated power region. Therefore in the solid oxide fuel cell of the present embodiment, not only the effect of improving the fuel utilization rate using stored heat, but also the effect of consuming the heat amount accumulated in the insulating material 7, and thereby suppressing temperature rises, is obtained when the fuel cell module 2 rises excessively. Note that in the above-described first embodiment, as well, the first modifying coefficient is omitted (the change amount is not multiplied by the first modifying coefficient), thereby providing the same effect.

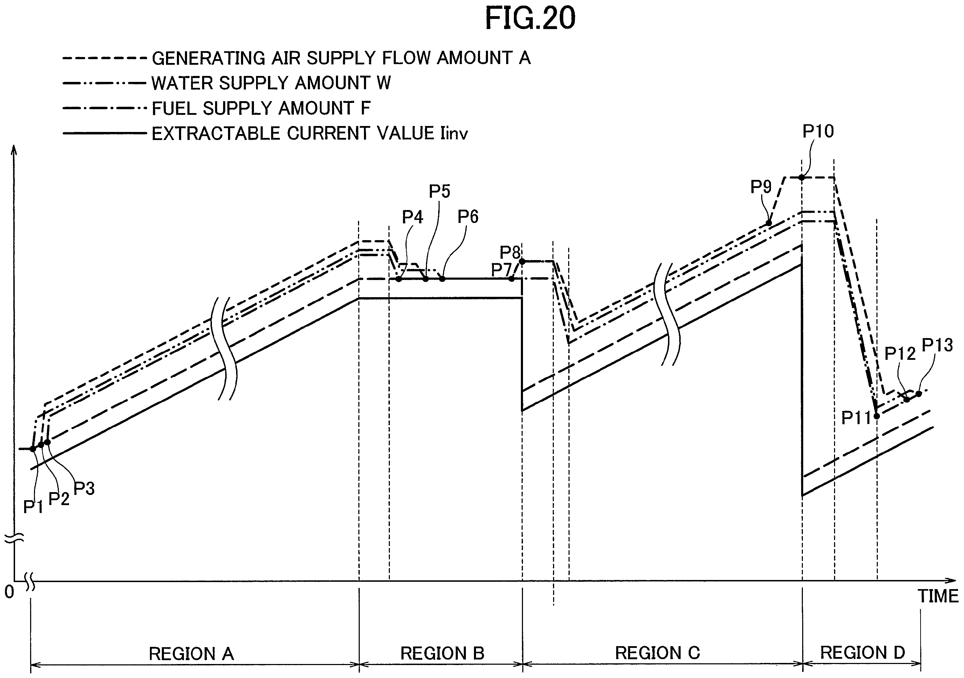

0142 Fig. 19 is a graph schematically showing the relationship between changes in power demand, fuel supply amount, and current actually extracted from a fuel cell module 2. Fig. 20 is a graph showing an example of the relationship between generating air supply amount, water supply amount, fuel supply amount, and current actually extracted from a fuel cell module 2.

0143 As shown in Fig. 19, the fuel cell module 2 is controlled to produce power in accordance with the power demand shown in Fig. 19(i). Based on power demand, the control section 110 sets the fuel supply current value If, which is the target current to be produced by the fuel cell module 2, as shown in Fig. 19(ii). The fuel supply current value If is set to roughly follow changes in power demand, but since the speed of response by the fuel cell module 2 relative to changes in power demand is extremely sluggish, it is set to follow power demand gradually, and does not follow short cycle sudden changes in power demand. When power demand exceeds the maximum rated power of the solid oxide fuel cell, the fuel supply current value If follows up to a current value corresponding to the maximum rated power, and does not get set to current values above that.

0144 The control section 110 controls the fuel flow regulator unit 38 serving as fuel supply device in the manner shown in the Fig. 19(iii) graph, supplying the fuel cell module 2 with a fuel supply amount Fr at a flow volume capable of producing power corresponding to the fuel supply current value If. Note that with a fixed fuel utilization rate, which is the fraction of the fuel actually used to generate electricity relative to the fuel supply amount, the fuel supply current value If and the fuel supply amount Fr are proportional. In Fig. 19, the fuel supply current value If and fuel supply amount Fr are drawn as being proportional, but as described below, in actuality the fuel utilization rate is not fixed in this embodiment either.

0145 Moreover, as shown in Fig. 19(iv), the control section 110 outputs a signal to the inverter 54 to output extractable current Iinv, which is the current value which can be extracted from the fuel cell module 2. The inverter 54 extracts current (power) from the fuel cell module 2 in the range of extractable current Iinv in response to the power demand, which changes rapidly from moment to moment. The portion of power demand exceeding the extractable current Iinv is supplied from the power grid. Here, as shown in Fig. 19, the extractable current Iinv instructed to the inverter 54 by the control section 110 is set to change at a predetermined time delay relative to changes in the fuel supply amount Fr when current is in a rising trend. For example, at time t10 in Fig. 19, the extractable current Iinv begins to increase at a delay after fuel supply current value If and fuel supply amount Fr start to rise. At time t12, as well, the extractable current Iinv starts to increase at a delay after the fuel supply current value If and fuel supply amount Fr increase. Thus delaying the timing at which power actually extracted from the fuel cell module 2 is increased following an increase in fuel supply amount Fr makes it is possible to deal with the time delay which occurs as fuel supplied to the fuel cell module 2 passes through the reformer 20, etc. to reach the individual fuel cell stack 14, and the time delay until the electrical generation reaction is actually possible after fuel reaches the individual fuel cell stack 14, and so forth. Therefore the occurrence of fuel cut-off in each of the fuel cell units 16 and the resulting damage to the fuel cell units 16 can be reliably prevented.

0146 Fig. 20 shows in more detail the relationship between changes in the generating air supply amount, water supply amount, and fuel supply amount vs. the extractable current Iinv. Note that the graphs of the generating air supply amount, water supply amount, and fuel supply amount shown in Fig. 20 are in each case converted to the current values corresponding to those supply amounts. In other words, assuming the supplied generating air, water, and fuel are all set to the supply amounts used for generating electricity without remainder, then each of the supply amount graphs is converted to overlap with the graph of extractable current Iinv. Therefore the amount of mismatch between each of the supply amount graphs and extractable current Iinv corresponds to the surplus portion in each of the supply amounts. The residual fuel remaining without being used for generating electricity is burned in the combustion chamber 18, which is the combustion section above the individual fuel cell stack 14, and is used to heat the interior of the fuel cell module 2.

0147 As shown in Fig. 20, the generating air supply amount, water supply amount, and fuel supply amount are always above the extractable current Iinv; current exceeding the current producible using the respective supply amounts is extracted from the fuel cell module 2, preventing damage to the fuel cell units 16 by fuel cut-off, air cut-off, and the like. With respect to the fuel supply amounts supplied in excess of extractable current Iinv, the water supply amount is set to the supply amount at which all of the supplied fuel can be steam reformed. I.e., in order that all the supplied fuel be steam-reformed, the water supply amount is set with consideration for the ratio S/C between the amount of steam needed for steam reforming and the amount of carbon contained in the fuel. Carbon deposition inside the reformer is thus prevented. In the Fig. 20 regions A and C, in which extractable current Iinv is on an increasing trend associated with the increase in power demand, the amount of margin in the fuel supply amount, etc. is set to be higher than in the B region, where extractable current Iinv is flat. When generated power is increased, the fuel supply amount supplied to the fuel cell module 2 is increased by a power extraction delay circuit 110c (Fig. 6) built into the control section 110, then after a delay the generated power output from the fuel cell module 2 is increased. I.e., the power actually output from the fuel cell module 2 at a delay is changed after the fuel supply amount is changed in response to changes in power demand. In addition, when the extractable current Iinv is suddenly reduced in response to a drop in power demand (region C, beginning of region D), each supply amount is reduced after a predetermined delay time to a level below the extractable current Iinv. Therefore an extremely large amount of residual fuel occurs after a sudden reduction in extractable current Iinv. Thus in cases where the power demand suddenly drops, sudden reductions in extractable current Iinv of this type are implemented to prevent reverse current flow. Thus when increasing generated power and when decreasing generated power, more residual fuel is produced than when generated power is fixed, and this residual fuel is used to heat the fuel cell module 2. Therefore it is not only in cases where the fuel cell module 2 has been operated for long hours at high generated power, but also when generated power is frequently increased and decreased that the fuel cell module 2 is strongly heated, and a large amount of heat is accumulated in the insulating material 7.

0148 In the solid oxide fuel cell of the present embodiment, it is not only when generated power has declined after long operation at high generated power that stored heat is utilized; the heat amount being accumulated by increasing and decreasing generated power, etc. is successively utilized in response to conditions.

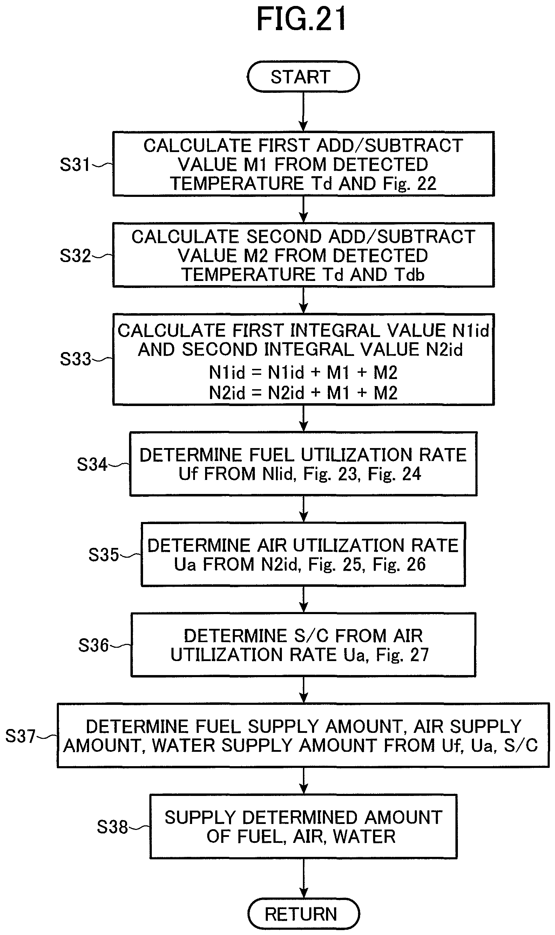

0149 Next, referring to Figs. 21 through 28, we discuss a procedure for determining the generating air supply amount, water supply amount, and fuel supply amount based on the detected temperature Td.

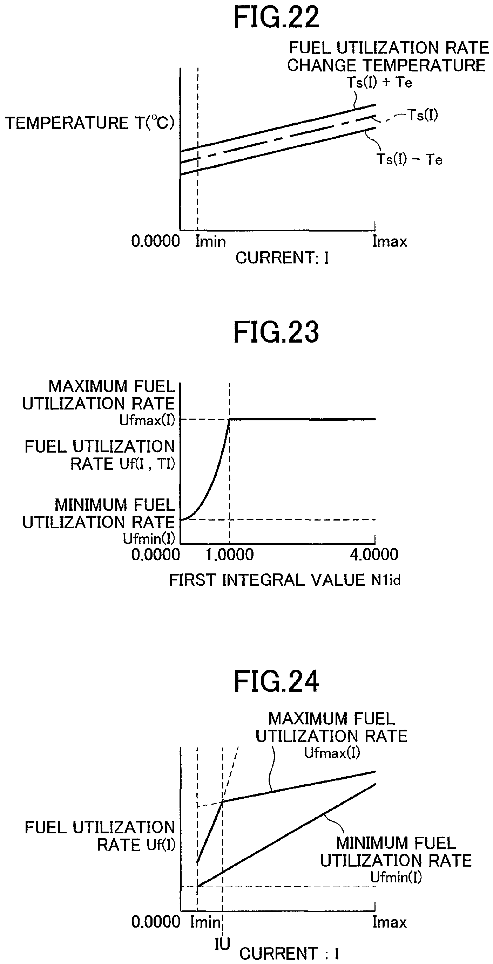

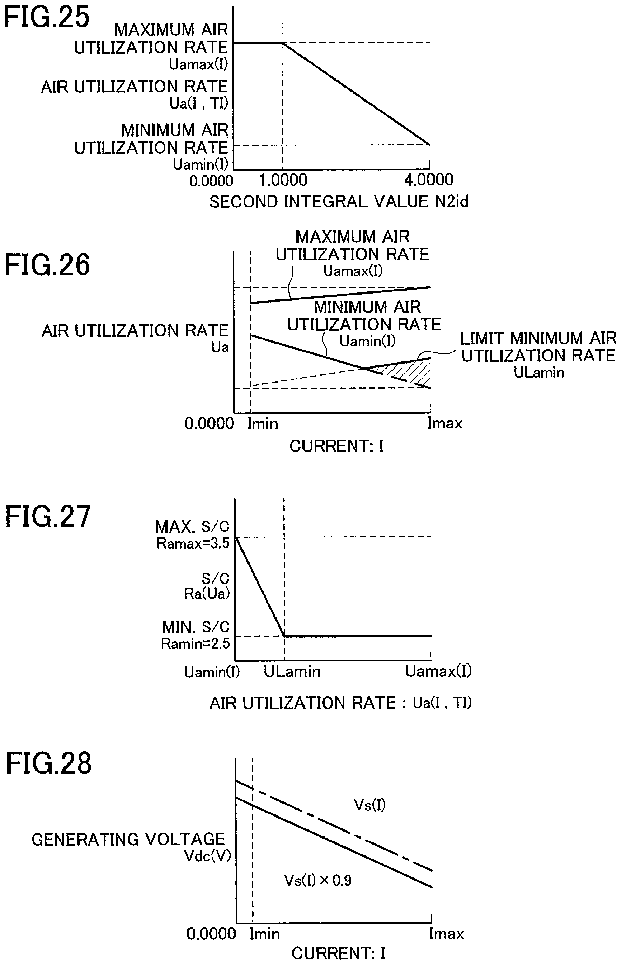

Fig. 21 is a flowchart showing the order in which generating air supply amount, water supply amount, and fuel supply amount are determined based on detected temperature Td. Fig. 22 is a graph showing appropriate fuel cell stack 14 temperature vs. generating current. Fig. 23 is a graph showing the fuel utilization rate determined according to accumulated value. Fig. 24 is a graph showing the range of the fuel utilization rates which can be determined relative to each generating current. Fig. 25 is a graph showing air utilization rate determined according to accumulated value. Fig. 26 is a graph showing the range of air utilization rates which can be determined relative to each generating current. Fig. 27 is a graph for determining water supply amounts vs. a determined air supply utilization rate. Fig. 28 is a graph showing appropriate fuel cell module 2 generating voltage vs. generating current.

0150 As shown by the dot-and-dash line in Fig. 22, in this embodiment an appropriate temperature Ts(I) for the individual fuel cell stack 14 is defined relative to the current to be produced by the fuel cell module 2. The control section 110 controls the fuel supply amount, etc. so that the temperature of the individual fuel cell stack 14 approaches the appropriate temperature Ts(I). Broadly speaking, that is, when the temperature of an individual fuel cell stack 14 is high relative to the generating current generating current (when the individual fuel cell stack 14 temperature is above the dot-and-dash line in Fig. 22), the fuel utilization rate is increased, the heat amount accumulated in the insulating material 7, etc. is actively consumed, and the temperature inside the fuel cell module 2 is reduced. Conversely, when the temperature of the individual fuel cell stack 14 is low relative to the generating current, the fuel utilization rate is reduced, and the temperature inside the fuel cell module 2 is prevented from dropping. Specifically, the fuel utilization rate is not determined simply based on the detected temperature Td alone; the fuel utilization rate is determined by calculating an amount reflecting stored heat by accumulating an add/subtract value determined based on detected temperature Td, etc. The estimation value for the stored heat amount from this accumulation of add/subtract values is calculated by a stored heat estimation circuit 101b incorporated in the control section.

0151 The flow chart shown in Fig 21 determines the generating air supply amount, water supply amount, and fuel supply amount based on the detected temperature Td detected by the generating chamber temperature sensor 142 serving as temperature detection device, and is executed at a predetermined time interval.

0152 First, in step S31 of Fig. 21, an first add/subtract value M1 is calculated based on the detected temperature Td and on Fig. 22. If the detected temperature Td is in a predetermined temperature range relative to the appropriate temperature Ts(I) (between the two solid lines in Fig. 22), the first add/subtract value M1 is set to 0. I.e., when the detected temperature Td is within the range

$$Ts(I) - Te \leq Td \leq Ts(I) + Te,$$

the first add/subtract value M1 is set to 0. Here Te is the first add/subtract threshold temperature. Note that in the present embodiment, the first add/subtract threshold temperature Te is 3°C.

0153 When the detected temperature Td is below the appropriate temperature Ts(I):

$$Td < Ts(I) - Te \qquad\qquad (4)$$

(below the bottom solid line in Fig. 22), the first add/subtract value M1 is calculated by:

$$M1 = Ki \times (Td - (Ts(I) - Te)) \qquad\qquad (5)$$

At this point, first add/subtract value M1 is a negative value (a subtracting value). Note that Ki is a predetermined proportional constant.

0154 When the detected temperature Td is above the appropriate temperature Ts(I) :

$$Td > Ts(I) + Te \qquad\qquad (6)$$

(above the bottom solid line in Fig. 22), first add/subtract value M1 is calculated by:

$$M1 = Ki \times (Td - (Ts(I) + Te)) \qquad\qquad (7)$$

At this point, first add/subtract value M1 is a positive value (an additive value). Thus first add/subtract value is determined based on generating current in addition to detected temperature Td, and the stored heat amount is estimated by accumulating this. The appropriate temperature Ts(l), in other words, is set to differ according to generating current (power), and first add/subtract value M1 is determined to be a positive or negative value based on the value of (Ts(l) + Te) determined based on this appropriate temperature Ts(l), and on the value of (Ts(l) - Te).

0155 Note that when the detected temperature Td exceeds (Ts(l) + Te), the first add/subtract value M1 becomes a positive value, and a change in fuel supply amount is carried out to raise the fuel utilization rate as described below, therefore in this Specification the temperature (Ts(l) + Te) relative to each generated power is referred to as the fuel utilization rate change temperature. By moving to high efficiency control with increased fuel utilization rate by exceeding the fuel utilization rate change temperature (Ts(l) + Te), the timing for restoration from high efficiency control to the target temperature region control at which the accumulated heat amount is not consumed is, as described below, the point at which first accumulated values N1id such as first add/subtract value M1 or the like decrease to 0. Therefore even after the detected temperature Td has dropped below the fuel utilization rate change temperature (Ts(l) + Te), the accumulated value first accumulated value N1id is maintained for a short time at a value greater than 0, and high efficiency control is implemented. Therefore the target temperature region control restore temperature, at which restored from high efficiency control to target temperature region control, is lower than the fuel utilization rate change temperature.

0156 Next, in step S32 of Fig. 21, a second add/subtract value M2 is calculated based on the latest detected temperature Td and the detected temperature Tdb detected one minute earlier. First, when the absolute value of the difference between the latest detected temperature Td and the detected temperature Tdb one minute prior is less than the second add/subtract value threshold value temperature, the second add/subtract value M2 is set to 0. Note that in the present embodiment, the second add/subtract threshold temperature is 1°C.

0157 When the change temperature difference, which is the difference between the latest detected temperature Td and the detected temperature Tdb one minute prior, is equal to or greater than the second add/subtract value threshold value temperature, the second add/subtract value M2 is calculated as:

$$M2 = Kd \times (Td - Tdb) \qquad\qquad (8)$$

This second add/subtract value M2 is a positive value (additive value) when the temperature drops is in a rising trend, and a negative value (subtractive value) when the detected temperature Td is in a falling trend. Note that Kd is a predetermined proportional constant. Therefore in cases where the detected temperature Td is rising, in the region where the change temperature difference (Td - Tdb) is large the second add/subtract value M2, which is a quick response estimate value, is more significantly increased than in the region where the change temperature difference is small. Conversely, in cases where the detected temperature is falling in the region where the absolute value of the change temperature difference (Td-Tdb) is large, the second add/subtract value M2 is more significantly decreased than in the region where the absolute value of the change temperature difference is small.

0158 Note than in the present embodiment the proportional constant Kd is a fixed value, but as a variant example, different proportional constants Kd could be used for the case where the change temperature difference is positive and the case where it is negative. For example, the proportional constant Kd can also be set high when the change temperature difference is negative. Thus the quick response estimate value is changed suddenly relative to the change temperature difference more when the detected temperature is falling then when the detected temperature is rising. As a variant example, the proportional constant Kd can also be set higher in the region where the absolute value of the change temperature difference is high than the region where it is low. This results in the quick response estimate value being more suddenly changed relative to the change temperature difference in the region where the absolute value of the change temperature difference is high than in the region where the absolute value of the change temperature difference is low. It is also possible to combine the change in proportional constant Kd based on whether the change temperature difference is positive or negative, with the change in proportional constant Kd based on the size of the absolute value of the change temperature difference.

0159 Next, in step S33 of Fig. 21, the first add/subtract value M1 calculated in step S31 and the second add/subtract value M2 calculated in step S32 are added to the first accumulated value N1id. In the first accumulated value N1id, the usable stored heat amount accumulated in the insulating material 7 and the like is reflected by first add/subtract value M1, and recent changes in detected temperature Td are reflected by second add/subtract value M2. In other words, the first accumulated value N1id can be used as an estimated value of usable stored heat amount accumulated in insulating material 7 and the like. Accumulation occurs in a continuous manner after the start of operation of the solid oxide fuel cell each time the Fig. 21 flow chart is executed; the first add/subtract value M1 and the second add/subtract value M2 are added or subtracted to the previously calculated first accumulated value N1id, and first accumulated value N1 id is updated to a new value. The first accumulated value N1id is limited to a range of values between 0 and 4; when the first accumulated value N1id reaches 4, the value is held at 4 until the next subtraction occurs; when the first accumulated value N1id has declined to 0, the value is held at 0 until the next addition takes place.

0160 Note that in step S33, the value of a second accumulated value N2id is also calculated, in addition to the first accumulated value N1id. As described below, the second accumulated value N2id is calculated in exactly the same way as the first accumulated value N1 id until degradation occurs in the fuel cell module 2, and the same value as for first accumulated value N1id is taken.

0161 Note that in this embodiment, as described above, an accumulated value is calculated by adding the sum of first add/subtract value M1 and second add/subtract value M2 to the first accumulated value N1 id. I.e., the first accumulated value N1id is calculated using:

$$N1id = N1id + M1 + M2 \qquad (9)$$

As a variant example, an accumulated value can also be calculated by adding the product of the first add/subtract value M1 and the second add/subtract value M2. I.e., in this variant example, first accumulated value N1id is calculated using:

$$N1id = N1id + Km \times M1 \times M2 \qquad (10)$$

Here Km is a variable coefficient which is changed in response to predetermined conditions. In this variant example, when the absolute value of the difference between the latest detected temperature Td and the detected temperature Tdb one minute prior is less than the second add/subtract value threshold value temperature, the second add/subtract value M2 is set to 1.

0162 Furthermore, in step S34 of Fig. 21, the fuel utilization rate is determined using the graphs in Figs. 23 and 24, based on the calculated first accumulated value N1id.

Fig. 23 is a graph showing the setting value for the fuel utilization rate Uf relative to the calculated first accumulated value N1 id. As shown by Fig. 23, when the first accumulated value N1id is 0, the fuel utilization rate Uf is set to the minimum value fuel utilization rate Ufmin. The fuel utilization rate Uf also increases with the increase in first accumulated value N1 id, and at first accumulated value N1id = 1, becomes the maximum value the fuel utilization rate Ufmax. During this interval the slope of the fuel utilization rate Uf is small in the region where first accumulated value N1id is small, and the slope increases as first accumulated value N1id approaches 1. In other words, the fuel utilization rate Uf is changed much more relative to change in the stored heat amount in the region where the estimated stored heat amount is large than in the region where the stored heat amount is small. I.e., the fuel supply amount is reduced so as to greatly increase the fuel utilization rate Uf as the estimated stored heat amount increases. Furthermore, when the first accumulated value N1 id is greater than 1, the fuel utilization rate Uf is fixed at maximum fuel utilization rate Ufmax. The specific values of these minimum fuel utilization rate Ufmin and maximum fuel utilization rate Ufmax are determined using the graph shown in Fig. 24, based on generating current. Thus when it is estimated that a usable amount of heat is accumulated in the heat storing material 7 or the like, the fuel supply amount is reduced so that the fuel utilization rate relative to the same generated power is higher than for the case when a usable amount of heat has not accumulated.

0163 Fig. 24 is a graph showing the range of values obtainable for the fuel utilization rate Uf relative to each generating current; maximum and minimum values for the fuel utilization rate Uf are shown for each generating current. As shown in Fig. 24, the minimum fuel utilization rate Ufmin for each generating current is set to increase as generating current increases. I.e., the setting is made so that the fuel utilization rate is high when generated power is large, and the fuel utilization rate is low when generated power is small. This minimum fuel utilization rate Ufmin straight line corresponds to the basic fuel supply table in Fig. 9 of the first embodiment; when set to a fuel utilization rate on this straight line, the fuel cell module 2 can be thermally autonomous without utilizing the heat amount accumulated in the insulating material 7 or the like.

0164 The maximum fuel utilization rate Ufmax, on the other hand, is set to change in a curved line fashion relative to each generating current. Here the range of values which the fuel utilization rate Uf can assume relative to each generating current (the difference between the maximum fuel utilization rate Ufmax and the minimum fuel utilization rate Ufmin) is narrowest for the maximum generating current, and broadens as generating current declines. This is because in the vicinity of maximum generating current, the minimum fuel utilization rate Ufmin is high at which thermal autonomy is possible, and there is little margin for increasing the fuel utilization rate Uf (decreasing the fuel supply amount) even if stored heat is used. Moreover, because the minimum fuel utilization rate Ufmin at which thermal autonomy is possible declines as generating current declines, the margin for reducing the fuel supply amount by utilizing stored heat increases, and when there is a large amount of stored heat, the fuel utilization rate Uf can be greatly increased.

Therefore the fuel utilization rate is changed over a larger range in the region where generated power is small than in the region where generated power is large.

0165 In the region below a predetermined suppressed utilization rate generation amount IU at which generating current is extremely small, the range of values the fuel utilization rate Uf can assume is set to be smaller as generated power decreases. This means that in the region where generating current is small, the minimum fuel utilization rate Ufmin is low at which thermal autonomy is possible, and there is margin for improvement thereof. However in the region where generating current is small, the temperature inside the fuel cell module 2 is low, therefore when the fuel utilization rate Uf is greatly improved in this state and the stored heat amount accumulated in the insulating material 7 or the like is suddenly consumed, there is a risk of inducing excessive temperature drops inside the fuel cell module 2. Therefore in the region below a predetermined suppressed utilization rate generation amount IU at which generating current is extremely small, the change amount for increasing the fuel utilization rate Uf is greatly suppressed as generated power declines. In other words, the amount of change causing a reduction in the fuel supply amount as the amount of generation by the fuel cell module 2 declines. The risk of sudden temperature drops can thus be avoided, and the accumulated heat amount can be utilized over a long time period.

0166 In the present embodiment the fuel supply amount is reduced by the fuel table change circuit 110a built into the control section 110 so that the fuel utilization rate Uf increases relative to the minimum fuel utilization rate Ufmin. This fuel table change circuit 110a does not change the basic fuel supply table, but acts to raise the fuel utilization rate by changing the fuel supply amount which serves as base, thereby raising the fuel utilization rate, and thus the fuel table change circuit 110a corresponds to the fuel table change circuit in the first embodiment.

0167 In step S34 of Fig. 21, the specific values of minimum fuel utilization rate Ufmin and maximum fuel utilization rate Ufmax are determined using the graph in Fig. 24 based on generating current. Next, applying the determined minimum fuel utilization rate Ufmin and maximum fuel utilization rate Ufmax to the Fig. 23 graph, the fuel utilization rate Uf is determined based on the first accumulated value N1id calculated in step S33.

0168 Next, in step S35 of Fig. 21, an air utilization rate is determined using the Fig. 25 and 26 graphs, based on a second accumulated value N2id.

Fig. 25 is a graph showing setting values for air utilization rate Ua relative to the calculated second accumulated value N2id. As shown in Fig. 25, when the second accumulated value N2id is 0 to 1, the air utilization rate Ua is set to maximum air utilization rate Uamax, which is the maximum value. In addition, as the second accumulated value N2id exceeds 1 and increases, the air utilization rate Ua declines, and at second accumulated value N2id = 4 becomes the minimum air utilization rate Uamin, which is a minimum value. Thus the increased portion of air caused by reducing the air utilization rate Ua acts as a cooling fluid, therefore the setting of the air utilization rate Ua shown in Fig. 25 acts as a forced cooling circuit. The specific values of these minimum air utilization rate Uamin and maximum air utilization rate Uamax are determined using the graph shown in Fig. 26, based on generating current.

0169 Fig. 26 is a graph showing the range of values obtainable for air utilization rate Ua relative to each generating current; the maximum and minimum values for the air utilization rate Ua are shown for each generating current. As shown in Fig. 26, the maximum air utilization rate Uamax for each generating current is set to increase by a very small amount as generating current increases. On the other hand, the minimum air utilization rate Uamin decreases as generating current increases. Reducing the air utilization rate Ua (increasing the air supply amount) more than the maximum air utilization rate Uamax results in the introduction of a larger amount of air into the fuel cell module 2 than is required for generation, causing the temperature inside the fuel cell module 2 to decline. Therefore the air utilization rate Ua is reduced when the temperature in the fuel cell module 2 rises excessively and it is necessary to reduce that temperature. In the present embodiment, reducing the minimum air utilization rate Uamin (increasing the air supply amount) with the rise in generating current causes the air supply amount corresponding to the minimum air utilization rate Uamin to exceed the maximum air supply amount for the generating air flow regulator unit 45 at a predetermined generating current. Therefore in the region in which the minimum air utilization rate Uamin is at or above the predetermined generating current shown by the dotted line in Fig. 26, there are cases when it is not possible to achieve the air utilization rate Ua set by the graph in Fig. 25. In such cases the air supply amount actually supplied is set to the maximum air supply amount for the generating air flow regulator unit 45, regardless of the set air utilization rate Ua. In conjunction with this, the air utilization rate Ua which is actually implemented increases at or above a predetermined generating current. When a generating air flow regulator unit with a larger maximum air supply amount is used, the minimum air utilization rate Uamin for the portion shown by the broken line in Fig. 26 can also be achieved. Note that the air utilization rate Ua defined by reaching the maximum air supply amount for the generating air flow regulator unit 45 is described as the limit minimum air utilization rate ULamin.

0170 In step S35 of Fig. 21, the specific values of the minimum air utilization rate Uamin and maximum air utilization rate Uamax are determined using the graph in Fig. 26, based on generating current. Next, applying the determined minimum air utilization rate Uamin and maximum air utilization rate Uamax to the Fig. 25 graph, the air utilization rate Ua is determined based on the second accumulated value N2id calculated in step S33.

0171 Next, in step S36 of Fig. 21, the ratio S/C of steam amount to carbon amount is determined using Fig.

27, based on the air utilization rate Ua determined in step S35.

Fig. 27 is a graph in which the horizontal axis shows the air utilization rate Ua and the vertical axis shows the ratio S/C of the supplied steam amount to the carbon amount contained in the fuel.

0172 First, in the generating current region in which the air utilization rate Ua set in step S35 is not defined by the maximum air supply amount of the generating air flow regulator unit 45 (between Uamax and ULamin in Fig. 27), the value of the ratio S/C of the steam amount to the carbon amount is fixed at 2.5. Note that a steam amount to carbon amount ratio S/C = 1 means that the entire amount of carbon contained in the supplied fuel is chemically steam reformed by the supplied water (steam), without excess or shortage. Therefore the statement that the steam amount to carbon amount ratio S/C = 2.5 refers to the state in which steam (water) is supplied in an amount 2.5 times the minimum steam amount chemically needed to steam reform the fuel. In actuality, at the steam amount at which S/C = 1, carbon deposition occurs inside the reformer 20, so a steam amount at which S/C = approximately 2.5 is the appropriate amount for steam reforming the fuel.

0173 Next, in the generated current region in which the air utilization rate Ua set in step S35 is limited by the maximum air supply amount of the generating air flow regulator unit 45, the ratio S/C of the steam amount to the carbon amount is determined using the graph in Fig. 27. In Fig. 27 the horizontal axis is the air utilization rate Ua; the air supply amount declines as the air utilization rate Ua increases and approaches the maximum air utilization rate Uamax. When the air utilization rate Ua is reduced, on the other hand, and approaches the minimum air utilization rate Uamin (the dotted line in Fig. 26), the air supply amount reaches a limit, and the air utilization rate Ua goes to the limit minimum air utilization rate ULamin. As shown in Fig. 27, when the air utilization rate Ua is larger (air supply amount is low) than the limit minimum air utilization rate ULamin, the ratio of steam amount to carbon amount is set at S/C = 2.5. Additionally, when the air utilization rate Ua determined in step S35 is smaller (air supply amount is large) than the limit minimum air utilization rate ULamin (between Uamin and ULamin in Fig. 27), the ratio S/C of steam amount to carbon amount increases as the air utilization rate Ua decreases, and at the minimum air utilization rate Uamin it is set to S/C = 3.5. I.e., when the air utilization rate Ua determined in step S35 cannot be achieved using the limit minimum air utilization rate ULamin (when the air utilization rate Ua is determined to be within the range of the sloped line in Fig. 26), the ratio of the steam amount to carbon amount S/C is increased, and the water supply amount is increased. Thus the temperature of the reformed fuel gas discharged from the reformer 20 is reduced, placing the temperature inside the fuel cell module 2 in a declining trend. Thus when the water supply amount is increased after reducing the air utilization rate Ua and increasing the air supply amount, the increased portion of water (steam) acts as a cooling fluid, so that setting the water supply amount shown in Fig. 27 acts as a forced cooling circuit.

0174 In step S37 the specific fuel supply amount, air supply amount, and water supply amount are determined based on the fuel utilization rate Uf, air utilization rate Ua, and ratio S/C of steam amount to carbon amount respectively determined in steps S34, S35, and S36. In other words, the actual fuel supply amount is calculated by dividing the fuel supply amount -- assuming the entire amount is used for electrical generation -- by the determined fuel utilization rate Uf, and the actual air supply amount is calculated by dividing the air supply amount -- assuming the entire amount is used for electrical generation -- by the determined air utilization rate Ua. The water supply amount is calculated based on the calculated fuel supply amount and on the ratio S/C of the steam amount and carbon amount determined in step S36.

0175 Next, in step S38, the control section 110 sends signals to the fuel flow regulator unit 38, the generating air flow regulator unit 45, and the water flow regulator unit 28 serving as water supply device, and supplies the amounts of fuel, air, and water calculated in step S37, thereby completing the processing of one iteration of the Fig. 21 flow chart.

0176 Next we discuss the time intervals at which the Fig. 21 flow chart is executed. In the present embodiment the Fig. 21 flow chart is executed every 0.5 seconds when the output current is large, and as output current falls, is executed at twice that amount or 1 second, 4 times that amount or every 2 seconds, and 8 times that amount or every 4 seconds. Thus when the first and second add/subtract values are a fixed value, the change in the first and second add/subtract values per unit time becomes more gradual as output current declines. I.e., the stored heat amount estimating circuit 110b changes the estimated value of the stored heat amount per unit time more suddenly as output current (output power) increases. The estimate of the stored heat amount resulting from the accumulated value thus accurately reflects the actual stored heat amount.

0177 Next, referring to Fig. 28, we discuss the procedure for determining the fuel supply amount, air supply amount, and water supply amount when the fuel cell module 2 has degraded. Fig. 28 is a diagram showing generated voltage relative to generated current by the fuel cell module 2. In general there is internal resistance present in the individual fuel cell stack 14, therefore as shown in Fig. 28, the voltage drops when the current output from the fuel cell module 2 increases. The dot-and-dash line shown in Fig. 28 shows the relationship between generated current and generated voltage when no degradation of the fuel cell module 2 has occurred. In contrast, when the fuel cell module 2 does degrade, internal resistance in the individual fuel cell stack 14 rises, so generated voltage declines relative to the same generated current.

0178 In the solid oxide fuel cell of the present embodiment, when the generated current drops by 10% or more relative to initial generated voltage, and the generated voltage enters the region below the solid line in Fig. 28, the fuel supply amount, air supply amount, and water supply amount are determined by processing in a manner suited to degradation.

0179 I.e., when the generated voltage is in the region below the solid line in Fig. 28, the accumulation of first accumulated value N1id is stopped at step S33 in Fig. 21, and only the accumulation of second accumulated value N2id is continued. The value of first accumulated value N1 id used when referring to the Fig. 23 graph to determine the fuel utilization rate Uf is thus fixed at a constant value. The fuel utilization rate Uf is therefore fixed until the generated voltage gets out of the region below the solid line in Fig. 28. Thus changes to increase the fuel utilization rate Uf are reduced more after degradation of the fuel cell module 2 than prior to degradation of the fuel cell module 2. At the same time, the second accumulated value N2id used when referring to the Fig. 26 graph to determine the air utilization rate Ua is reduced as in the past, and increases and decreases in the air utilization rate Ua are continued. The fuel utilization rate Uf is changed based on degradation of the fuel cell module 2, in addition to the first and second addition values and power demand corresponding to estimated stored heat amount.

0180 Next we discuss the operation of a solid oxide fuel cell implemented using the Fig. 21 flow chart.

First, when the value of the first accumulated value N1id calculated in step S33 is 0, the fuel utilization rate Uf determined in step S34 is set at the minimum fuel utilization rate Ufmin (fuel supply amount maximum) for that generated current. Thus even in a state in which the first accumulated value N1 id is 0, and the stored heat accumulated in the insulating material 7 or the like is small, sufficient fuel is supplied for the fuel cell module 2 to achieve thermal autonomy. When the value of the second accumulated value N2id calculated in step S33 is 0, as for the first accumulated value N1 id, the air utilization rate Ua determined in step S35 is set at the maximum air utilization rate (air supply amount minimum) for that generated current. Therefore cooling of the individual fuel cell stack 14 can be minimized by the generating air introduced into the fuel cell module 2, and the temperature of the individual fuel cell stack 14 can be placed on a rising trend.

0181 Next, when the fuel cell module 2 is operated in a state whereby the detected temperature Td is higher than the appropriate temperature Ts(I), and Td > Ts(I) + Te, the value of the first add/subtract value M1 becomes positive, and the value of first accumulated value N1id becomes greater than 0. Thus in Fig. 23, a fuel utilization rate Uf higher than the minimum fuel utilization rate Ufmin is set and the fuel supply amount is reduced, and the amount of residual fuel remaining and not used to generate electricity is reduced. The fuel utilization rate Uf is greatly increased by the control section 110 as the value of the first accumulated value N1id corresponding to the estimated stored heat amount increases. By increasing the fuel utilization rate Uf, the fuel supply amount is reduced to below a supply amount at which thermal autonomy is possible, and high efficiency control utilizing the heat amount accumulated in the insulating material 7 and the like is executed. The amount of residual fuel is reduced and the heat amount accumulated in the insulating material 7 or the like is utilized, therefore the fuel table change circuit 110a suppresses the rise of the temperature in the fuel cell module 2 while continuing to generate electricity. When operation is continued in the Td > Ts(I) + Te state, addition of the positive value first add/subtract value M1 is repeated, and the value of the first accumulated value N1id also increases. When the first accumulated value N1id reaches 1, the fuel utilization rate Uf is set to the maximum fuel utilization rate Uafmax (fuel supply amount minimum). Fuel supplied to the fuel cell module 2 is determined based on the past history of the detected temperature Td, which reflects the heat amount accumulated in the insulating material 7 or the like.

0182 Even when the first accumulated value N1 id further increases and exceeds 1, the fuel utilization rate Uf is maintained at the maximum fuel utilization rate Uafmax (fuel supply amount minimum), as shown in Fig. 23. On the other hand, when the second accumulated value N2id, which takes the same value as the first accumulated value N1id (when the fuel cell module 2 is not degraded), also exceeds 1, so the air utilization rate Ua declines (air supply amount increases) based on Fig. 25. Thus the inside of the fuel cell module 2 is placed in a cooling trend due to the increase of supplied air.

0183 By contrast, when the fuel cell module 2 is operated in a state whereby the detected temperature Td is lower than the appropriate temperature Ts(I), and Td < Ts(I) - Te, the value of the first add/subtract value M1 becomes negative, and the value of first accumulated value N1 id is reduced. The fuel utilization rate Uf is therefore maintained (first accumulated value N1 id > 1) or decreased (first accumulated value N1id ≤ 1). Also, the air utilization rate Ua increases (second accumulated value N2id > 1) or is maintained (second accumulated value N2id ≤ 1). The temperature inside the fuel cell module 2 can thus be set on a rising trend.

0184 The above describes the operation of a solid oxide fuel cell focusing only on the first add/subtract value M1 calculated based on the history of the detected temperature Td, but first accumulated value N1 id and second accumulated value N2id are also influenced by the second add/subtract value M2. The heat capacity of the fuel cell module 2, and in particular the individual fuel cell stack 14, is extremely large, and changes in the detected temperature Td thereof are extremely sluggish. Therefore once the detected temperature Td enters a rising trend, it is difficult to suppress that temperature rise in a short time period, and when the detected temperature Td enters a falling trend, as well, a long period of time is required to return it to a rising trend. Therefore a rising or falling trend appearing in the detected temperature Td requires an immediate response by modifying the first and second accumulated values.

0185 I.e., when the latest detected temperature Td is above the detected temperature Tdb one minute prior by an amount equal to or greater than the second add/subtract value threshold value temperature, the second add/subtract value M2 becomes a positive value, and the first and second accumulated values are increased. This allows the fact that the detected temperature Td is in a rising trend to be reflected in the first and second accumulated values. Similarly, when the latest detected temperature Td is above the detected temperature Tdb one minute prior by an amount equal or greater than the second add/subtract value threshold value temperature, the second add/subtract value M2 becomes a negative value, and the first and second accumulated values are decreased. In other words, the second add/subtract value M2, which is the quick response estimate value, is calculated by the change temperature difference, which is the difference between the latest detected temperature Td detected by the generating chamber temperature sensor 142 and the past detected temperature Tdb. Therefore when the detected temperature Td is suddenly dropping, the change amount increasing the fuel utilization rate Uf is more suppressed than when it is gradually dropping, and since in the region where generated power is below the suppressed utilization rate generation amount IU, the maximum fuel utilization rate Ufmax is also set low, and the change amount is greatly suppressed. This allows the fact that the detected temperature Td is in a falling trend to be reflected in the first and second accumulated values. Thus in the present embodiment the stored heat amount is estimated based on an accumulated value for the add/subtract determined based on detected temperature, and on the differential value between the newly detected temperature and past detected temperatures. I.e., in the present embodiment the stored heat amount is estimated by the stored heat amount estimating circuit 110b based on the accumulated value of the first add/subtract value M1, which is a basic estimated value calculated based on the history of detected temperatures Td, and based on the second add/subtract value M2, which is a quick response estimate value calculated based on the rate of change in the detected temperature Td over a period of time shorter than history of the basic estimated value calculation. Thus in the present embodiment, the stored heat amount is estimated based on the sum of the basic estimated value and the quick response estimate value.

0186 Note that temperature changes in the fuel cell module 2 are extremely slow compared to the 1 minute detection interval for detected temperatures Td and Tdb, so it is often the case that the second add/subtract value M2 is 0. Therefore the first and second accumulated values are primarily dominated by the first add/subtract value M1, and the second add/subtract value M2 acts to modify the values of the first and second accumulated values when a rising or falling trend appears in the detected temperature Td. Thus in addition to the detected temperature history, changes in recent detected temperatures Td are also taken into account to the stored heat amount estimated value using the second add/subtract value M2. Therefore when the change in recent detected temperatures Td is large (a change equal to or larger than the second add/subtract value temperature recovery temperature) the second add/subtract value M2 has a value, but the stored heat amount estimated value is modified, and the fuel utilization rate Uf is greatly changed.

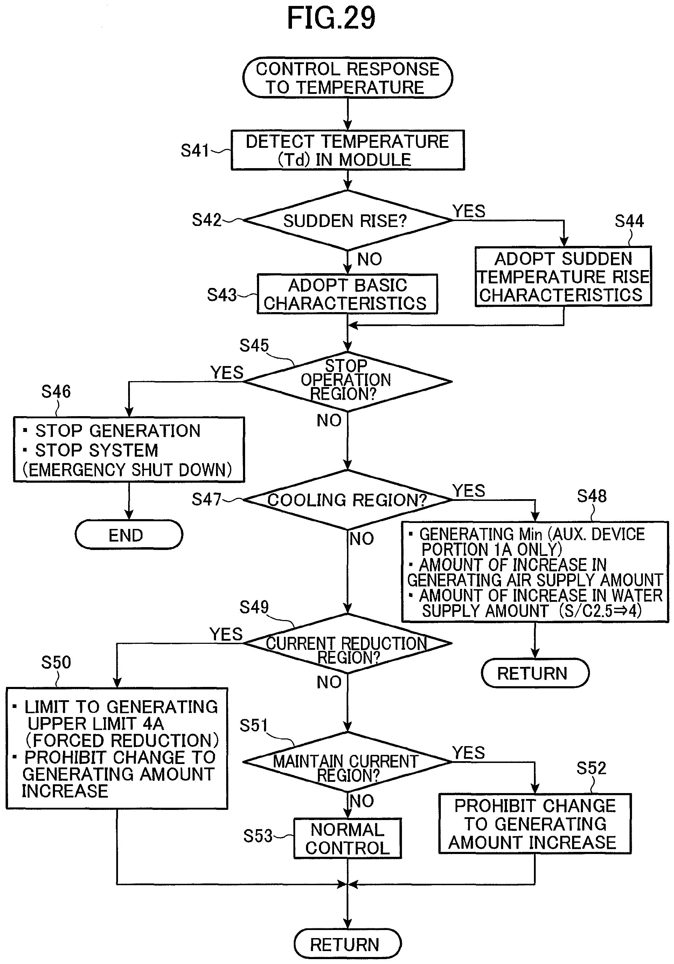

0187 Next, referring to Figs. 29 through 32, we discuss limitations to the variable range of generated power.

As described above, in the solid oxide fuel cell of the present embodiment, utilizing the heat amount accumulated in the insulating material 7 or the like allows the fuel utilization rate to be increased and the temperature inside the fuel cell module 2 to be controlled to an appropriate temperature by actively utilizing stored heat. As explained using Figs. 19 and 20, frequent increases and decreases in the power produced by the fuel cell module 2 to match the power demand can cause the temperature inside the fuel cell module 2 to rise excessively. It is possible to suppress such excessive temperature rises by increasing the fuel utilization rate and actively utilizing the heat amount accumulated in the insulating material 7 or the like. As explained using Fig 24, however, in the region where the power generated is large, the set minimum fuel utilization rate Ufmin is a large value, so there is little room for increasing the fuel utilization rate and utilizing stored heat. Therefore when generated power is large, it is difficult to effectively reduce an excessively raised temperature inside the fuel cell module 2 even by increasing the fuel utilization rate and utilizing stored heat. For this reason, when an excessive temperature rise occurs in the fuel cell module 2 in the present embodiment, the variable range in which generated power is made to follow power demand is restricted to a low level. Since this causes the fuel cell module 2 to be operated at a small generated power, the margin for utilizing stored heat increases, making it possible to effectively lower the temperature inside the fuel cell module 2. By narrowing the variable range in which generated power is made to follow power demand, temperature rises caused by frequent increases and decreases in generated power are suppressed.

0188 Note that temperature rises inside the fuel cell module 2 caused by frequent increases and decreases in power demand, as explained in Figs. 19 and 20, also occur in the solid oxide fuel cell of the first embodiment of the present invention described above. Therefore, referring to Figs. 29 through 32, the limitation on the variable range of generated power explained below can be implemented in combination with the above-described first embodiment of the present invention.

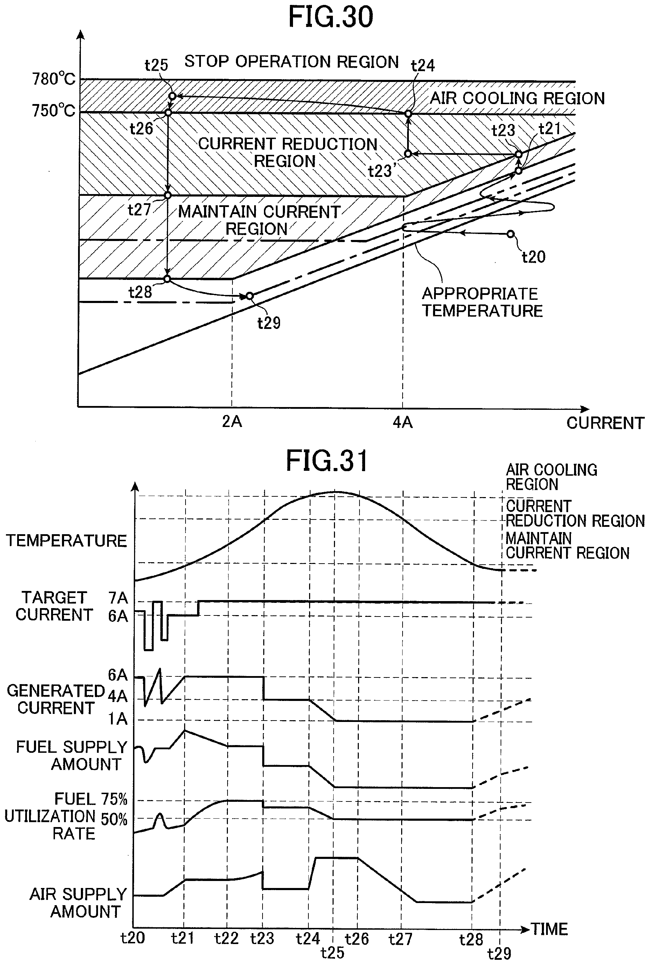

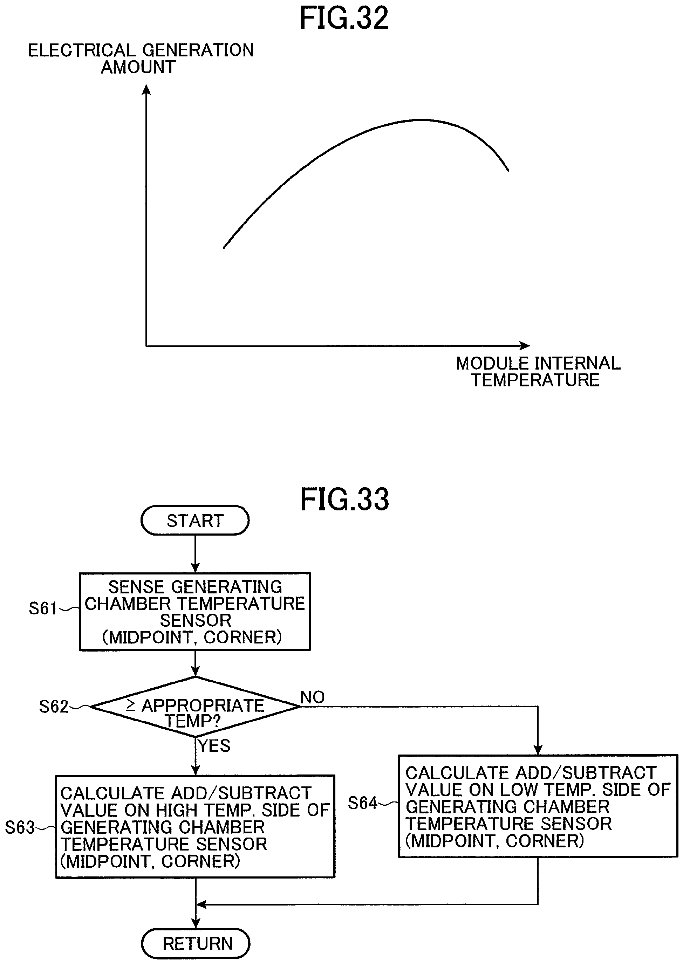

0189 Fig. 29 is a flowchart showing a procedure for limiting the range of power produced by the fuel cell module in the present embodiment. Fig. 30 is a map showing current limits vs. generated current and detected temperature Td. Fig. 31 is a timing chart showing an example of the effect of the second embodiment of the present invention. Fig. 32 is a graph showing an example of the relationship between temperature inside the fuel cell module and maximum generatable power.

0190 First, as shown by the solid line in Fig. 30, in the solid oxide fuel cell of the present embodiment an appropriate temperature is set in the fuel cell module 2 for each generated current. This appropriate temperature corresponds to the dot-and-dash line in Fig. 22. As shown in Fig. 30, a current maintaining region is set in the region where the temperature is above the appropriate temperature. The minimum temperature in this current maintaining region is set to differ according to generated power from the fuel cell module 2, and the current maintaining region minimum temperature is set to increase as generated power increases. The minimum temperature in the current maintaining region with respect to each generated power is set so that the difference relative to the appropriate temperature for the fuel cell module 2 increases as generated power decreases. When the operating state of fuel cell module 2 enters this current maintaining region, the output current from the fuel cell module 2 is prohibited from increasing. Furthermore, a current reduction region is set in the region where the temperature is higher than the current maintaining region. When the operating state enters this current reduction region, the output current from the fuel cell module 2 is forcibly reduced. An air cooling region is set in the region where the temperature is above the current reduction region. When the operating state enters this air cooling region, the generating air supply amount is set to the maximum flow volume suppliable by the generating air flow regulator unit 45. A stop operation region is set in the region in which the temperature is higher than the air cooling region. When the operating state enters this stop operation region, power generation by the fuel cell module 2 is stopped to prevent malfunctioning of the solid oxide fuel cell.

0191 Moreover, when the detected temperature Td has risen suddenly, the temperature demarcating the current maintaining region is lowered as shown by the dot-and-dash line in Fig. 30. In such cases, the temperature demarcating a current reduction region is lowered as shown by the double dot-and-dash line in Fig. 30. Thus when the detected temperature Td suddenly rises, current limiting is quickly implemented, thereby reliably suppressing excessive temperature rises.

0192 Next, referring to Fig. 29, we discuss the procedure for limiting current produced by the fuel cell module.

First, the detected temperature Td is read in step S411 of Fig. 29. Next, in step S42, the detected temperature Td read in step S41 and the detected temperature Td from a predetermined previous time are compared. If the difference between the detected temperature Td read in step s41 and the detected temperature Td from a predetermined previous time is at or below a predetermined threshold temperature, the system advances to step S43.

0193 In step S43, the basic characteristics shown by the solid line in Fig. 30 are selected as a map for determining a temperature region. At the same time, if the difference between the latest detected temperature Td and the detected temperature Td at a predetermined previous time is larger than the predetermined threshold temperature, the system advances to S44; in step S44 the suddenly rising temperature characteristics shown by the dot-and-dash line and the double dot-and-dash line in Fig. 30 is selected as the map for determining the temperature region.

0194 Next, in step S45, a judgment is made as to whether the detected temperature Td is within the stop operation region. In this embodiment, if the detected temperature Td is at or above 780°C, the temperature is judged to be in the stop operation region. When it is judged that the detected temperature Td is within the stop operation region, the system advances to step S46. In step S46, power generation by the fuel cell module 2 is stopped, and an emergency stop of the solid oxide fuel cell system is effected.

0195 On the other hand, if it is judged in step S45 that the detected temperature Td is not within the stop operation region, the system advances to step S47. In step S47 a judgment is made as to whether the detected temperature Td is within the air cooling region. In the present embodiment when the detected temperature Td is 750°C or greater, it is judged to be in the air cooling region. When it is judged that the detected temperature Td is within the air cooling region, the system advances to step S48.

0196 In step S48, the generated current is fixed at the minimum current of 1A; this current is consumed by the auxiliary unit 4 without being output to the inverter 54. The generating air supply amount is set to the maximum flow volume suppliable by the generating air flow regulator unit 45. The water supply amount is also increased and the steam and carbon amounts set to a ratio of S/C = 4, completing the processing of one iteration in the Fig. 29 flow chart.

0197 On the other hand, if it is judged in step S47 that the detected temperature Td is not within the air cooling region, the system advances to step S49. In step S49 a judgment is made of whether the detected temperature Td and the generated current are within the current reduction region; if within the current reduction region, the system advances to step S50.

0198 In step S50, the generated current from the fuel cell module 2 is forced to 4A or below. In other words, the upper limit value of the generated power from the fuel cell module 2 is reduced to a temperature rise-suppressing power (400W), which is higher than 1/2 the maximum rated power of 700W. Thereafter when power demand declines, the upper limit value of the generated power (current), following the power demand, is reduced, and generated current is maintained, not increased, even if power demand grows. One iteration of the processing in the flow chart of Fig. 29 is thus completed. This type of limitation on generated current continues until the detected temperature Td and generated current go outside the current reduction region.

0199 On the other hand, if a judgment is made in step S49 that the detected temperature Td and the generated current are not within the current reduction region, the system advances to step S51. In step S51 a judgment is made of whether the detected temperature Td and the generated current are within the current maintain region; if within the current reduction region, the system advances to step S52.

0200 In step S52, increases in the generated current are prohibited, and thereafter the generated current is maintained without increase, even if power demand grows. Subsequently when power demand declines, the upper limit value of generated current (power), following the drop in power demand, is reduced, and the upper limit of generated current (power) is maintained, not raised, even if power demand grows. This type of limitation on generated current continues until the detected temperature Td and generated current go outside the maintain current region and the excessive temperature rise of the fuel cell module 2 is resolved. One iteration of the processing in the flow chart of Fig. 29 is thus completed.

0201 In the present embodiment, restrictions on generated power are started when the detected temperature Td exceeds the maintain current region minimum temperature for each of the generated currents, so the minimum temperature in the maintain current region relative to each generated current is referred to as the generated power restriction temperature (Fig. 30). This generated power restriction temperature is set in the present embodiment to be higher than the fuel utilization rate change temperature (Ts(I) + Te) (Fig. 22) at which a change to increase the fuel utilization rate is started.

0202 On the other hand, if a judgment is made in step S51 that the detected temperature Td and the generated current are not within the maintain current region, the system advances to step S53. At step S53, limits on generated current are not executed, and control utilizing stored heat is executed.

0203 Next, referring to Fig. 31, we discuss an example of a generated current limitation.

The timing chart shown in Fig. 31 schematically depicts, in order from the top, changes in detected temperature Td, target current, generated current, fuel supply amount, fuel utilization rate, and air supply amount. Target current here refers to the current obtained from power demand and generated voltage.

0204 First, at time t20 in Fig. 31, the generated current is approximately 6A, and the detected temperature Td is in a state slightly below the appropriate temperature at a generated current of 6A (corresponding to t20 in Fig. 30).

Next, at times t20-t21, because of the repeated larger increases and decreases in power demand over a short period, target current also greatly increases and decreases, and generated current also increases and decreases to follow. By contrast, the fuel supply amount, as explained in Fig. 20, is held for a predetermined time after the generated current has declined, and is increased ahead of the increase in generated current, thus becoming excessive relative to generated current, resulting in a large amount of residual fuel. This residual fuel is used to heat the interior of the fuel cell module 2, therefore at times t20-t21 the detected temperature Td is in a rising trend.

0205 Furthermore, at time t21 the detected temperature Td reaches the maintain current region temperature for a generated current of approximately 6A (t21 in Fig. 30, corresponds the transition from step S51 → S52 in Fig. 29). Step S52 in Fig. 29 is thus executed; thereafter increases in generated current are prohibited, and generated current is maintained. Therefore at times t21-t22 the target current is growing to approximately 7A, but the generated current is maintained at approximately 6A. By prohibiting increases in generated current, the upper limit value of the variable range of generated power is reduced, and the variable range is narrowed, causing the amount of residual fuel associated with changes in power demand to decline. Thus step S52 of Fig. 29, where the residual fuel amount is reduced while continuing electrical generation, is acting as a circuit for suppressing temperature rises. Step S51 judges whether step S52, which acts as a temperature rise-suppressing circuit, is executed, and acts as an over-rise estimating circuit for estimating the occurrence of excessive temperature rises in the fuel cell module 2.

0206 At times t21-t22, moreover, the detected temperature Td rises, therefore the first add/subtract value M1 becomes a positive large value, and the first accumulated value N1 id value also increases remarkably. The fuel supply amount is thus reduced to increase the fuel utilization rate Uf (Fig. 23). This increase in the fuel utilization rate Uf also acts to reduce the amount of residual fuel and lower the temperature inside the fuel cell module, thus acting as a temperature rise-suppressing circuit. Note that at times t21-t22, the fuel utilization rate Uf is increased and the heat amount accumulated in the insulating material 7 or the like is actively consumed, but because the thermal capacity of the fuel cell module 2 is extremely large, the detected temperature Td continues to rise.

0207 Next, at time t22, the increased fuel utilization rate Uf reaches the maximum fuel utilization rate Ufmax (= 75%), which is the maximum fuel utilization rate at a generated current of approximately 6A (first accumulated value N1 id = 1 in Fig. 23; Fig. 24). At time t22 the fuel utilization rate Uf is raised up to the maximum fuel utilization rate Ufmax, therefore at times t22-t23, the fuel utilization rate Uf is maintained at the maximum fuel utilization rate Ufmax. On the other hand at times t22-t23, the detected temperature Td is still continuing to rise, therefore the value of the second accumulated value N2id (same value as the first accumulated value N1 id) also grows. Associated with this, the air utilization rate Ua is reduced (N2id in Fig. 25 > 1); i.e., the air supply amount is increased.

0208 In addition, at time t23 the detected temperature Td reaches the current reduction region at a generated current of approximately 6A (corresponding to step S49 → S50 in Fig. 29). This causes step S50 in Fig. 29 to be executed, with the generated current suddenly reduced from approximately 6A to 4A (t23 → t23' in Fig. 30), the upper limit value of the generated power variable range further reduced, and the variable range further narrowed. Therefore the fuel utilization rate Uf is reduced very slightly from the maximum fuel utilization rate Ufmax at a generated current of 6A to a maximum fuel utilization rate Ufmax at a generated current of 4A (Figs. 24, 31). Note that at time t23, the fuel utilization rate Uf is lowered, but since the generated current is reduced to 4A, the absolute amount of the fuel supply amount and the absolute amount of the residual fuel are lowered. Since the fuel utilization rate Uf is maintained at a maximum fuel utilization rate Ufmax with the generated current in a reduced state, consumption of the accumulated heat amount is further promoted. By reducing generated current in this way, step S50 in Fig. 29, which reduces the amount of residual fuel while continuing generation, also acts as a temperature rise-suppressing circuit. However detected temperature Td still rises at times t23-t24.

0209 Next, at time t24 the detected temperature Td reaches the air cooling region temperature (step S47 → S48 in Fig. 29, corresponding to t24 in Fig. 30). Step S48 in Fig. 29 is thus executed, and the air supply amount is increased to the maximum air supply amount for the generating air flow regulator unit 45. Generated current is gradually reduced from 4A to 1A. Thereafter, the generated current reduced to 1A, which is the temperature rise-suppressing generation amount, is maintained at a fixed level until the detected temperature Td declines to a temperature below the current maintain region. The generated current which has been reduced to 1A is entirely consumed by the auxiliary unit 4 and not output to the inverter 54. With the drop in generated current, the fuel utilization rate Uf is reduced from the maximum fuel utilization rate Ufmax at a generated current of 4A to a maximum fuel utilization rate Ufmax (= 50%) at a generated current of 1A (Fig. 24).

0210 Thus at step S50 in Fig. 29, which is the temperature rise-suppressing circuit, temperature rises reducing the amount of residual fuel are suppressed, following which, when suppression of further temperature rises is required, supplied air is increased. The portion of air increased beyond the supply amount needed for electrical generation acts as a cooling fluid flowing into the fuel cell module 2, so step S48 in Fig. 29 functions as a forced cooling circuit.

0211 On the other hand if by executing step S50, which is the temperature rise-suppressing circuit for reducing the amount of residual fuel, the detected temperature Td drops without reaching the temperature of the air cooling region, cooling by step S48, which is the forced cooling circuit, is not executed. Therefore a determination of whether or not to execute a suppression of temperature rises by the forced cooling circuit is made based on temperature changes in the fuel cell module 2 after suppressing rises by the temperature rise-suppressing circuit.

0212 After time t24 the rise in detected temperature Td is continued, but at time t25 this shifts to a decline (t24 → t25 in Fig. 30). Thereafter the detected temperature Td declines, and at time t26 declines to the upper limit temperature of the current reduction region (t25 → t26 in Fig. 30). Reduction of the air supply amount is thus begun.

0213 Next, at time t27, the temperature declines to the upper limit temperature of the maintain current region (t26 → t27 in Fig. 30). The detected temperature Td continues to further decline, and at time t28 declines to the lower limit temperature of the maintain current region (t27 → t28 in Fig. 30).

0214 At time t28, when the temperature drops leaves the current maintain region, the generated current begins to increase in order to follow the target current. In conjunction with this, the fuel supply amount also increases. The fuel utilization rate Uf increases, adopting a maximum fuel utilization rate Ufmax corresponding to each generated current.

0215 Note that in the above-described embodiment, temperature rises were suppressed by lowering the upper limit of the generated power variable range according to the temperature inside the fuel cell module 2, but it is also possible as a variant example to suppress temperature rises by lowering the frequency of increases and decreases in generated power. I.e., when the temperature inside the fuel cell module 2 has risen, further temperature rises can be suppressed by reducing following of the rise in power demand and reducing following characteristics which increase generated power. When following characteristics relative to increases in power demand are reduced, generated power increases more sluggishly when power demand increases. Therefore when the power demand has increased and decreased often, the range of increase and decrease in generated power attempting to follow this becomes smaller, and the frequency of increases and decreases is also reduced, so that the amount of residual fuel occurring similarly declines. Therefore the decline in following characteristics relative to the increase in power demand continues until the excessive temperature rise inside the fuel cell module 2 is eliminated.

0216 Alternatively, limits can also be placed on the frequency per unit time at which the generated power is increased to follow increases in the power demand. In this case a limitation is placed on the number of times per predetermined time unit which generated power can switch to a rising trend; when the number of times per predetermined time is large, generated power is controlled so as not to allow generated power to follow the increase in power demand.

0217 In the above-described embodiment, the generated current upper limit was lowered to 4A when the detected temperature Td reached the current reduction region, but it is also possible, as a variant example, to make variable the upper limit of the generated power. For example, the generated power upper limit value, which is reduced more as the temperature inside the fuel cell module 2 increases, can be set low.

0218 Next, referring to Fig. 32, we discuss the relationship between the temperature inside the fuel cell module 2 and maximum generatable power.

As discussed above, there is a correlation between fuel cell module 2 generated power (current) and appropriate temperature inside the fuel cell module 2, and to obtain a large generated power requires raising the temperature inside the fuel cell module 2. However when the fuel cell module 2 is in a temperature region over 700°C, which is higher than the appropriate temperature relative to generated power, the characteristics of the individual fuel cell stack 14 are such that the potential produced by the fuel cell units 16 declines. Therefore when a large current is extracted from the individual fuel cell stack 14 in order to obtain a large power, the individual fuel cell stack 14 temperature further rises, and the potential produced falls, resulting in the phenomenon that output power does not increase even though current is increased. As a result, in the region in which the temperature in the fuel cell module 2 is high, the generatable maximum power actually declines when the temperature rises, as shown in Fig. 32. When an attempt is made to extract the maximum rated power from the fuel cell module 2 in this type of temperature region, current is increased in order to increase extracted power; this current rise further increases the temperature of the fuel cell module 2 and reduces the power extracted from same. When such a state continues, attempting to obtain a predetermined rated power tends to induce a thermal runaway causing a sudden temperature rise in the fuel cell module 2.

0219 In the present embodiment, thermal runaways can be prevented in advance in the region where the temperature inside the fuel cell module 2 is higher than the appropriate temperature by maintaining or lowering the generated current even when the power demand has increased.

0220 Next, referring to Fig. 33, we discuss measurement of the detected temperature Td in the present embodiment.

Fig. 33 is a flow chart showing a procedure for calculating a first add/subtract value M1 based on temperatures Td detected by multiple temperature sensors.

0221 As shown in Fig. 3, in the present embodiment two generating chamber temperature sensors 142 are provided inside the generating chamber 10. Here, inside the fuel cell module 2 in the present embodiment twenty fuel cell units 16 are arrayed in the width direction (Fig. 2) and eight fuel cell units 16 are arrayed in the depth direction (Fig. 3). Therefore a total of 160 fuel cell units 16 are arranged in a rectangle as seen in plan view. In this embodiment, of the two generating chamber temperature sensors 142, one is disposed adjacent to the vertex of the rectangle, and the other is disposed adjacent to the midpoint of the long side of the rectangle. Thus in the present embodiment the two generating chamber temperature sensors 142 are disposed so that different temperatures are detected within the fuel cell module 2.

0222 Therefore the temperature Td detected by the generating chamber temperature sensors 142 disposed adjacent to the rectangle vertices primarily reflect the temperature of the fuel cell units 16 disposed near the vertices of the rectangle, and the temperature Td detected by the generating chamber temperature sensors 142 disposed adjacent to the midpoint of the long side of the rectangle primarily reflect the temperature of the fuel cell units 16 disposed near the midpoint of the long side of the rectangle. The fuel cell units 16 disposed close to the vertices of the rectangle can easily be robbed of heat by the surrounding insulating material 7 or the like and are therefore at the lowest temperature; the fuel cell units 16 disposed near the midpoint of a long side of the rectangle reach a higher temperature than the fuel cell units 16 disposed near the vertices. In the present embodiment, the temperature differences between fuel cell units 16 may reach several tens of degrees. Note that it is believed that the fuel cell units 16 disposed near the intersection of the diagonals of the rectangle reach the highest temperature, and generating chamber temperature sensors may also be disposed so as to measure this temperature.

0223 In step S61 of Fig. 33, detected temperatures Td are respectively read in from the two generating chamber temperature sensors 142. Next, in step S62, an average value for the read-in detected temperature Td is calculated and a judgment made of whether the averaged temperature is higher than the appropriate temperature Ts(l). When the averaged temperature is higher than the appropriate temperature Ts(l), the system advances to step S63; when it is lower than the appropriate temperature Ts(l), the system advances to step S64.

0224 In step S63, a first add/subtract value M1 is calculated based on the higher of the two detected temperatures Td (the first add/subtract value M1 becomes a positive value or 0) and processing for one iteration of the Fig. 33 flow chart is completed. I.e., the estimated amount of increase in the stored heat amount is determined based on the higher of the two detected temperatures Td. In step S64, on the other hand, a first add/subtract value M1 is calculated based on the lower of the two detected temperatures Td (the first add/subtract value M1 becomes a negative value or 0) and processing for one iteration of the Fig. 33 flow chart is completed. I.e., the estimated amount of reduction in the stored heat amount is determined based on the lower of the two detected temperatures Td. Thus the detected temperature Td on the high temperature side is adopted when above the appropriate temperature Ts(l), whereas the low side detected temperature Td is adopted when below the appropriate temperature Ts(l). The stored heat amount is in this way estimated based on the temperature of the higher temperature fuel cell unit 16 when excessive temperature rise becomes a problem. When temperature reduction is a problem, the stored heat amount is estimated based on the low temperature individual fuel cell unit 16 (normally the fuel cell units positioned at vertices of the rectangle), therefore the stored heat amount can be estimated on the safe side even when the temperatures of each of the fuel cell units 16 differ.

0225 Note that in the above-described embodiment the detected temperature Td on either the high temperature side or the low temperature side was selected and an accumulated value calculated based thereon, but it is also acceptable as a variant example to obtain the respective accumulated values for each detected temperature Td. I.e., if stored heat amounts are estimated by determining add/subtract values for each of multiple detected temperatures and accumulating the determined add/subtract values for each detected temperature to calculate multiple accumulated values, and if the largest numerical value of the multiple accumulated values is selected when all of the multiple accumulated values are increasing, and the smallest numerical value of the multiple accumulated values is selected when a portion of the multiple accumulated values are decreasing, this value may be used as the stored heat amount estimated value.

0226 In the above-described present embodiment we adopted the high temperature side of the detected temperature in step S63 and the low temperature side of the detected temperature in step S64, but is also possible as a variant example to calculate the first add/subtract value M1 based on a weighted average of the two detected temperatures as a way of estimating the stored heat amount. For example, in step S63 the first add/subtract value M1 can be calculated based on a value obtained by adding a value 0.7 times the detected temperature on the high temperature side to a value 0.3 times the detected temperature on the low temperature side, then in step S63 the first add/subtract value M1 can be calculated based on a value obtained by adding a value 0.3 times the detected temperature on the high temperature side to a value 0.7 times the detected temperature on the low temperature side. Thus in step S63, where the detected temperature Td is high and the estimated value of the stored heat amount is increased (first add/subtract value M1 is positive or 0) the highest of the multiple detected temperatures Td is used as the most heavily weighted factor for estimating the stored heat amount, whereas in step S64, where the estimated value of the stored heat amount is decreased (first add/subtract value M1 is negative or 0) the lowest temperature is used as the most heavily weighted factor for estimating the stored heat amount.

It is also possible to at all times calculate the first add/subtract value M1 from the simple average of each detected temperature Td, without weighting each of the detected temperatures Td.

0227 When the temperature of fuel cell units positioned at vertices of the rectangle has dropped to or below a predetermined usage-suppressing cell unit temperature, the first add/subtract value M1 can be determined in a way which suppresses increases in the fuel utilization rate Uf.

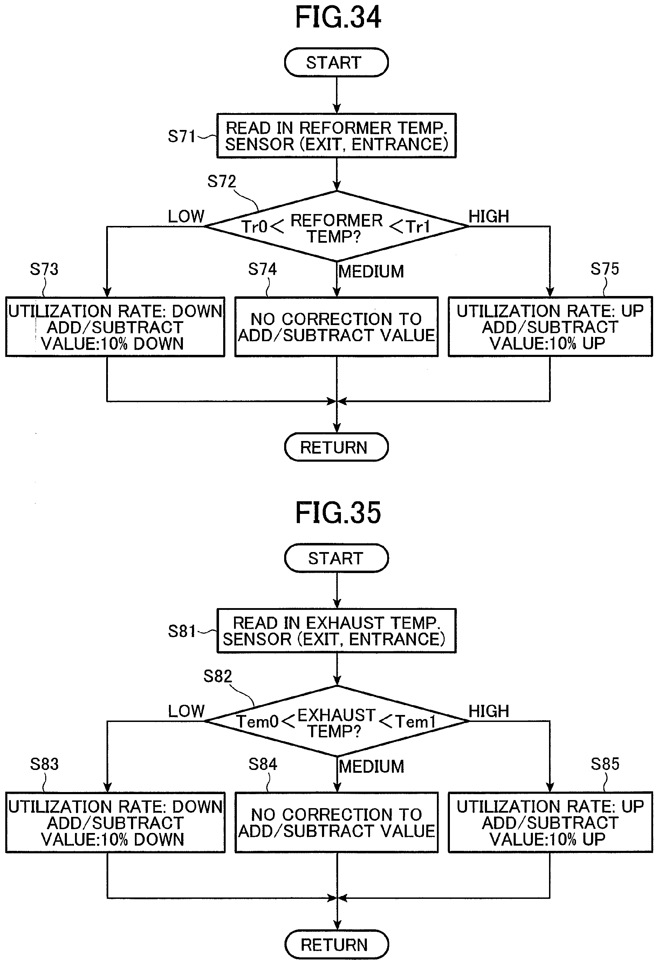

0228 Next, referring to Fig. 34, we discuss calculation of an add/subtract value according to a variant example of the present embodiment. Note that calculation of the add/subtract value according to this variant example may be used together with the processing in Fig. 33, or may be applied on its own. When applying the present variant example on its own, it is acceptable to have one generating chamber temperature sensor 142.

0229 Fig. 34 is a flow chart showing the procedure for calculating a first add/subtract value M1 based on the detected temperature from the reformer temperature sensor 148, which is another temperature detection device in addition to the generating chamber temperature sensors 142 serving as temperature detection device.

0230 First, in step S71 of Fig. 34, detected temperatures are read in from the reformer temperature sensor 148. In the present embodiment, there are reformer temperature sensors 148 attached at two locations, on the entrance side and the exit side of the reformer 20, so that temperatures in the vicinity of the entrance and exit of the reformer 20 are measured. Normally the temperature of the reformer 20 is low on the entrance side where the endothermic steam reforming reaction occurs abundantly, and high on the exit side.

0231 Next, in step S72 each detected temperature in the reformer 20 is compared to a predetermined usage-suppressing reformer temperature. First, if the lower detected temperature of the two reformer 20 detected temperatures is lower than a low temperature-side usage-suppressing reformer temperature Tr0, and the higher of the detected temperatures is lower than high temperature-side usage-suppressing reformer temperature Tr1, the system advances to step S73. On the other hand if the higher detected temperature of the two reformer 20 detected temperatures is higher than a high temperature-side usage-suppressing reformer temperature Tr1, and the lower detected temperature is higher than low temperature-side usage-suppressing reformer temperature Tr0, the system advances to step S75. When neither of these is the case, the system advances to step S74.

0232 In step S73, because the temperature of the reformer 20 is lower than each of the usage-suppressing reformer temperatures, the first add/subtract value M1 is corrected so that the fuel utilization rate Uf falls (the fuel supply amount increases). I.e., a value obtained by subtracting 10% of the absolute value of first add/subtract value M1 calculated based on the temperature Td detected by the generating chamber temperature sensors 142 is used for accumulation. The first accumulated value N1 id, which is the estimated value of the stored heat amount, thus decreases (its increase is suppressed), placing the fuel utilization rate Uf on a decreasing trend (the increase in the fuel utilization rate is suppressed), raising the temperature of the reformer 20.

0233 In step S75, on the other hand, because the temperature of the reformer 20 is higher than each of the usage-suppressing reformer temperatures, the first add/subtract value M1 is corrected so that the fuel utilization rate Uf rises (the fuel supply amount decreases). I.e., a value obtained by adding to the first add/subtract value M1 10% of the absolute value of first add/subtract value M1 calculated based on the temperature Td detected by generating chamber temperature sensors 142 is used as the first add/subtract value M1 for accumulation. The first accumulated value N1id, which is the estimated value of the stored heat amount, thus increases (its decrease is suppressed), placing the fuel utilization rate Uf in a rising trend, so that the temperature of the reformer 20 is decreased. Damage to the reformer 20 caused by excessive rise in the reformer 20 temperature is thus prevented.

0234 In step S74, because the reformer 20 is in the appropriate temperature range, no correction is made to the first add/subtract value M1, and processing of one iteration of the Fig. 34 flow chart is completed. (Since the two detected reformer 20 temperatures are correlated, a state in which the lower detected temperature is lower than low temperature-side usage-suppressing reformer temperature and the higher of the detected temperatures is higher than high temperature-side usage-suppressing reformer temperature normally does not occur.)

0235 Note that in the variant example of present embodiment the fuel utilization rate may also be corrected by averaging the temperatures detected by the two reformer temperature sensors 148 and comparing the averaged detected temperature to one or two of the usage-suppressing reformer temperatures. When the change rate is high in response to the rate of change per unit time in the temperatures detected by the reformer temperature sensors 148, the amount of correction to the fuel utilization rate may be increased.

0236 Next, referring to Fig. 35, we discuss calculation of an add/subtract value according to a variant example of the present embodiment. Note that calculation of the add/subtract value according to this variant example may be used together with the processing in Figs. 33 and 34, or may be applied on its own. When applying the present variant example on its own, it is acceptable to use one generating chamber temperature sensor 142.

0237 Fig. 35 is a flow chart showing the procedure for calculating a first add/subtract value M1 based on the detected temperature from an exhaust temperature sensor 140, which is another temperature detection device in addition to the generating chamber temperature sensors 142 serving as temperature detection device.

0238 First, in step S81 of Fig. 35, detected temperatures are read in from the exhaust temperature sensor 140. In the present embodiment, the exhaust temperature sensor 140 is disposed to measure the temperature of exhaust gas combusted in the combustion chamber 18 and discharged after passing through an exhaust gas discharge pipe 82.

0239 Next, in step S82, the detected temperature of the exhaust gas is compared to a predetermined usage-suppressing exhaust gas temperature. First, if the detected exhaust gas temperature is below a predetermined low temperature side usage-suppressing exhaust temperature Tem0, the system advances to step S83. On the other hand, if the detected exhaust gas temperature is above a predetermined high temperature side usage-suppressing exhaust temperature Tem1, the system advances to step S85. If the exhaust gas detected temperature is below the high temperature side usage-suppressing exhaust temperature Tem1 and above the low temperature side usage-suppressing exhaust temperature Tem0, the system advances to step S84.

0240 In step S83, since the temperature of the exhaust gas is lower than the appropriate temperature, the first add/subtract value M1 is corrected so that the fuel utilization rate Uf decreases (the fuel supply amount increases). I.e., a value obtained by subtracting from the first add/subtract value M1 10% of the absolute value of first add/subtract value M1 calculated based on the temperature Td detected by generating chamber temperature sensors 142 is used as the first add/subtract value M1 for accumulation. The first accumulated value N1id, which is the estimated value of the stored heat amount, thus decreases (its increase is suppressed), placing the fuel utilization rate Uf on a decreasing trend (the increase in the fuel utilization rate Uf is suppressed), so that the temperature of the exhaust gas is raised.

0241 In step S85, on the other hand, since the temperature of the exhaust gas is higher than the appropriate temperature, the first add/subtract value M1 is corrected so that the fuel utilization rate Uf increases (the fuel supply amount decreases). I.e., a value obtained by adding to the first add/subtract value M1 10% of the absolute value of first add/subtract value M1 calculated based on the temperature Td detected by generating chamber temperature sensors 142 is used as the first add/subtract value M1 for accumulation. The first accumulated value N1id, which is the estimated value of the stored heat amount, thus increases (its decrease is suppressed), placing the fuel utilization rate Uf in a rising trend, so that the temperature of the exhaust gas is decreased. The temperature inside the fuel cell module 2 is by this means made appropriate.

0242 In step S84, because the exhaust gas is in the appropriate temperature range, no correction is made to the first add/subtract value M1, and processing for one iteration of the Fig. 35 flow chart is completed.

0243 Note that in this variant example, when the change rate is high according to the rate of change per unit time in the temperatures detected by the exhaust temperature sensor 140, the range of correction to the fuel utilization rate may be increased.

0244 In the solid oxide fuel cell according to a second embodiment of the present invention, the stored heat amount is estimated based on detected temperatures Td detected by the generating chamber temperature sensors 142, therefore the control section 110 can accurately estimate the accumulated heat amount even if the output power is changed with a delay (Fig. 20) after the fuel supply amount is changed. This enables the amount of heat stored in the heat storing material 2 to be fully utilized while securely avoiding the risk of sudden temperature drops in the fuel cell module 2. In addition, in fuel cells of the type which change output power at a delay after changing the fuel supply amount, as in the present embodiment, frequent increases and decreases of output power create a great deal of residual fuel and risk excessive temperature rises inside the fuel cell module (Fig. 31), but use of the solid oxide fuel cell of the present embodiment enables an accurate grasp of the stored heat caused by the residual fuel arising in this manner. In general, a cooling medium (air) is inserted into the fuel cell module 2 to suppress the excessive temperature rise caused by residual fuel, but use of the solid oxide fuel cell of present embodiment enables an accurate grasp of the heat amount stemming from residual fuel, the effective use of which enables excessive temperature rises to be suppressed. This enables the extra generating air inserted to lower the temperature to be reduced, and the overall energy efficiency of the solid oxide fuel cell improved.

0245 In the solid oxide fuel cell of the present embodiment, the stored heat amount estimating circuit 110b estimates the stored heat amount based on the detected temperature Td history (first accumulated value N1 id), therefore a more accurate estimate of the stored heat amount can be made than with recent detected temperatures Td alone. The amount of heat stored in the heat storing material can therefore be fully utilized.

0246 Furthermore, in the present invention thus constituted stored heat is used in large quantity when the estimated stored heat amount is large, and not much stored heat is used when the stored heat amount is small (Fig. 23), therefore stored heat can be more effectively utilized, and the risk of temperature drops can be reliably avoided.

0247 According to the solid oxide fuel cell of the present embodiment, conditions such as the degradation of the fuel cell module 2 (Fig. 28), in addition to stored heat amount and power demand, are added to the determination of the fuel utilization rate, therefore stored heat can be appropriately utilized according to the state of the fuel cell module 2.

0248 In addition, according to the solid oxide fuel cell of the present embodiment, the fuel utilization rate relative to changes in estimated stored heat amount is changed much more in the region where the estimated stored heat amount estimated by the stored heat amount estimating circuit 110b is large (Fig. 23, N1 id = around 0.9 to 1) than in the region where the estimated stored heat amount is small (N1 id = around 0 to 0.1). Therefore when the estimated stored heat amount is large, a large amount of stored heat is utilized and excessive temperature rises can be avoided, whereas when the estimated stored heat amount is small, stored heat can be used a little at a time, and overcooling can be avoided.

0249 In the solid oxide fuel cell of the present embodiment, stored heat is estimated by adding recent detected temperature changes (second add/subtract value M2) to the history of detected temperatures, therefore stored heat can be accurately estimated based on history, and fuel cell module 2 temperature value M2) to the history of detected temperatures, therefore stored heat can be accurately estimated based on history, and fuel cell module 2 temperature changes in which the stored heat amount is large, and for which it not easy to change the trend once the change has started, can be responded to with agility, preventing excessive temperature rises and temperature drops.

0250 Furthermore, according to the solid oxide fuel cell of the present embodiment the fuel utilization rate is changed over a larger range in the region where generated power is small than in the region where generated power is large (Fig. 24). The risk of sudden temperature drops can therefore be reduced, and by utilizing large amounts of stored heat in the small generated power region (around IU in Fig. 24) where there is a lot of margin for improving the fuel utilization rate, energy efficiency can be effectively increased. Under normal control, as well, in the large generated power region where the fuel utilization rate is high (around Imax in Fig. 24) and there is little room for improving the fuel utilization rate, by not utilizing much stored heat, the stored heat accumulated during this interval can be used and energy efficiency in the small generated power region can be improved.

0251 According to the solid oxide fuel cell of the present embodiment, changes raising the fuel utilization rate are reduced (accumulation of N1 id is stopped) after the fuel cell module degrades (Fig. 28), therefore advancement of degradation can be prevented by creating a cooling tendency in a fuel cell module which has risen in temperature during electrical generation due to degradation.

0252 Furthermore, according to the solid oxide fuel cell of the present therefore the stored heat amount can be appropriately estimated by simple calculation, based upon which the fuel utilization rate can be appropriately set.

0253 Also, according to the solid oxide fuel cell of the present embodiment, add/subtract values (M1, M2) for estimating stored heat are determined based on generated power, current, and other conditions in addition to detected temperature Td, therefore factors other than temperature affecting stored heat can be appropriately reflected in estimated values.

0254 In addition, according to the solid oxide fuel cell of the present embodiment, increases or decreases in the estimated stored heat are estimated not only by the detected temperature Td; generated power is also added (Equations (5), (7), etc), permitting a more accurate estimate of stored heat amounts.

0255 Furthermore, according to the solid oxide fuel cell of the present embodiment, the estimated stored heat amount value changes more suddenly as generated power increases (the Fig. 21 flow chart is executed at shorter intervals as generated power increases), therefore an estimate more closely matching the true status can be made of the stored heat amount.

0256 We have explained preferred embodiments of the present invention above, but various changes may be added to the above-described embodiments. In particular, in the above-described embodiment, the heat capacity of the insulation material (heat storing material) was fixed, but as a variant example a fuel cell module with variable heat capacity can be constituted. In that case, an additional heat capacity member with a large heat capacity can be disposed so as to be capable of thermally connecting and isolating from the fuel cell module. In a state in which heat capacity should be made large, the additional heat capacity member is thermally connected to the fuel cell module, whereas in a state where heat capacity should be made small, the additional heat capacity member is thermally isolated. For example, when a solid oxide fuel cell starts up, the heat capacity is made small by isolating the additional heat capacity member, thereby raising the temperature of the fuel cell module. On the other hand when it is anticipated that the solid oxide fuel cell will be operated at large generated power for long hours, the fuel cell module is connected to the additional heat capacity member so as to accumulate a larger surplus heat amount.

Explanation of Reference Numerals

0257

1: Solid oxide fuel cell
2: Fuel cell module
4: Auxiliary unit
7: Insulating material (heat storing material)
8: Sealed space
10: Electrical generating chamber
12: Fuel cell assembly
14: Fuel cell stack
16: Fuel cell units (solid oxide fuel cells)
18: Combustion chamber (combustion section)
20: Reformer
22: Heat exchanger for air
24: Water supply source
26: Pure water tank
28: Water flow regulator unit (water supply device)
30: Fuel supply source
38: Fuel flow regulator unit (fuel supply device)
40: Air supply source
44: Reform air flow regulator unit
45: Generating air flow regulator unit (generating oxidant gas supply device)
46: First heater
48: Second heater
50: Hot water production device
52: Control box
54: Inverter
83: Ignition device
84: Individual fuel cells
110: Control section (control device)
110a: Fuel table change circuit (fuel supply amount change circuit)
110b: Stored heat amount estimating circuit
110c: Power extraction delay circuit
112: Operating device
114: Display device
116: Warning device
126: Electrical power state detecting sensor (power demand detecting sensor device)
132: Fuel flow sensor (fuel supply amount detection sensor)
138: Pressure sensor (reformer pressure sensor)
140: Exhaust temperature sensor (temperature detection device)
142: Generating chamber temperature sensor (temperature detection device)
148: Reformer temperature sensor (temperature detection device)
150: Outside air temperature sensor

**Claims**

1.  A solid oxide fuel cell (1) for producing variable power in response to power demand, comprising:

    a fuel cell module (2) configured to generate electricity using supplied fuel;
    a fuel supply device (38) configured to supply fuel to the fuel cell module (2);
    an oxidant gas supply device (45) configured to supply oxidant gas for electrical generation to the fuel cell module (2);

a combustion section (18) configured to burn remaining residual fuel supplied by the fuel supply device (38) and not utilized for electrical generation, and heating the interior of the fuel cell module (2);

a heat storing material (7) placed within the fuel cell module (2) and configured to accumulate heat generated within the fuel cell module (2);

a power demand detection device (126) configured to detect power demand;

a temperature detection device (142) configured to detect the temperature of the fuel cell module (2); and

a control device (110) programmed to control the fuel cell, based on the power demand detected by the power demand detection device (126), such that the fuel utilization rate, which is the fraction of the fuel actually used to generate electricity relative to the fuel supply rate, is high when generated power is larger, and the fuel utilization rate is low when generated power is smaller,

**characterised in that**

the control device (110) is also programmed to increases the power actually output from the fuel cell module (2) at a predetermined delay after increasing the fuel supply rate in response to an increment in power demand;

wherein the control device (110) includes a stored heat estimating circuit (110b) configured to estimate the amount of stored heat accumulated in the heat storing material (7) based on the detected temperature detected by the temperature detection device (142), and the control device (110) reduces the fuel supply rate so that the fuel utilization rate increases relative to the same generated power when it is estimated that a usable amount of heat has accumulated in this heat storing material (7), in comparison with cases in which it is estimated that a usable amount of heat has not accumulated and

wherein the stored heat estimating circuit (110b) estimates the amount of stored heat stored in the heat storing material (7) based on detected temperature history.

2. The solid oxide fuel cell according to Claim 1, wherein the control device (110) increases the fuel utilization rate as the amount of stored heat estimated by the stored heat estimating circuit (110b) increases.

3. The solid oxide fuel cell according to Claim 2, wherein the control device (110) determines the fuel utilization rate based on predetermined conditions including the amount of stored heat estimated by the stored heat estimating circuit (110b), and power demand.

4. The solid oxide fuel cell according to Claim 3, wherein the control device (110) changes the fuel utilization rate relative to changes in the estimated amount of stored heat more in the region in which the estimated amount of stored heat estimated by the stored heat estimating circuit (110b) is larger than in the region where the estimated amount of stored heat is smaller.

5. The solid oxide fuel cell according to Claim 3, wherein the stored heat estimating circuit (110b) estimates the amount of stored heat based on temperature changes detected immediately before, in addition to the detected temperature history, and the control device (110) changes the fuel utilization rate more when the change in recent detected temperature is larger than when it is smaller.

6. The solid oxide fuel cell according to Claim 3, wherein the control device (110) changes the fuel utilization rate over a wider range in the region where generated power is smaller than the range in the region where generated power is larger.

7. The solid oxide fuel cell according to Claim 3, wherein the control device (110) makes smaller changes to the fuel utilization rate after the fuel cell module (2) has degraded than before the fuel cell module (2) had degraded.

8. The solid oxide fuel cell according to Claim 3, wherein the stored heat estimating circuit (110b) estimates the amount of stored heat based on an accumulated value for an add/subtract value determined based on detected temperature, and based on the difference between new detected temperatures and past detected temperatures.

9. The solid oxide fuel cell according to Claim 3, wherein the stored heat estimating circuit (110b) estimates the amount of stored heat by accumulating add/subtract values determined based on predetermined conditions including the detected temperature.

10. The solid oxide fuel cell according to Claim 9, wherein the stored heat estimating circuit (110b) uses a positive or negative value for the add/subtract value based on detected temperature and generated power.

**11.** The solid oxide fuel cell according to Claim 10, wherein the stored heat estimating circuit (110b) changes the estimated amount of stored heat in a higher rate as generated power increases.

**12.** The solid oxide fuel cell according to Claim 9, wherein the stored heat estimating circuit (110b) estimates the amount of stored heat based on a basic estimated value calculated based on detected temperature history, and on a quick response estimated value calculated based on the rate of change in the detected temperature during an interval shorter than the history over which the basic estimated value is calculated.

**13.** The solid oxide fuel cell according to Claim 9, further comprising multiple temperature detection devices (140-150), wherein:

the stored heat estimating circuit (110b) estimates the amount of stored heat accumulated in the heat storing material (7) based on the past history of multiple detected temperatures detected by the multiple temperature detection devices (140-150); and

based on the amount of stored heat estimated by the stored heat estimating circuit (110b) and on the power demand detected by the power demand detection circuit (126), the control device (110) determines a fuel utilization rate such that for the same generated power, the fuel utilization rate increases as the estimated amount of stored heat increases, and controls the fuel supply device (2) based on this fuel utilization rate.

**14.** The solid oxide fuel cell according to Claim 13, wherein the stored heat estimating circuit (110b) estimates the amount of stored heat based on the highest temperature among the multiple detected temperatures to increase the fuel utilization rate when increasing the estimated amount of stored heat, and based on the lowest temperature among the multiple detected temperatures to decrease the fuel utilization rate when decreasing the estimated amount of stored heat.

**15.** The solid oxide fuel cell according to Claim 14, wherein the multiple temperature detection devices (140-150) are disposed so that the reformer temperature and the fuel cell stack temperature are respectively reflected, and the control device (110) suppresses the rise in the fuel utilization rate when the reformer temperature is at or below a predetermined usage-suppressing reformer temperature.

**16.** The solid oxide fuel cell according to Claim 14, wherein the fuel cell stack (14) is constituted of multiple fuel cell units (16) arrayed in approximately a rectangular form; one of the multiple temperature detection devices (140-150) is disposed to reflect the temperature of the individual fuel cell unit positioned at a vertex of the rectangle; one of the multiple temperature detection devices is disposed to reflect the temperature of the individual fuel cell unit positioned at the midpoint between two vertices of the rectangle; and the control device (110) suppresses increases in the fuel utilization rate when the temperature of an individual fuel cell unit positioned at a rectangle vertex is at or below a predetermined usage-suppressing cell unit temperature.

**Patentansprüche**

**1.** Festoxidbrennstoffzelle (1) zur Erzeugung von variabler Leistung in Reaktion auf eine Leistungsanforderung, umfassend:

ein Brennstoffzellmodul (2), welches ausgelegt ist, Elektrizität unter Verwendung von zugeführtem Brennstoff zu erzeugen;
eine Brennstoffzufuhrvorrichtung (38), die ausgelegt ist, dem Brennstoffzellmodul (2) Brennstoff zuzuführen;
eine Oxidationsgaszufuhrvorrichtung (45), die ausgelegt ist, dem Brennstoffzellmodul (2) Oxidationsgas zur Elektrizitätserzeugung zuzuführen;
einen Verbrennungsbereich (18), der ausgelegt ist, verbleibenden überschüssigen Brennstoff zu verbrennen, der durch die Brennstoffzufuhrvorrichtung (38) zugeführt wurde und nicht für die Elektrizitätserzeugung genutzt wurde, und zum Heizen des Inneren des Brennstoffzellmoduls (2);
ein Wärmespeichermaterial (7), welches in dem Brennstoffzellmodul (2) angeordnet ist und ausgelegt ist, Wärme zu speichern, welche in dem Brennstoffzellmodul (2) erzeugt wurde;
eine Leistungsanforderungsermittlungsvorrichtung (126), welche ausgelegt ist, die Leistungsanforderung zu ermitteln;
eine Temperaturermittlungsvorrichtung (142), welche ausgelegt ist, die Temperatur des Brennstoffzellmoduls (2) zu ermitteln; und

eine Steuerungsvorrichtung (110), welche programmiert ist, die Brennstoffzelle auf Basis der Leistungsanforderung, welche durch die Leistungsanforderungsermittlungsvorrichtung (126) ermittelt wurde, so zu steuern, dass die Brennstoffverbrauchsrate, welche der Anteil des Brennstoffes ist, welcher tatsächlich zur Elektrizitätserzeugung genutzt wird, relativ zu der Brennstoffverbrauchsrate hoch ist, wenn die erzeugte Leistung größer ist, und die Brennstoffverbrauchsrate niedriger ist, wenn die erzeugte Leistung kleiner ist,

**dadurch gekennzeichnet, dass**
die Steuerungsvorrichtung (110) weiterhin programmiert ist, die tatsächlich aus dem Brennstoffzellmodul (2) ausgegebene Leitung nach einer vorbestimmten Verzögerung nach Erhöhung der Brennstoffzufuhrrate in Reaktion auf eine Erhöhung der Energieanforderung zu erhöhen;
wobei die Steuerungsvorrichtung (110) einen Speicherwärmeabschätzkreis (110b) umfasst, welcher ausgelegt ist, die Wärmespeichermenge abzuschätzen, welche in dem Wärmespeichermaterial (7) angesammelt wurde, auf Basis der ermittelten Temperatur, die durch die Temperaturermittlungsvorrichtung (142) ermittelt wurde, und wobei die Steuerungsvorrichtung (110) die Brennstoffzufuhrrate reduziert, so dass die Brennstoffverbrauchsrate sich relativ zu derselben erzeugten Leistung erhöht, wenn abgeschätzt wird, dass eine nutzbare Wärmemenge in dem Wärmespeichermaterial (7) angesammelt wurde, im Vergleich mit Fällen, in welchen abgeschätzt wird, dass keine nutzbare Wärmemenge angesammelt wurde, und
wobei der Speicherwärmeabschätzkreis (110b) die Wärmespeichermenge, die in dem Wärmespeichermaterial (7) gespeichert wurde, auf Basis der ermittelten Temperaturhistorie abschätzt.

2. Festoxidbrennstoffzelle nach Anspruch 1, wobei die Steuerungsvorrichtung (110) die Brennstoffverbrauchsrate erhöht, wenn sich die Wärmespeichermenge, die von dem Speicherwärmeabschätzkreis (110b) abgeschätzt wird, erhöht.

3. Festoxidbrennstoffzelle nach Anspruch 2, wobei die Steuerungsvorrichtung (110) die Brennstoffverbrauchsrate auf Basis von vorherbestimmten Bedingungen ermittelt, welche die Wärmespeichermenge, die durch den Speicherwärmeabschätzkreis (110b) abgeschätzt wird, und die Leistungsanforderung umfassen.

4. Festoxidbrennstoffzelle nach Anspruch 3, wobei die Steuerungsvorrichtung (110) die Brennstoffverbrauchsrate relativ zu Veränderungen in der abgeschätzten Wärmespeichermenge mehr in dem Bereich ändert, in welchem die abgeschätzte Wärmespeichermenge, welche durch den Speicherwärmeabschätzkreis (110b) abgeschätzt wurde, größer ist als in dem Bereich, in welchem die abgeschätzte Wärmespeichermenge kleiner ist.

5. Festoxidbrennstoffzelle nach Anspruch 3, wobei der Speicherwärmeabschätzkreis (110b) die Wärmespeichermenge auf Basis von Temperaturänderungen abschätzt, die unmittelbar vorhergehend zusätzlich zu der ermittelten Temperaturhistorie ermittelt werden, und die Steuerungsvorrichtung (110) ändert die Brennstoffverbrauchsrate stärker, wenn die Änderung in der kürzlich ermittelten Temperatur größer ist, als wenn diese kleiner ist.

6. Festoxidbrennstoffzelle nach Anspruch 3, wobei die Steuerungsvorrichtung (110) die Brennstoffverbrauchsrate in einem größeren Umfang in dem Bereich ändert, wo die Leistungserzeugung kleiner ist, als der Umfang in dem Bereich beträgt, wo die Leistungserzeugung größer ist.

7. Festoxidbrennstoffzelle nach Anspruch 3, wobei die Steuerungsvorrichtung (110) kleinere Änderungen an der Brennstoffverbrauchsrate ausführt, nachdem das Brennstoffzellmodul (2) degradiert ist, als bevor das Brennstoffzellmodul (2) degradiert ist.

8. Festoxidbrennstoffzelle nach Anspruch 3, wobei der Speicherwärmeabschätzkreis (110) die Wärmespeichermenge anhand eines akkumulierten Wertes für einen additiven/subtraktiven Wert abschätzt, welcher auf Basis der ermittelten Temperatur ermittelt wird, und auf Basis des Unterschieds zwischen neu ermittelten Temperaturen und in der Vergangenheit ermittelten Temperaturen.

9. Festoxidbrennstoffzelle nach Anspruch 3, wobei der Speicherwärmeabschätzkreis (110b) die Wärmespeichermenge durch Akkumulierung von additiven/subtraktiven Werten ermittelt, welche basierend auf vorbestimmten Bedingungen inklusive der ermittelten Temperatur ermittelt wurden.

10. Festoxidbrennstoffzelle nach Anspruch 9, wobei der Speicherwärmeabschätzkreis (110b) einen positiven oder negativen Wert für den additiven/subtraktiven Wert auf Basis ermittelter Temperatur und erzeugter Leistung verwendet.

**11.** Festoxidbrennstoffzelle nach Anspruch 10, wobei der Speicherwärmeabschätzkreis (110b) die abgeschätzte Wärmespeichermenge in höherem Maße ändert, wenn die erzeugte Leistung ansteigt.

**12.** Festoxidbrennstoffzelle gemäß Anspruch 9, wobei der Speicherwärmeabschätzkreis (110b) die Wärmespeichermenge auf Basis eines grundlegenden Schätzwerts abschätzt, der auf Basis der ermittelten Temperaturhistorie berechnet wurde, und auf Basis eines schnell reagierenden Schätzwerts, der auf Basis der Änderungsrate in der ermittelten Temperatur während eines Intervalls berechnet wird, welches kürzer als die Historie ist, über welche der grundlegende Schätzwert berechnet wird.

**13.** Festoxidbrennstoffzelle nach Anspruch 9, weiterhin umfassend eine Vielzahl von Temperaturermittlungsvorrichtungen (140-150), wobei:

der Speicherwärmeabschätzkreis (110b) die Wärmespeichermenge, welche in dem Wärmespeichermaterial (7) akkumuliert ist, auf Basis der vergangenen Historie von einer Mehrzahl von ermittelten Temperaturen abschätzt, welche durch die Mehrzahl von Temperaturermittlungsvorrichtungen (140-150) ermittelt wurden; und die Steuerungsvorrichtung (110) eine Brennstoffverbrauchsrate auf Basis der Wärmespeichermenge, welche durch den Speicherwärmeabschätzkreis (110b) abgeschätzt wurde und auf die Leistungsanforderung, welche durch die Leistungsanforderungsermittlungsvorrichtung (126) ermittelt wurde, ermittelt, so dass sich für die gleiche erzeugte Leistung die Brennstoffverbrauchsrate erhöht, wenn sich die abgeschätzte Wärmespeichermenge erhöht und die Brennstoffzufuhrvorrichtung (2) auf Basis dieser Brennstoffverbrauchsrate steuert.

**14.** Festoxidbrennstoffzelle nach Anspruch 13, wobei der Speicherwärmeabschätzkreis (110b) die Wärmespeichermenge auf Basis der höchsten Temperatur der mehreren ermittelten Temperaturen abschätzt, um die Brennstoffverbrauchsrate zu erhöhen, wenn sich die abgeschätzte Wärmespeichermenge erhöht, und auf Basis der niedrigsten Temperatur der mehreren ermittelten Temperaturen, um die Brennstoffverbrauchsrate zu senken, wenn die abgeschätzte Wärmespeichermenge gesenkt wird.

**15.** Festoxidbrennstoffzelle nach Anspruch 14, wobei die mehreren Temperaturermittlungsvorrichtungen (140-150) so angeordnet sind, dass die Reformertemperatur und die Brennstoffzellstapeltemperatur entsprechend wiedergegeben werden, und die Steuerungsvorrichtung (110) einen Anstieg der Brennstoffverbrauchsrate unterdrückt, wenn die Reformertemperatur an oder unterhalb einer vorbestimmten gebrauchsunterdrückenden Reformertemperatur liegt.

**16.** Festoxidbrennstoffzelle nach Anspruch 14, wobei der Brennstoffzellstapel (14) aus mehreren Brennstoffzelleinheiten (16) aufgebaut ist, welche in ungefähr einer rechteckigen Form angeordnet sind; dabei ist eine der mehreren Temperaturermittlungsvorrichtungen (140-150) so angeordnet, dass sie die Temperatur der einzelnen Brennstoffzelle, die an einem Eckpunkt des Rechtecks positioniert ist, wiedergibt; eine der mehreren Temperaturermittlungsvorrichtungen ist so angeordnet, dass sie die Temperatur der einzelnen Brennstoffzelleinheit, welche an einem Mittelpunkt zwischen zwei Eckpunkten des Rechtecks angeordnet ist, wiedergibt; und die Steuerungsvorrichtung (110) unterdrückt Anstiege in der Brennstoffverbrauchsrate, wenn die Temperatur einer einzelnen Brennstoffzelleinheit, welche an einem Eckpunkt des Rechtecks angeordnet ist, an oder unterhalb einer vorbestimmten gebrauchsunterdrückenden Temperatur der Zelleinheiten liegt.

**Revendications**

**1.** Pile à combustible à oxyde solide (1) pour produire une puissance variable en réponse à une demande de puissance, comprenant :

un module de pile à combustible (2) configuré pour générer de l'électricité à l'aide d'un combustible fourni ; un dispositif d'alimentation en combustible (38) configuré pour alimenter le module de pile à combustible (2) en combustible, un dispositif d'alimentation en gaz oxydant (45) configuré pour alimenter le module de pile à combustible (2) en gaz oxydant pour la génération électrique ; une section de combustion (18) configurée pour brûler le combustible résiduel restant fourni par le dispositif d'alimentation en combustible (38) et non utilisé pour la génération électrique, et chauffer l'intérieur du module de pile à combustible (2) ; un matériau de stockage de chaleur (7) placé au sein du module de pile à combustible (2) et configuré pour accumuler de la chaleur générée au sein du module de pile à combustible (2) ;
un dispositif de détection de demande de puissance (126) configuré pour détecter une demande de puissance ;
un dispositif de détection de température (142) configuré pour détecter la température du module de pile à combustible (2) ; et
un dispositif de commande (110) programmé pour commander la pile à combustible, d'après la demande de puissance détectée par le dispositif de détection de demande de puissance (126), de sorte que le taux d'utilisation de combustible, qui est la fraction du combustible réellement utilisée pour générer de l'électricité par rapport au taux d'alimentation en combustible, soit élevé lorsque la puissance générée est plus grande, et
que le taux d'utilisation de combustible soit faible lorsque la puissance générée est plus petite,

**caractérisée en ce que**
le dispositif de commande (110) est également programmé pour augmenter la puissance réellement fournie en sortie par le module de pile à combustible (2) à un retard prédéterminé après augmentation du taux d'alimentation en combustible en réponse à un incrément de demande de puissance ;
dans laquelle le dispositif de commande (110) comporte un circuit d'estimation de chaleur stockée (110b) configuré pour estimer la quantité de chaleur stockée accumulée dans le matériau de stockage de chaleur (7) d'après la température détectée détectée par le dispositif de détection de température (142), et le dispositif de commande (110) réduit le taux d'alimentation en combustible de sorte que le taux d'utilisation de combustible augmente par rapport à la même puissance générée lorsqu'on estime qu'une quantité de chaleur utilisable s'est accumulée dans ce matériau de stockage de chaleur (7), en comparaison à des cas où on estime qu'une quantité de chaleur utilisable ne s'est pas accumulée et
dans laquelle le circuit d'estimation de chaleur stockée (110b) estime la quantité de chaleur stockée stockée dans le matériau de stockage de chaleur (7) d'après un historique de température détectée.

2.   Pile à combustible à oxyde solide selon la revendication 1, dans laquelle le dispositif de commande (110) augmente le taux d'utilisation de combustible lorsque la quantité de chaleur stockée estimée par le circuit d'estimation de chaleur stockée (110b) augmente.

3.   Pile à combustible à oxyde solide selon la revendication 2, dans laquelle le dispositif de commande (110) détermine le taux d'utilisation de combustible d'après des conditions prédéterminées incluant la quantité de chaleur stockée estimée par le circuit d'estimation de chaleur stockée (110b), et la demande de puissance.

4.   Pile à combustible à oxyde solide selon la revendication 3, dans laquelle le dispositif de commande (110) change le taux d'utilisation de combustible par rapport à des changements de la quantité estimée de chaleur stockée davantage dans la région dans laquelle la quantité estimée de chaleur stockée estimée par le circuit d'estimation de chaleur stockée (110b) est plus grande que dans la région où la quantité estimée de chaleur stockée est plus petite.

5.   Pile à combustible à oxyde solide selon la revendication 3, dans laquelle le circuit d'estimation de chaleur stockée (110b) estime la quantité de chaleur stockée d'après des changements de température détectés immédiatement avant, en plus de l'historique de température détectée, et le dispositif de commande (110) change le taux d'utilisation de combustible davantage lorsque le changement de température détectée récente est plus grand que lorsqu'il est plus petit.

6.   Pile à combustible à oxyde solide selon la revendication 3, dans laquelle le dispositif de commande (110) change le taux d'utilisation de combustible sur une plage plus large dans la région où la puissance générée est plus petite que la plage dans la région où la puissance générée est plus grande.

7.   Pile à combustible à oxyde solide selon la revendication 3, dans laquelle le dispositif de commande (110) apporte des changements moindres au taux d'utilisation de combustible après que le module de pile à combustible (2) s'est dégradé qu'avant que le module de pile à combustible (2) ne se soit dégradé.

8.   Pile à combustible à oxyde solide selon la revendication 3, dans laquelle le circuit d'estimation de chaleur stockée (110b) estime la quantité de chaleur stockée d'après une valeur accumulée pour une valeur d'addition/de soustraction déterminée d'après une température détectée, et d'après la différence entre de nouvelles températures détectées et des anciennes températures détectées.

9.   Pile à combustible à oxyde solide selon la revendication 3, dans laquelle le circuit d'estimation de chaleur stockée (110b) estime la quantité de chaleur stockée en accumulant des valeurs d'addition/de soustraction déterminées d'après des conditions prédéterminées incluant la température détectée.

10. Pile à combustible à oxyde solide selon la revendication 9, dans laquelle le circuit d'estimation de chaleur stockée (110b) utilise une valeur positive ou négative pour la valeur d'addition/de soustraction d'après la température détectée et la puissance générée.

11. Pile à combustible à oxyde solide selon la revendication 10, dans laquelle le circuit d'estimation de chaleur stockée (110b) change la quantité estimée de chaleur stockée en un taux plus élevé lorsque la puissance générée augmente.

12. Pile à combustible à oxyde solide selon la revendication 9, dans laquelle le circuit d'estimation de chaleur stockée (110b) estime la quantité de chaleur stockée d'après une valeur estimée de base calculée d'après un historique de température détectée, et d'après une valeur estimée de réponse rapide calculée d'après le taux de changement de la température détectée pendant un intervalle plus court que l'historique sur lequel la valeur estimée de base est calculée.

13. Pile à combustible à oxyde solide selon la revendication 9, comprenant en outre de multiples dispositifs de détection de température (140 à 150), dans laquelle :

le circuit d'estimation de chaleur stockée (110b) estime la quantité de chaleur stockée accumulée dans le matériau de stockage de chaleur (7) d'après l'ancien historique de multiples températures détectées par les multiples dispositifs de détection de température (140 à 150) ; et
d'après la quantité de chaleur stockée estimée par le circuit d'estimation de chaleur stockée (110b) et la demande de puissance détectée par le circuit de détection de demande de puissance (126), le dispositif de commande (110) détermine un taux d'utilisation de combustible de sorte que, pour la même puissance générée, le taux d'utilisation de combustible augmente lorsque la quantité estimée de chaleur stockée augmente, et commande le dispositif d'alimentation en combustible (2) d'après ce taux d'alimentation en combustible.

14. Pile à combustible à oxyde solide selon la revendication 13, dans laquelle le circuit d'estimation de chaleur stockée (110b) estime la quantité de chaleur stockée d'après la température la plus élevée parmi les multiples températures détectées pour augmenter le taux d'utilisation de combustible lors de l'augmentation de la quantité estimée de chaleur stockée, et d'après la température la plus basse parmi les multiples températures détectées pour diminuer le taux d'utilisation de combustible lors de la diminution de la quantité estimée de chaleur stockée.

15. Pile à combustible à oxyde solide selon la revendication 14, dans laquelle les multiples dispositifs de détection de température (140 à 150) sont disposés de sorte que la température de reformeur et la température d'empilement de piles à combustible soient respectivement réfléchies, et le dispositif de commande (110) supprime la hausse du taux d'utilisation de combustible lorsque la température de reformeur est à une température de reformeur de suppression d'utilisation prédéterminée, ou en dessous de celle-ci.

16. Pile à combustible à oxyde solide selon la revendication 14, dans laquelle l'empilement de piles à combustible (14) est constitué de multiples unités de pile à combustible (16) agencées selon une forme approximativement rectangulaire ; l'un des multiples dispositifs de détection de température (140 à 150) est disposé pour réfléchir la température de l'unité de pile à combustible individuelle positionnée à un sommet du rectangle ; l'un des multiples dispositifs de détection de température est disposé pour réfléchir la température de l'unité de pile à combustible individuelle positionnée au point milieu entre deux sommets du rectangle ; et le dispositif de commande (110) supprime des augmentations du taux d'utilisation de combustible lorsque la température d'une unité de pile à combustible individuelle positionnée à un sommet de rectangle est à une température d'unité de pile de suppression d'utilisation prédéterminée, ou en dessous de celle-ci.

# FIG.1

## FIG.2

# FIG.3

# FIG.4

# FIG.5

# FIG.6

# FIG.7

# FIG.8

TEMPERATURE (°C)

COOLING BY GENERATING AIR | STOPPED

STEAM REFORMING REACTION(SR)

TIME (min)

——— REFORMER TEMP. — — — GENERATING CHAMBER TEMP. —— · —— COMBUSTION SECTION TEMP.

— — — FUEL FLOW AMOUNT — · · — GENERATING AIR FLOW AMOUNT — · — · — WATER FLOW AMOUNT

# FIG.9

UTILIZATION
RATE
70%

FUEL
SUPPLY
AMOUNT

UTILIZATION
RATE
50%

BASIC FUEL SUPPLY
TABLE

FUEL TABLE
CORRECTION

OUTPUT CURRENT A

7A

# FIG.10

SURPLUS HEAT
AMOUNT

HEAT AMOUNT BASED ON
BASIC FUEL SUPPLY TABLE

INSUFFICIENT
HEAT AMOUNT

HEAT
AMOUNT

FUEL TABLE
CORRECTION

REQUIRED HEAT
AMOUNT

OUTPUT POWER A      5A
(Th=633°C)      (Tcr=635°C)

# FIG.11

```
         ┌─────────────┐
         │   START     │
         └─────────────┘
                │
                ▼                          S1
  ┌──────────────────────────────────┐
  │ INTEGRATION PROCESSING USING      │
  │ STORED HEAT AMOUNT ESTIMATING     │
  │ TABLE; INTEGRAL VALUE : Ni        │
  └──────────────────────────────────┘
                │
                ▼               S2
            ╱────────────╲         YES
          ╱ INTEGRAL VALUE ╲──────────────────┐
          ╲    Ni=0?       ╱                   │
            ╲────────────╱                     │
                │ NO                           │
                │        S4                    │  S3
  ┌──────────────────────────────────┐   ┌──────────────────┐
  │ DETERMINE AMOUNT OF CHANGE IN     │   │ BASIC TABLE,     │
  │ UTILIZATION RATE IN ACCORDANCE    │   │ NORMAL CONTROL   │
  │ WITH INTEGRAL VALUE Ni.           │   └──────────────────┘
  └──────────────────────────────────┘            │
                │        S5                        │
  ┌──────────────────────────────────┐            │
  │ DETERMINE FIRST MODIFYING         │            │
  │ COEFFICIENT (Fig. 14)             │            │
  └──────────────────────────────────┘            │
                │        S6                        │
  ┌──────────────────────────────────┐            │
  │ DETERMINE SECOND MODIFYING        │            │
  │ COEFFICIENT (Fig. 15)             │            │
  └──────────────────────────────────┘            │
                │        S7                        │
  ┌──────────────────────────────────┐            │
  │ DETERMINE BASIC TABLE             │            │
  │ CORRECTION AMOUNT.                │            │
  │ DETERMINE WATER SUPPLY AMOUNT.    │            │
  │ SECONDARY AIR 10% DOWN.           │            │
  │ FUEL SUPPLY GAIN 10% UP.          │            │
  └──────────────────────────────────┘            │
                │        S8                        │
  ┌──────────────────────────────────┐            │
  │ CORRECT BASIC TABLE               │            │
  │ AND EXECUTE CONTROL               │            │
  └──────────────────────────────────┘            │
                │                                  │
                ▼◄─────────────────────────────────┘
         ┌─────────────┐
         │   RETURN    │
         └─────────────┘
```

# FIG.12

| DETECTED TEMPERATURE Td | TEMP. RANGE | TEMP. TREND | ADD/SUBTRACT VALUE |
|---|---|---|---|
| Td<580°C | LOW TEMP. | — | −20/50000 |
| 580≦Td<620°C | LOW TEMP. | — | −10/50000*(620−Td)/(620−580) |
| 620≦Td<630°C | LOW TEMP. | — | −1/50000 |
| 630≦Td<632°C | — | RISING | 0 |
| | | FALLING | −1/50000 |
| 632≦Td<638°C | — | RISING | 0 |
| | | FALLING | |
| 638≦Td<640°C | — | RISING | +1/50000 |
| | | FALLING | 0 |
| 640≦Td<650°C | APPROPRIATE TEMP. | — | +1/50000 |
| 650°C≦Td | APPROPRIATE TEMP. | — | +(Td−650)*1/50000 |

EP 2 624 351 B1

# FIG.13

EP 2 624 351 B1

# FIG.14

FIRST MODIFYING
COEFFICIENT

0    2    4  4.5

OUTPUT CURRENT (A)

# FIG.15

SECOND MODIFYING
COEFFICIENT

1    1.5

OUTPUT CURRENT (A)

# FIG.16

```
        ┌─────────────┐
        │    START    │
        └──────┬──────┘
               │              S21
               ▼
         ◇─────────────◇
        ╱ CELL DEGRADATION ╲   NO
        ╲        ?         ╱─────────┐
         ◇─────────────◇            │
               │ YES      S22       │
               ▼                    │
  ┌────────────────────────────┐    │
  │ RAISE CHANGE REFERENCE     │    │
  │ TEMPERATURE Tcr 5°C EACH   │    │
  │ DEGRADATION DETERMINATION; │    │
  │ THIRD MODIFYING COEFFICIENT│    │
  │ = 0.8                      │    │
  └──────────────┬─────────────┘    │
                 │◄─────────────────┘
                 ▼
          ┌─────────────┐
          │   RETURN    │
          └─────────────┘
```

# FIG.17(a)

FUEL FLOW

RESIDUAL STORED
HEAT AMOUNT
: SMALL

RESIDUAL STORED
HEAT AMOUNT
: LARGE

REGION OF UTILIZATION
RATE CORRECTION EFFECT

CORRECTION AMOUNT,
CORRECTION TIME SHORT

REGION OF UTILIZATION
RATE CORRECTION EFFECT

RESIDUAL STORED
HEAT AMOUNT
: NONE

TIME T

# FIG.17(b)

------ GENERATED
POWER

——— POWER
DEMAND

—·—·— STORED HEAT
AMOUNT

POWER, STORED HEAT AMOUNT

t0    t1    t2  t3              t4 t5         t6

TIME

# FIG.18

# FIG.19

# FIG.20

- - - - - - GENERATING AIR SUPPLY FLOW AMOUNT A
- - - ·· - ·· - WATER SUPPLY AMOUNT W
- - · - · - · FUEL SUPPLY AMOUNT F
―――――― EXTRACTABLE CURRENT VALUE Iinv

REGION A | REGION B | REGION C | REGION D

P1 P2 P3 P4 P5 P6 P7 P8 P9 P10 P11 P12 P13

TIME

0

EP 2 624 351 B1

58

# FIG.21

START

S31 — CALCULATE FIRST ADD/SUBTRACT VALUE M1 FROM DETECTED TEMPERATURE Td AND Fig. 22

S32 — CALCULATE SECOND ADD/SUBTRACT VALUE M2 FROM DETECTED TEMPERATURE Td AND Tdb

S33 — CALCULATE FIRST INTEGRAL VALUE N1id AND SECOND INTEGRAL VALUE N2id
$$N1id = N1id + M1 + M2$$
$$N2id = N2id + M1 + M2$$

S34 — DETERMINE FUEL UTILIZATION RATE Uf FROM Nlid, Fig. 23, Fig. 24

S35 — DETERMINE AIR UTILIZATION RATE Ua FROM N2id, Fig. 25, Fig. 26

S36 — DETERMINE S/C FROM AIR UTILIZATION RATE Ua, Fig. 27

S37 — DETERMINE FUEL SUPPLY AMOUNT, AIR SUPPLY AMOUNT, WATER SUPPLY AMOUNT FROM Uf, Ua, S/C

S38 — SUPPLY DETERMINED AMOUNT OF FUEL, AIR, WATER

RETURN

# FIG.22

FUEL UTILIZATION RATE
CHANGE TEMPERATURE
Ts(I) + Te

TEMPERATURE T(°C)

Ts(I)

Ts(I) - Te

0.0000  Imin

CURRENT: I

Imax

# FIG.23

MAXIMUM FUEL
UTILIZATION RATE
Ufmax(I)

FUEL UTILIZATION
RATE Uf(I, TI)

MINIMUM FUEL
UTILIZATION RATE
Ufmin(I)

0.0000    1.0000    4.0000

FIRST INTEGRAL VALUE N1id

# FIG.24

MAXIMUM FUEL
UTILIZATION RATE
Ufmax(I)

FUEL UTILIZATION
RATE Uf(I)

MINIMUM FUEL
UTILIZATION RATE
Ufmin(I)

0.0000  Imin

IU   CURRENT : I

Imax

60

## FIG.25

MAXIMUM AIR
UTILIZATION RATE
Uamax(I)

AIR UTILIZATION RATE
Ua(I , TI)

MINIMUM AIR
UTILIZATION RATE
Uamin(I)

0.0000    1.0000         4.0000
SECOND INTEGRAL VALUE N2id

## FIG.26

MAXIMUM AIR
UTILIZATION RATE
Uamax(I)

MINIMUM AIR
UTILIZATION RATE
Uamin(I)

AIR UTILIZATION RATE
Ua

LIMIT MINIMUM AIR
UTILIZATION RATE
ULamin

0.0000  Imin                    Imax
CURRENT: I

## FIG.27

MAX. S/C
Ramax=3.5

S/C
Ra(Ua)

MIN. S/C
Ramin=2.5

Uamin(I)    ULamin         Uamax(I)

AIR UTILIZATION RATE : Ua(I , TI)

## FIG.28

GENERATING VOLTAGE
Vdc(V)

Vs(I)

Vs(I) × 0.9

0.0000  Imin                    Imax
CURRENT: I

# FIG.29

```
           CONTROL RESPONSE
            TO TEMPERATURE
                  │
                  ▼
S41 ─  DETECT TEMPERATURE
       (Td) IN MODULE
                  │
                  ▼
S42 ─  SUDDEN RISE? ──YES──►  S44
         │                    ADOPT SUDDEN
         NO                   TEMPERATURE RISE
         ▼                    CHARACTERISTICS
S43 ─  ADOPT BASIC
       CHARACTERISTICS
                  │
                  ▼
       YES        S45
              STOP OPERATION REGION?
  S46                NO
  · STOP GENERATION   │
  · STOP SYSTEM       ▼
  (EMERGENCY SHUT DOWN)
         │
         ▼
       END        S47 ─ COOLING REGION? ──YES──►  S48
                       NO    · GENERATING Min (AUX. DEVICE
                        │       PORTION 1A ONLY)
                        ▼     · AMOUNT OF INCREASE IN
       YES              S49     GENERATING AIR SUPPLY AMOUNT
              CURRENT REDUCTION  · AMOUNT OF INCREASE IN WATER
                  REGION?          SUPPLY AMOUNT (S/C2.5⇒4)
  S50              NO                        │
  · LIMIT TO GENERATING│                     ▼
    UPPER LIMIT 4A     ▼                   RETURN
    (FORCED REDUCTION)
  · PROHIBIT CHANGE TO  S51
    GENERATING AMOUNT
    INCREASE        MAINTAIN CURRENT ──YES──►  S52
                      REGION?             PROHIBIT CHANGE
                        NO                TO GENERATING
                  S53 ─ NORMAL            AMOUNT INCREASE
                        CONTROL
                          │
                          ▼
                        RETURN
```

# FIG.30

# FIG.31

# FIG.32

ELECTRICAL GENERATION
AMOUNT

MODULE INTERNAL
TEMPERATURE

# FIG.33

START

S61 — SENSE GENERATING
CHAMBER TEMPERATURE
SENSOR
(MIDPOINT, CORNER)

S62 — ≥ APPROPRIATE
TEMP? — NO

YES

S63 — CALCULATE ADD/SUBTRACT
VALUE ON HIGH TEMP. SIDE OF
GENERATING CHAMBER
TEMPERATURE SENSOR
(MIDPOINT, CORNER)

S64 — CALCULATE ADD/SUBTRACT
VALUE ON LOW TEMP. SIDE OF
GENERATING CHAMBER
TEMPERATURE SENSOR
(MIDPOINT, CORNER)

RETURN

# FIG.34

START

S71 — READ IN REFORMER TEMP. SENSOR (EXIT, ENTRANCE)

S72 — LOW ← Tr0 < REFORMER TEMP? < Tr1 → HIGH

MEDIUM

S73 — UTILIZATION RATE: DOWN ADD/SUBTRACT VALUE:10% DOWN

S74 — NO CORRECTION TO ADD/SUBTRACT VALUE

S75 — UTILIZATION RATE: UP ADD/SUBTRACT VALUE:10% UP

RETURN

# FIG.35

START

S81 — READ IN EXHAUST TEMP. SENSOR (EXIT, ENTRANCE)

S82 — LOW ← Tem0 < EXHAUST TEMP? < Tem1 → HIGH

MEDIUM

S83 — UTILIZATION RATE: DOWN ADD/SUBTRACT VALUE:10% DOWN

S84 — NO CORRECTION TO ADD/SUBTRACT VALUE

S85 — UTILIZATION RATE: UP ADD/SUBTRACT VALUE:10% UP

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010092836 A
- JP 2010205670 A
- JP 2006302881 A